# EUROPEAN PATENT APPLICATION

(11) **EP 3 057 331 A1**
(43) Date of publication of application: **17.08.2016**
(21) Application number: 14852409.3
(22) Date of filing: 10.10.2014
(51) Int. Cl.: H04N 21/258, G06F 13/00, G06Q 30/06, G10K 15/02, H04N 21/84

(54) **CONTENT DISTRIBUTION SYSTEM**

(30) Priority: 12.10.2013 JP 2013214281; 18.12.2013 JP 2013261377; 18.02.2014 JP 2014028587; 17.06.2014 JP 2014124198; 25.06.2014 JP 2014130711; 06.07.2014 JP 2014139231; 16.07.2014 JP 2014146343; 28.08.2014 JP 2014173786; 12.09.2014 JP 2014186199; 17.09.2014 JP 2014189449; 08.10.2014 JP 2014207639
(71) Applicant: High Speed Boyz Inc., Tokyo 151-0064 (JP)
(72) Inventor: NISHIMOTO, Hitoshi, Tokyo 151-0064 (JP)
(74) Representative: Epping - Hermann - Fischer
(86) International application number: PCT/JP2014/077272
(87) International publication number: WO 2015/053406

(57) **Abstract**

A content delivery system and content delivery method allow data or files acquired by delivery to be replayed multiple times on each terminal without redelivery and can prohibit replay by people without permission. Included are the steps of determining, when predetermined information is input from the terminal 14A, whether the information is identical to predetermined member information, and of receiving a request, via a predetermined application 20A of the terminal 14A, and delivering content by streaming to the terminal 14A when the information input from the terminal 14A is identical to the member information.

## Description

### TECHNICAL FIELD

This disclosure relates to a content delivery system and a method of delivering content.

### BACKGROUND

With the spread of the Internet, content such as music is now being delivered. One way of delivering content or the like is as follows.

All of the data of content may be downloaded onto an individual terminal and replayed with a dedicated application. By downloading all of the data of content onto an individual terminal, the content can be replayed immediately at any time.

### CITATION LIST

### Patent Literature

PTL 1: JP 2009-93212 A

### SUMMARY

### (Technical Problem)

This method is problematic, however, in that all of the data of content needs to be downloaded onto an individual terminal, which takes considerable time when the amount of data is large.

On the other hand, people without permission need to be prevented from downloading content.

It would therefore be helpful to provide a content delivery system and a method of delivering content that, without downloading onto each terminal, easily allow data or files acquired by delivery to be replayed on terminals of people having permission and that prohibit replay by people without permission.

### (Solution to Problem)

A content delivery system according to a first aspect of this disclosure is for delivering predetermined content from a content delivery environment to a terminal, such that the content delivery environment comprises a memory storing predetermined content and a controller controlling the content delivery environment; the memory comprises a first memory area storing member information for which charge processing is complete; a second memory area storing the content; and a third memory area storing an application allowing playback of the content on the terminal; and the controller comprises an identicalness determiner configured to determine, when predetermined information is input from the terminal, whether the information is identical to the member information; and a content deliverer configured to receive a request via the application of the terminal and deliver the content to the terminal when the identicalness determiner determines the information to be identical.

According to a second aspect of this disclosure, in the first aspect, the controller or the application permits use, via the application, of a cache of the content that was delivered to and saved on the terminal when the information input from the terminal is determined to be identical to the member information and prohibits use, via the application, of the cache when the information input from the terminal is determined not to be identical to the member information.

According to a third aspect of this disclosure, in the first or second aspect, the controller further comprises an elapsed time determiner configured to determine elapsed time of the content stored in the second memory area; a time information provider configured to provide the content with predetermined information suggesting a time in a case that the elapsed time determiner determines that the content was stored in the second memory area within a predetermined time; and a time information eraser configured to erase the predetermined information when the elapsed time determiner determines that a predetermined time has elapsed since the content to which the predetermined information was provided was stored in the second memory area.

According to a fourth aspect of this disclosure, in any one of the first through third aspects, the controller further comprises a content evaluator configured to receive a request via the application of the terminal and evaluate the content; and an evaluation information provider configured to provide predetermined information suggesting an evaluation that reflects a result of evaluation by the content evaluator.

According to a fifth aspect of this disclosure, in any one of the first through fourth aspects, the memory further comprises a fourth memory area storing information related to merchandise or service for sale; the controller further comprises a merchandise and other information output interface configured to output information related to the merchandise or service to the terminal; and the merchandise and other information output interface outputs the information related to the merchandise or service to the terminal upon receiving, via the application of the terminal, an instruction to output the information related to the merchandise or service.

According to a sixth aspect of this disclosure, in the fifth aspect, the controller further comprises a price calculation output interface configured to calculate price information related to the merchandise or service; and upon receiving, via the application of the terminal, a purchase instruction for a certain merchandise or service that is to be purchased from among the merchandise or service, the price calculation output interface calculates price information related to the merchandise or service for which the purchase instruction was received and outputs a result of calculation to the terminal.

According to a seventh aspect of this disclosure, in any one of the first through sixth aspects, the memory further comprises a fifth memory area storing a seat designation program for designating a seat in a concert hall; the controller further comprises a seat designation processor configured to designate a position of a seat in the concert hall based on the seat designation program; and upon receiving an instruction to purchase a seat via the application of the terminal, the seat designation processor designates a position of a seat in the concert hall based on the seat designation program.

According to an eighth aspect of this disclosure, in any one of the first through seventh aspects, the memory further comprises a sixth memory area storing a content evaluation information purchase and selling program for executing processing to purchase and sell content evaluation information related to the content; the controller further comprises a content evaluation information purchase and sale processor for executing the processing to purchase and sell the content evaluation information based on the content evaluation information purchase and selling program; and upon receiving an instruction to purchase the content evaluation information via the application of the terminal, the content evaluation information purchase and sale processor executes the processing to purchase and sell the content evaluation information based on the content evaluation information purchase and selling program.

According to a ninth aspect of this disclosure, in any one of the first through eighth aspects, the terminal outputs a count signal of the number of times vibration occurs in the terminal using an acceleration sensor housed in the terminal; the memory further comprises a seventh memory area storing a calorie amount conversion program for converting the count signal to a predetermined calorie amount; and the controller further comprises a calorie converter configured to convert from the count signal to the calorie amount based on the calorie amount conversion program; a ranking information generator configured to compare a plurality of the calorie amounts and generate ranking information that ranks the calorie amounts; and a ranking information output interface configured to output the ranking information to the terminal.

According to a tenth aspect of this disclosure, any one of the first through ninth aspects further comprises a wireless earphone unit capable of replaying the content transmitted wirelessly from the terminal; such that the terminal comprises a content transmitter configured to transmit content, delivered from the content delivery environment, to the wireless earphone unit wirelessly; the wireless earphone unit comprises a pair of earphones and a connection unit to which the earphones connect; and the wireless earphone unit has a cylindrical shape overall when the earphones are connected to respective ends of the connection unit.

According to an eleventh aspect of this disclosure, in the tenth aspect, each earphone comprises an earpiece; and the connection unit comprises a storage section configured to store the earpiece when the earphone is connected.

According to a twelfth aspect of this disclosure, in the tenth or eleventh aspect, the connection unit is a charging unit capable of charging the earphones.

According to a thirteenth aspect of this disclosure, in the twelfth aspect, the earphones include a power supply, and the power supply turns OFF upon being connected to the charging unit and entering a conduction state and turns ON upon being disconnected from the charging unit and entering a non-conduction state.

According to a fourteenth aspect of this disclosure, in the twelfth or thirteenth aspect, the earphones comprise a rechargeable battery; and the charging unit comprises a charging system that starts to charge the rechargeable battery upon the rechargeable battery being connected to the charging unit and entering a conduction state.

According to a fifteenth aspect of this disclosure, in any one of the tenth through fourteenth aspects, the earphones comprise a content receiver configured to receive content transmitted by the content transmitter; an audio communication interface configured to allow a telephone call to be held with a predetermined telephone apparatus; and a switch configured to switch between an output mode to output content received by the content receiver and a telephone mode via a telephone call using the audio communication interface.

According to a sixteenth aspect of this disclosure, any one of the first through ninth aspects further comprises a communication device that is configured to connect wirelessly to the terminal and is wearable on a body; such that the communication device comprises a sensor configured to detect energy generated by the body; and an information communication interface configured to transmit a signal indicating information detected by the sensor; and the controller comprises an information analyzer configured to analyze the information detected by the sensor based on the signal from the sensor; and a privilege granter configured to grant a predetermined privilege based on a result of analysis by the information analyzer.

According to a seventeenth aspect of this disclosure, in the sixteenth aspect, the memory further comprises a tenth memory area storing a privilege table prescribing a correspondence relationship between analysis by the information analyzer and a type of privilege in the privilege granter; and the privilege granter determines a type of privilege based on the privileged table.

According to an eighteenth aspect of this disclosure, in the sixteenth or seventeenth aspect, the communication device is a band wearable on a body.

According to a nineteenth aspect of this disclosure, in any one of the first through ninth aspects, the terminal comprises a music selection request information input interface configured to input request information related to selection of a piece of music; and the controller comprises a music selection content information determiner configured to determine music selection content information based on input information from the music selection request information input interface; and a music selection content information output interface configured to output the music selection content information determined by the music selection content information determiner to the terminal.

According to a twentieth aspect of this disclosure, in the nineteenth aspect, the memory further comprises a twelfth memory area storing a music selection content determination table prescribing a correspondence relationship between a piece of music and request information related to selection of a piece of music; and the music selection content information determiner determines music selection content information using the music selection content determination table.

According to a twenty first aspect of this disclosure, in the nineteenth or twentieth aspect, the music selection content information determiner includes a predetermined advertisement in the music selection content information.

According to a twenty second aspect of this disclosure, in the sixth aspect, the memory further comprises a fourteenth memory area storing an electronic money table indicating a correspondence relationship between a price and a quantity of electronic money; and the controller further comprises an electronic money converter configured to execute processing to convert price information of the merchandise or service into a quantity of electronic money based on the electronic money table stored in the fourteenth memory area and to adjust a current quantity of electronic money.

According to a twenty third aspect of this disclosure, in the eighth aspect, the memory further comprises a fourteenth memory area storing an electronic money table indicating a correspondence relationship between a price and a quantity of electronic money; and the controller further comprises an electronic money converter configured to execute processing to convert a purchase price of the content evaluation information into a quantity of electronic money based on the electronic money table stored in the fourteenth memory area and to adjust a current quantity of electronic money.

According to a twenty fourth aspect of this disclosure, in the ninth aspect, the controller further comprises a reward granter configured to grant a predetermined reward to a top-ranked person based on ranking information generated by the ranking information generator.

According to a twenty fifth aspect of this disclosure, in the twenty fourth aspect, as the reward, the reward granter displays an advertising space configured to accept input of predetermined advertising information.

According to a twenty sixth aspect of this disclosure, in any one of the first through twenty fifth aspects, the controller further comprises a delivery controller configured to choose a format, upon receiving a delivery format designation signal designating a delivery format of the content from the terminal, between streaming delivery and download delivery based on the delivery format designation signal and to deliver the content to the terminal in the chosen format.

According to a twenty seventh aspect of this disclosure, in any one of the first through ninth aspects, the terminal comprises an exercise intensity detection sensor configured to detect a physical exercise intensity; and a content output controller configured to control a tempo or a pitch of the content and output the content; the exercise intensity detection sensor generates an exercise intensity detection signal indicating the exercise intensity; and the content output controller controls the tempo or the pitch of the content based on the exercise intensity detection signal.

According to a twenty eighth aspect of this disclosure, any one of the first through ninth aspects further comprises a communication device that is configured to connect wirelessly to the terminal and is wearable on a body; such that the communication device comprises an exercise intensity detection sensor configured to detect a physical exercise intensity; and the content output controller controls the tempo or the pitch of the content based on the exercise intensity detection signal.

A content delivery method according to a twenty ninth aspect of this disclosure is for delivering predetermined content from a content delivery environment to a terminal, comprising: determining, when predetermined information is input from the terminal, whether the information is identical to predetermined member information; and receiving a request via a predetermined application of the terminal and delivering the content to the terminal when the information input from the terminal is identical to the member information.

According to a thirtieth aspect of this disclosure, the twenty ninth aspect further comprises permitting use, via the application, of a cache of the content that was delivered to and saved on the terminal when the information input from the terminal is identical to the member information; and prohibiting use, via the application, of the cache when the information input from the terminal is not identical to the member information.

According to a thirty first aspect of this disclosure, the twenty ninth or thirtieth aspect further comprises determining elapsed time since the content was saved; providing the content with predetermined information suggesting a time in a case that the content was saved within a predetermined time; and erasing the predetermined information when a predetermined time has elapsed since the content to which the predetermined information was provided was saved.

According to a thirty second aspect of this disclosure, any one of the twenty ninth through thirty first aspects further comprises receiving input from the terminal and evaluating the content; and providing the content with predetermined information suggesting an evaluation that reflects an evaluation result of the content.

According to a thirty third aspect of this disclosure, any one of the twenty ninth through thirty second aspects further comprises outputting information related to merchandise or service for sale to the terminal upon receiving from the terminal, via the application, an instruction to output the information related to the merchandise or service.

According to a thirty fourth aspect of this disclosure, the thirty third aspect further comprises calculating, upon receiving from the terminal, via the application, a purchase instruction for a certain merchandise or service that is to be purchased from among the merchandise or service, price information related to the merchandise or service for which the purchase instruction was received and outputting a result of calculation to the terminal.

According to a thirty fifth aspect of this disclosure, any one of the twenty ninth through thirty fourth aspects further comprises designating, upon receiving an instruction to purchase a seat in a concert hall via the application of the terminal, a position of a seat in the concert hall based on a seat designation program for designating a seat in the concert hall.

According to a thirty sixth aspect of this disclosure, any one of the twenty ninth through thirty fifth aspects further comprises executing, upon receiving an instruction to purchase content evaluation information indicating an evaluation of the content via the application of the terminal, processing to purchase and sell the content evaluation information based on a content evaluation information purchase and selling program for executing processing to purchase and sell the content evaluation information.

According to a thirty seventh aspect of this disclosure, any one of the twenty ninth through thirty sixth aspects further comprises outputting a count signal of the number of times vibration occurs in the terminal using an acceleration sensor housed in the terminal; converting the count signal to a calorie amount based on a calorie amount conversion program; comparing a plurality of the calorie amounts and generating ranking information that ranks the calorie amounts; and outputting the ranking information to the terminal.

According to a thirty eighth aspect of this disclosure, any one of the twenty ninth through thirty seventh aspects further comprises using a communication device to detect energy generated by a body, such that the communication device is configured to connect wirelessly to the terminal and is wearable on the body; transmitting a signal indicating the detected information from the communication device; analyzing detection information based on the signal in the content delivery environment; and granting a predetermined privilege based on a result of analysis of the detection information in the content delivery environment.

According to a thirty ninth aspect of this disclosure, in the thirty eighth aspect, in the step of granting the privilege, a type of the privilege is determined using a privilege table prescribing a correspondence relationship between analysis of the detection information and the type of the privilege.

According to a fortieth aspect of this disclosure, in the thirty eighth or thirty ninth aspect, a band wearable on a body is used as the communication device.

According to a forty first aspect of this disclosure, any one of the twenty ninth through thirty seventh aspects further comprises inputting request information related to selection of a piece of music from the terminal to the content delivery environment; determining music selection content information based on input of the request information; and outputting the music selection content information to the terminal.

According to a forty second aspect of this disclosure, in the forty first aspect, in the step of determining the music selection content information based on input of the request information, the music selection content information is determined based on a music selection content determination table prescribing a correspondence relationship between a piece of music and request information related to selection of a piece of music.

According to a forty third aspect of this disclosure, in the forty first or forty second aspect, a predetermined advertisement is included in the music selection content information.

According to a forty fourth aspect of this disclosure, the thirty fourth aspect further comprises executing processing to convert price information of the merchandise or service into a quantity of electronic money based on an electronic money table indicating a correspondence relationship between a price and a quantity of electronic money and to adjust a current quantity of electronic money.

According to a forty fifth aspect of this disclosure, the thirty sixth aspect further comprises the controller executing processing to convert a purchase price of the content evaluation information into a quantity of electronic money based on an electronic money table indicating a correspondence relationship between a price and a quantity of electronic money and to adjust a current quantity of electronic money.

According to a forty sixth aspect of this disclosure, the thirty seventh aspect further comprises the controller granting a predetermined reward to a top-ranked person based on the ranking information.

According to a forty seventh aspect of this disclosure, in the forty sixth aspect, in the step of granting the predetermined reward, an advertising space configured to accept input of predetermined advertising information is made displayable.

According to a forty eighth aspect of this disclosure, any one of the twenty ninth through forty seventh aspects further comprises choosing a format, upon receiving a delivery format designation signal designating a delivery format of the content from the terminal, between streaming delivery and download delivery based on the delivery format designation signal and delivering the content to the terminal in the chosen format.

### (Advantageous Effect)

According to this disclosure, data or files acquired by delivery can, without redelivery, be replayed multiple times on each terminal, and replay by people without permission can be prohibited.

### BRIEF DESCRIPTION OF THE DRAWINGS

In the accompanying drawings:
FIG. 1 illustrates the overall structure of the content delivery system according to one of the disclosed embodiments;
FIG. 2 illustrates the main communication between constituent elements of the content delivery system according to one of the disclosed embodiments;
FIG. 3 is a block diagram of a charge manager that forms part of the content delivery system according to one of the disclosed embodiments;
FIG. 4 is a block diagram of a content delivery environment that forms part of the content delivery system according to one of the disclosed embodiments;
FIG. 5 is a flowchart illustrating an example of processing by the charge manager that forms part of the content delivery system according to one of the disclosed embodiments;
FIG. 6 is a flowchart illustrating an example of charge processing by the charge manager that forms part of the content delivery system according to one of the disclosed embodiments;
FIG. 7 is a flowchart illustrating an example of processing to transmit member information by the charge manager that forms part of the content delivery system according to one of the disclosed embodiments;
FIG. 8 is a flowchart illustrating an example of processing in the content delivery environment that forms part of the content delivery system according to one of the disclosed embodiments;
FIG. 9 is a flowchart illustrating an example of processing to register member information in the content delivery environment that forms part of the content delivery system according to one of the disclosed embodiments;
FIG. 10 is a flowchart illustrating an example of content delivery processing in the content delivery environment that forms part of the content delivery system according to one of the disclosed embodiments;
FIG. 11 is a flowchart illustrating an example of cache management processing in the content delivery environment that forms part of the content delivery system according to one of the disclosed embodiments;
FIG. 12 is a flowchart illustrating an example of processing to register content time information in the content delivery environment that forms part of the content delivery system according to one of the disclosed embodiments;
FIG. 13 is a flowchart illustrating an example of processing to register content evaluation information in the content delivery environment that forms part of the content delivery system according to one of the disclosed embodiments;
FIG. 14 illustrates the main transactions between constituent elements of Example 1 of the content delivery system according to one of the disclosed embodiments;
FIG. 15 is a block diagram of a content delivery environment that forms part of Example 1 of the content delivery system according to one of the disclosed embodiments;
FIG. 16 is a flowchart illustrating an example of processing to register a sale in Example 1 of the content delivery system according to one of the disclosed embodiments;
FIG. 17 is a flowchart illustrating an example of processing to register merchandise and the like in the content delivery environment of Example 1 of the content delivery system according to one of the disclosed embodiments;
FIG. 18 is a flowchart illustrating an example of processing to display merchandise and the like in the content delivery environment of Example 1 of the content delivery system according to one of the disclosed embodiments;
FIG. 19 illustrates an example of a form of display that is displayed on an application of a user terminal by processing to display merchandise and the like in the content delivery environment of Example 1 of the content delivery system according to one of the disclosed embodiments;
FIG. 20 is a flowchart illustrating an example of processing to sell merchandise and the like in the content delivery environment of Example 1 of the content delivery system according to one of the disclosed embodiments;
FIG. 21 illustrates an example of a form of display that is displayed on an application of a user terminal by processing to sell merchandise and the like in the content delivery environment of Example 1 of the content delivery system according to one of the disclosed embodiments;
FIG. 22 is a block diagram of a content delivery environment that forms part of Example 2 of the content delivery system according to one of the disclosed embodiments;
FIG. 23 is a plan view of a concert hall provided with seats that are designated in Example 2 of the content delivery system according to one of the disclosed embodiments;
FIG. 24 illustrates the main transactions between constituent elements of Example 3 of the content delivery system according to one of the disclosed embodiments;
FIG. 25 is a block diagram of a content delivery environment that forms part of Example 3 of the content delivery system according to one of the disclosed embodiments;
FIG. 26 is a flowchart illustrating an example of processing to purchase and sell content evaluation information in the content delivery environment of Example 3 of the content delivery system according to one of the disclosed embodiments;
FIG. 27 is a flowchart illustrating an example of processing to purchase content evaluation information in the content delivery environment of Example 3 of the content delivery system according to one of the disclosed embodiments;
FIG. 28 illustrates an example of a purchase and sale information display screen, related to content evaluation information, that is displayed in an application on a terminal;
FIG. 29 illustrates an example of an evaluation information display that is displayed on a purchase and sale information display screen;
FIG. 30 illustrates an example of a purchase information input interface that is displayed on a purchase and sale information display screen;
FIG. 31 is a flowchart illustrating an example of processing to update content evaluation information in the content delivery environment of Example 3 of the content delivery system according to one of the disclosed embodiments;
FIG. 32 illustrates an example of an evaluation information display before purchase of content evaluation information and an evaluation information display after purchase;
FIG. 33 illustrates an example of a content ranking display that is displayed on an evaluation information purchase screen in an application on the terminal;
FIG. 34 is a flowchart illustrating an example of processing for support fund feedback in the content delivery environment of Example 3 of the content delivery system according to one of the disclosed embodiments;
FIG. 35 is a block diagram of a terminal that can communicate with the content delivery system according to one of the disclosed embodiments;
FIG. 36 is a block diagram of a content delivery environment that forms part of Example 4 of the content delivery system according to one of the disclosed embodiments;
FIG. 37 is a flowchart illustrating an example of processing to calculate ranking of calorie amounts in the content delivery environment of Example 4 of the content delivery system according to one of the disclosed embodiments;
FIG. 38 illustrates an example of a shake ranking display screen that can be displayed on each terminal;
FIG. 39 is a block diagram of an improved example of a content delivery environment that forms part of Example 4 of the content delivery system according to one of the disclosed embodiments;
FIG. 40 is a flowchart illustrating an example of processing to grant a reward in the content delivery environment of Example 4 of the content delivery system according to one of the disclosed embodiments;
FIG. 41 illustrates a seat designation program stored in the fifth memory area of the memory in the content delivery environment;
FIG. 42 illustrates a content evaluation information purchase and selling program stored in the sixth memory area of the memory in the content delivery environment;
FIG. 43 illustrates a calorie amount conversion program stored in the seventh memory area of the memory in the content delivery environment;
FIG. 44 illustrates a reward detail determination program stored in the eighth memory area of the memory in the content delivery environment;
FIG. 45 is a flowchart of Example 5 of the content delivery system according to one of the disclosed embodiments;
FIG. 46 is a block diagram of a terminal that can communicate with the content delivery environment in Example 5 of the content delivery system according to one of the disclosed embodiments;
FIG. 47 is a perspective view of a wireless earphone unit used in Example 5 of the content delivery system according to one of the disclosed embodiments;
FIG. 48 is an exploded perspective view from one direction of the wireless earphone unit used in Example 5 of the content delivery system according to one of the disclosed embodiments;
FIG. 49 is an exploded perspective view from another direction of the wireless earphone unit used in Example 5 of the content delivery system according to one of the disclosed embodiments;
FIG. 50 is a block diagram of a right-ear earphone forming part of the wireless earphone unit;
FIG. 51 is a block diagram of a memory unit in the right-ear earphone;
FIG. 52 is a block diagram of a power supply in the right-ear earphone;
FIG. 53 is a block diagram of a left-ear earphone forming part of the wireless earphone unit;
FIG. 54 is a block diagram of a memory unit in the left-ear earphone;
FIG. 55 is a block diagram of a power supply in the left-ear earphone;
FIG. 56 is a block diagram of a charging unit central portion in a charging unit forming part of the wireless earphone unit;
FIG. 57 is a block diagram of the charging system of the charging unit;
FIG. 58 is a block diagram of Modification 1 to a right-ear earphone forming part of the wireless earphone unit;
FIG. 59 is a block diagram of Modification 1 to a left-ear earphone forming part of the wireless earphone unit;
FIG. 60 is a block diagram of an example of a sensor unit in the right-ear earphone;
FIG. 61 is a block diagram of an example of a sensor unit in the left-ear earphone;
FIG. 62 is a block diagram of the terminal used in Modification 1 to Example 5;
FIG. 63 conceptually illustrates Example 6 of the content delivery system according to one of the disclosed embodiments;
FIG. 64 is a block diagram of a content delivery environment that forms part of Example 6 of the content delivery system according to one of the disclosed embodiments;
FIG. 65 is a block diagram of a terminal that can communicate with the content delivery environment in Example 6 of the content delivery system according to one of the disclosed embodiments;
FIG. 66 is a block diagram of a communication device that can communicate with the terminal in Example 6 of the content delivery system according to one of the disclosed embodiments;
FIG. 67 is a block diagram illustrating the structure of a sensor unit provided in the communication device;
FIG. 68 is a flowchart illustrating processing to grant a privilege in Example 6 of the content delivery system according to one of the disclosed embodiments;
FIG. 69 is a perspective view of a band that is Illustrative Case 1 of a communication device in Example 6;
FIG. 70 illustrates Usage Example 1 of the band that is Illustrative Case 1 of the communication device in Example 6;
FIG. 71 illustrates Usage Example 2 of the band that is Illustrative Case 1 of the communication device in Example 6;
FIG. 72 conceptually illustrates a state of wireless connection between the terminal and the band;
FIG. 73 conceptually illustrates Example 7 of the content delivery system according to one of the disclosed embodiments;
FIG. 74 is a block diagram of a content delivery environment that forms part of Example 7 of the content delivery system according to one of the disclosed embodiments;
FIG. 75 illustrates an example of grouping pieces of music along coordinate axes in which the vertical axis represents the mood of a piece of music, and the horizontal axis represents the tempo of a piece of music;
FIG. 76 is a block diagram of a terminal that can communicate with the content delivery environment in Example 7 of the content delivery system according to one of the disclosed embodiments;
FIG. 77 is a block diagram of a communication device that can communicate with the terminal in Example 7 of the content delivery system according to one of the disclosed embodiments;
FIG. 78 is a flowchart illustrating processing to determine music selection content information in Example 7 of the content delivery system according to one of the disclosed embodiments;
FIG. 79 illustrates music selection content information containing only pieces of music in Example 7 of the content delivery system according to one of the disclosed embodiments;
FIG. 80 illustrates music selection content information that includes advertisements and pieces of music in Example 7 of the content delivery system according to one of the disclosed embodiments;
FIG. 81 is a perspective view of a device that is Illustrative Case 1 of the communication device or terminal in Example 7;
FIG. 82 is a perspective view of a device that is Illustrative Case 2 of the communication device or terminal in Example 7;
FIG. 83 illustrates Usage Example 1 of a device that is Illustrative Case 1 of the communication device or terminal in Example 7;
FIG. 84 illustrates Usage Example 2 of a device that is Illustrative Case 1 of the communication device or terminal in Example 7;
FIG. 85 conceptually illustrates a state of wireless connection between the terminal and the device;
FIG. 86 illustrates an example of displaying a quantity of electronic money;
FIG. 87 illustrates a content delivery environment when using electronic money;
FIG. 88 is a flowchart illustrating processing to pay a fee using electronic money;
FIG. 89 is a block diagram of a content delivery environment that forms part of Example 8 of the content delivery system according to one of the disclosed embodiments;
FIG. 90 illustrates the structure of a reward detail determination program stored in the memory of Example 8 of the content delivery system according to one of the disclosed embodiments;
FIG. 91 illustrates a state in which an advertising space is provided on the user's management screen;
FIG. 92 illustrates a state in which an advertising space is provided on the artist's management screen;
FIG. 93 illustrates an example of an advertising space in which a user's advertisement is displayed;
FIG. 94 illustrates an example of an advertising space in which an artist's advertisement is displayed;
FIG. 95 is a flowchart illustrating processing to collect and distribute an advertising fee in Example 8 of the content delivery system according to one of the disclosed embodiments;
FIG. 96 is a block diagram illustrating another structure of a content delivery environment that forms part of the content delivery system according to one of the disclosed embodiments;
FIG. 97 illustrates a form of display on a liquid crystal display of the terminal;
FIG. 98 is a flowchart illustrating an example of processing to control content delivery;
FIG. 99 is a conceptual diagram illustrating processing to control content delivery;
FIG. 100 illustrates the structure of an example of a terminal in Example 9;
FIG. 101 illustrates the structure of an example of a communication device in Example 9;
FIG. 102 illustrates the structure of an example of a band in Example 9;
FIG. 103 illustrates the structure of an example of a wireless earphone unit in Example 9;
FIG. 104 illustrates the structure of an example of a terminal in Example 9;
FIG. 105 illustrates the structure of an example of a music output controller in Example 9;
FIG. 106 illustrates the structure of an example of a music tempo memory in Example 9;
FIG. 107 illustrates the structure of an example of processing for music output control in Example 9;
FIG. 108 illustrates a music program prescribing the order of pieces of music;
FIG. 109 illustrates an example of music programs by course;
FIG. 110 is a conceptual diagram when detecting exercise intensity and then controlling the tempo of music on the terminal side; and
FIG. 111 is a conceptual diagram when detecting exercise intensity on the communication device side and then controlling the tempo of music on the terminal side.

### DETAILED DESCRIPTION

A content delivery system and method of delivering content according to one of the disclosed embodiments are now described with reference to the drawings. In these embodiments, "content" is not restricted and may, in addition to music, be any work that is deliverable over the Internet, such as letters, pictures, photographs, text, video, novels, games, or the like.

### [Overall Structure of Content Delivery System]

First, the overall structure of the content delivery system is described. Cloud computing technology may also be used in this system. While it is theoretically possible to implement a structure in which a server is unnecessary, an example of a structure including a server is described below as one embodiment. The server is not, however, an indispensable element in this disclosure.

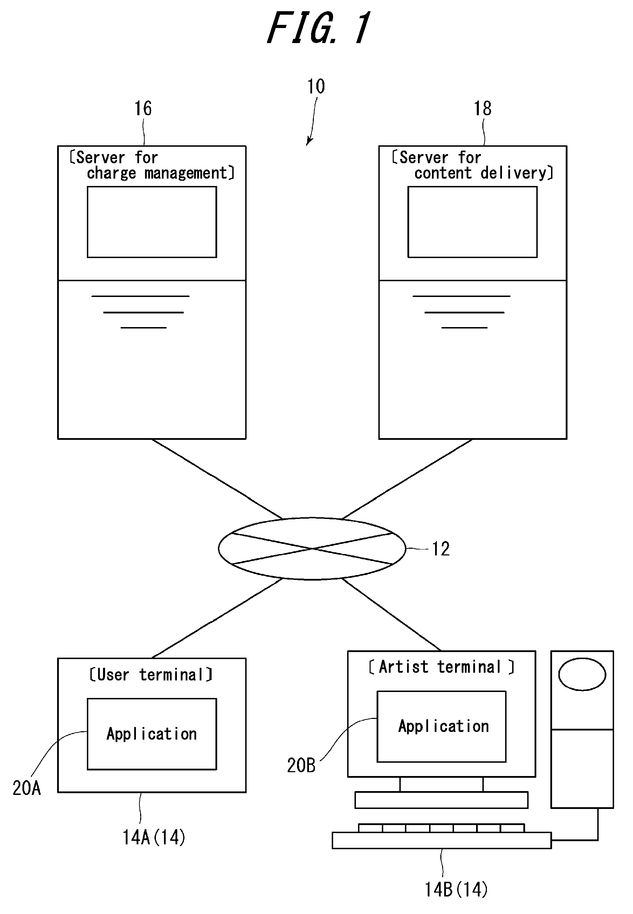

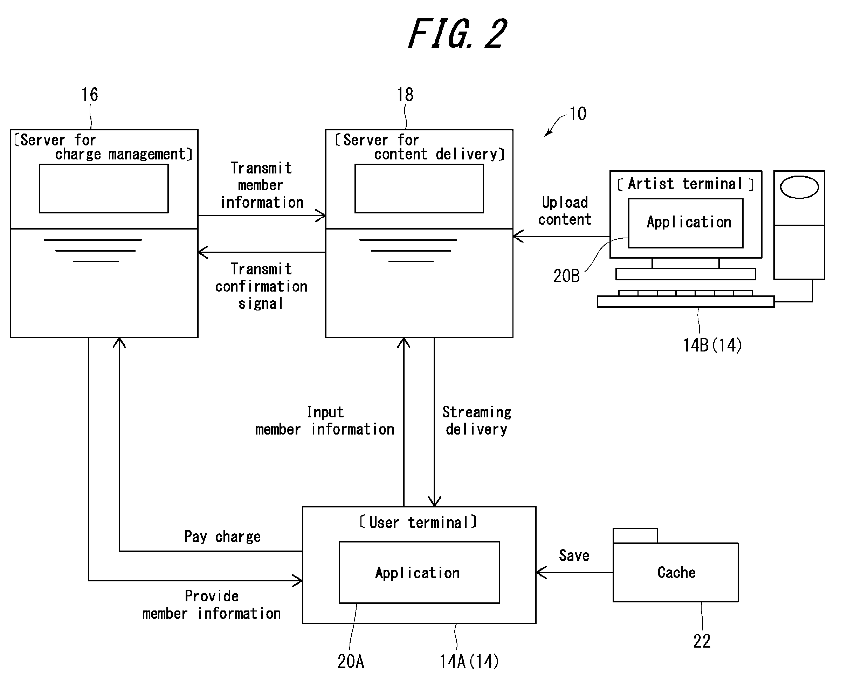

As illustrated in FIGS. 1 and 2, a content delivery system 10 is a system that can deliver content in response to a request from a terminal group 14. The terminal group 14, a server for charge management 16, and a server for content delivery 18 are interconnected by a communication line 12 in the content delivery system 10.

The server for charge management 16 is one embodiment of the disclosed "charge manager". The server for content delivery 18 is one embodiment of the disclosed "content delivery environment". Regardless of whether a server is included, the content delivery environment refers to a system or network environment, including cloud computing, that can widely deliver content. The "content delivery environment" of this disclosure may also be called a content deliverer.

The terminal group 14 for example includes, but is not limited to, a user terminal 14A (also referred to below as "terminal 14A") and artist terminal 14B (also referred to below as "terminal 14B"). As long as the terminals 14A and 14B can replay content, the terminals 14A and 14B may be an information communication terminal, such as a mobile terminal, as well as a Personal Computer (PC).

The terminals 14A and 14B preferably have a predetermined browser function (for example, a WEB browser).

Dedicated applications 20A and 20B are downloaded and installed in the memory of each of the terminals 14A and 14B. The applications 20A and 20B are software to allow communication with the server for content delivery 18 and/or the server for charge management 16. Content can be replayed with the applications 20A and 20B.

For the sake of convenience, the terminal 14A is described below as an example of a terminal, and the application 20A as an example of an application. Similar effects are also obtained, however, for the terminal 14B and the application 20B.

In FIGS. 1 and 2, the server for charge management 16 and the server for content delivery 18 are configured as separate servers, yet one server may be provided with both functions.

While the server for charge management 16 and the server for content delivery 18 are each illustrated as being one server, a configuration in which these servers are each formed by a plurality of servers instead of one server may be adopted.

Examples of the communication line 12 include the Internet.

### [Constituent Elements of Content Delivery System]

Next, the constituent elements of the content delivery system are described.

### (Server for Charge Management)

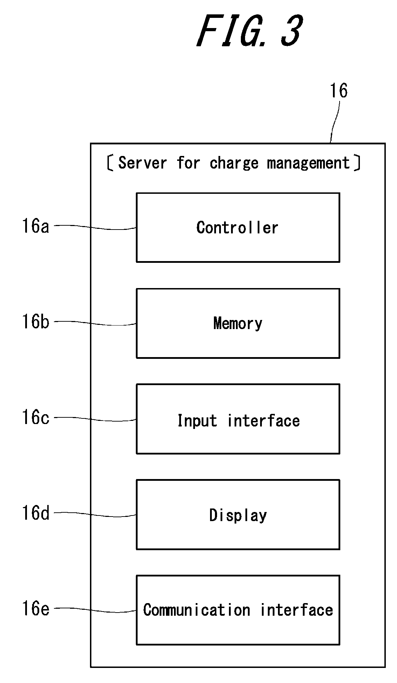

As illustrated in FIG. 3, the server for charge management 16 includes a controller 16a, memory 16b, input interface 16c, display 16d, and communication interface 16e.

The controller 16a includes an information and arithmetic processing device (CPU) that calculates information and executes processes. The controller 16a controls the entire server for charge management 16. By reading and executing various programs stored in the memory 16b, the controller 16a works together with the above-mentioned constituent elements to execute all of the processing required for charge management.

The controller 16a determines the payment status of a charge for a user or the like. Means for charging a user or the like corresponds to payment using the Internet, such as Internet banking, as well as to payment at a financial institution, a convenience store, or the like. The controller 16a determines the payment status of a charge based on input from the input interface 16c or receipt of a payment completion signal from another communication device.

The controller 16a saves member information as necessary in the memory 16b. Member information for example includes personal information such as the user's address, name, telephone number, ID, password, charge payment date, date of occurrence of information fee, and the like. Nonmember information is also included in the member information. Nonmember information for example includes personal information such as a past user's address, name, telephone number, ID, password, and the like.

The controller 16a transmits the member information stored in the memory 16b to the server for content delivery 18. In addition to personal information on members, the member information for example includes personal information on people who have become nonmembers due to unpaid charges, withdrawal from membership, or the like.

The controller 16a changes the member information with an unpaid charge to nonmember information and saves the result in the memory 16b.

After transmitting the member information to the server for content delivery 18, the controller 16a determines whether a confirmation signal has been received from the server for content delivery 18. When determining that no confirmation signal has been received, the controller 16a repeats transmission of the member information to the server for content delivery 18 a predetermined number of times.

Upon exceeding the predetermined number of transmissions without receiving a confirmation signal, the controller 16a recognizes that an error has occurred and provides error notification.

The memory 16b may include a local memory and a cache memory that are used for execution of programs in combination with the controller 16a. Computer readable media that implement the memory 16b may include electric, magnetic, optical, and electromagnetic implementations.

Specifically, examples include a semiconductor storage device, magnetic tape, magnetic disk, Random Access Memory (RAM), Read-Only Memory (ROM), and optical discs including CD-ROM, CD-R/W, and DVD.

In the memory 16b, information on users for whom a charge is paid is stored as user information, and information on users for whom a charge is unpaid is stored as nonmember information.

These sets of member information are saved in the memory 16b manually by the manager or automatically by the controller 16a.

The input interface 16c accepts input from the user or the like and may include a keyboard, pointing device, or other such item.

The input interface 16c is not an essential element.

The display 16d for example displays a screen for receiving input of data or the like or displays a screen with the result of arithmetic processing by the server for charge management. The display 16d includes a display device such as a Cathode-Ray Tube (CRT) display device or a liquid crystal display (LCD).

The display 16d is not necessarily an essential element.

The communication interface 16e is a network adapter to allow the server for charge management 18 to connect to another communication device over a dedicated network or a public network. The communication interface 16e may include a modem, cable modem, or Ethernet® adapter.

### (Server for Content Delivery)

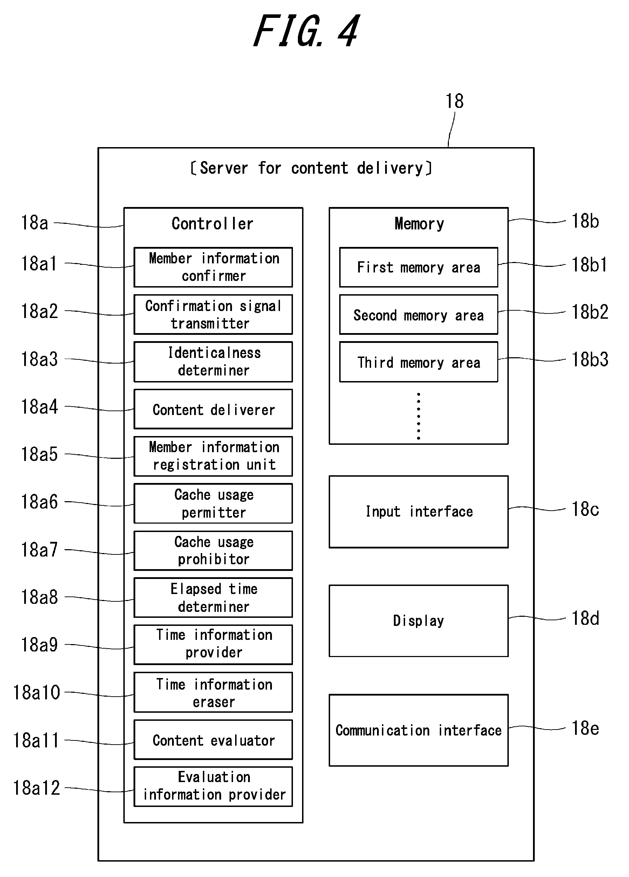

As illustrated in FIG. 4, the server for content delivery 18 for example includes a controller 18a, memory 18b, input interface 18c, display 18d, and communication interface 18e. The basic structure (hardware structure) of the constituent elements in the server for content delivery 18 is similar to that of the constituent elements of the server for charge management 16. The functions differ, however, in the following points.

The controller 18a for example includes a member information confirmer 18a1, a confirmation signal transmitter 18a2, an identicalness determiner 18a3, a content deliverer 18a4, a member information registration unit 18a5, a cache usage permitter 18a6, a cache usage prohibitor 18a7, an elapsed time determiner 18a8, a time information provider 18a9, a time information eraser 18a10, a content evaluator 18a11, and an evaluation information provider 18a12. These components may be formed in the same controller or may be spread across two or more controllers. The server for content delivery itself is not limited to one server and may be formed by a plurality of servers.

The member information confirmer 18a1 confirms whether member information has been received from the server for charge management 16.

When member information has been received from the server for charge management 16, the confirmation signal transmitter 18a2 generates a predetermined confirmation signal and transmits (returns) the confirmation signal to the server for charge management 16.

When predetermined information is input from the terminals 14A and 14B, the identicalness determiner 18a3 determines whether the information is identical to member information.

The judgment of identicalness is not limited to the information being completely identical physically and also includes cases such as determining whether the classification of information is identical. Specifically, while the member information is stored in the memory 18b, the identicalness determiner 18a3 can read only the ID and password, which are a portion of the member information, from the memory 18b and compare them with the ID and password input by the terminals 14A and 14B.

The identicalness determiner 18a3 may be provided on the terminal 14A side. In particular, by adopting a configuration in which the identicalness determiner 18a3 is provided as a function of the application 20A saved on the terminal 14A, the determination of identicalness to the member information can be made by the terminal 14A or the application 20A saved on the terminal 14A instead of by the server for content delivery 18. As a result, permission to use or prohibition from using the cache can also be controlled by the terminal 14A or the application 20A saved on the terminal 14A alone.

When the identicalness determiner 18a3 determines the information to be identical, the content deliverer 18a4 receives a request via the applications 20A and 20B on the terminals 14A and 14B and delivers content to the terminals 14A and 14B. For example, upon receiving transmission of a request for delivery from the applications 20A and 20B installed on the terminals 14A and 14B, the content deliverer 18a4 delivers the requested content.

The applications 20A and 20B are downloaded from the server for content delivery 18 into the memories of the terminals 14A and 14B in advance.

The content deliverer 18a4 can also adjust the delivery time of content or the display start time of content delivered to the terminals 14A and 14B. Specifically, the content deliverer 18a4 can set the deliverable time, delivery end time, display start time, display end time, and the like for each content delivered to the terminals 14A and 14B.

One method of delivering content by the content deliverer 18a4 is streaming delivery, yet content delivery is not limited to streaming. For example, delivery not using buffering or a form of delivery close to downloading may be adopted.

As the method of delivering content in this embodiment, for example any of a stream (streaming), a progressive download (pseudo stream), a download, and the like may be adopted.

Streaming is a method by which the delivered music (video) data are played directly without creating a temporary file (cache) on the storage device (HDD) of the terminal.

A progressive download (pseudo stream) is a method by which a temporary file (cache) is created on the storage device (HDD) of the terminal, and after the user finishes replaying the music (video), the temporary file is deleted automatically by software such as a browser on the terminal side or is deleted by the user.

In this context, caching refers to storing data with a high frequency of usage in a high-speed processing storage device so as to eliminate the waste of reading from a low-speed processing device, thereby increasing speed. A cache refers to the high-speed storage device used for caching or to the actual duplicated data. For example, since data can be read from and written to memory at a high speed that is several hundred times faster than a hard disk, storing frequently used data in the memory increases the processing speed as compared to when all of the data are on the hard disk. In this case, the data duplicated in memory are a cache for the hard disk.

Downloading is a method of saving copied data that remain on the storage device (HDD) of the terminal unless the user deletes the data.

While the method of delivery is not limited to streaming, streaming is appropriate when, for example, delivering files such as video files, audio files, or image files of a musical activity or the like.

By using streaming, a video file can be replayed while being downloaded into a buffer of a certain size. Once a video file is downloaded, for example one approach is for the file that ends up being downloaded into a predetermined memory of the terminal 14A, which is the download destination, to be saved as the cache 22 (see FIG. 2), like a progressive download. Another approach is for the cache 22 not to be saved, like a stream.

With a stream, data are deleted from buffer memory after a predetermined time elapses. Therefore, when replaying the data, the data need to be streamed again and downloaded again into the buffer memory. Hence, this approach is inconvenient when replaying data again but is advantageous for avoiding copyright issues and for lowering the usage fee.

A progressive download is advantageous in that data or files that are acquired once by delivery are saved on the terminal as a cache, so that content can be replayed on each terminal multiple times without redelivery.

The cache 22 is preferably saved by being inserted inside a program of the application 20A or onto the terminal's hard disk.

The form of delivery by streaming may be on-demand delivery or live delivery. Both forms are included in this embodiment.

Specifically, on-demand delivery is a method by which, for example, an encoded file is registered in storage of the server for content delivery 18, and a predetermined file is delivered in response to a request from the terminal 14A via the application 20A.

Live delivery is a method not to deliver a file prepared in advance, as with on-demand delivery, but rather to convert (encode) filmed video or the like (either a live broadcast or an edited recording) into data for streaming delivery consecutively and to deliver the data in real time in response to a request from the terminal 14A via the application 20A.

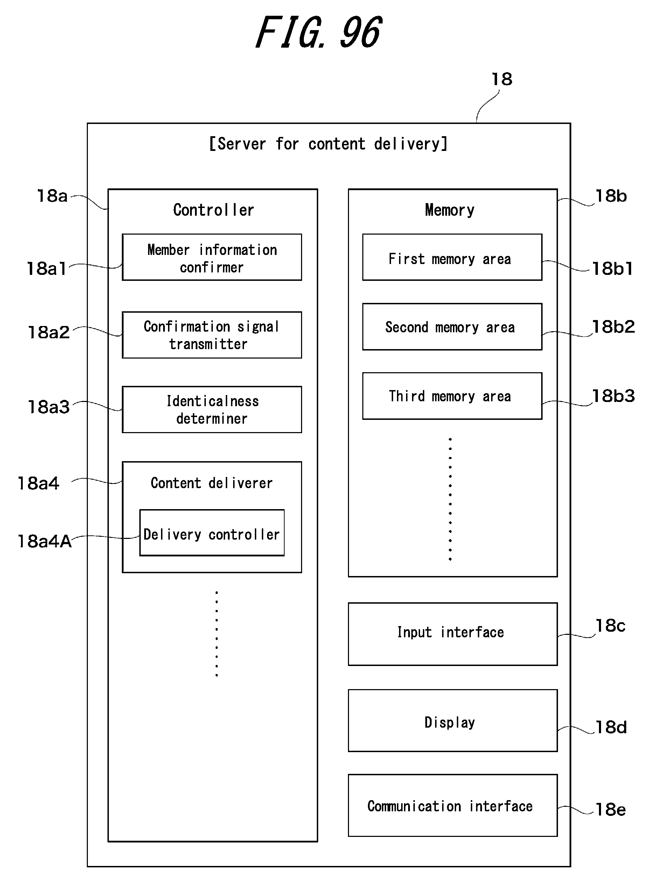

As illustrated in FIG. 96, the content deliverer 18a4 may include a delivery controller 18a4A. The delivery controller 18a4A may be included in a constituent element other than the content deliverer 18a4.

The delivery controller 18a4A controls the delivery format of content. Specifically, the delivery controller 18a4A mainly determines whether to deliver content by streaming or by downloading. The selection of delivery format is, for example, based on a delivery format designation signal that is input from the terminals 14A and 14B and designates the delivery format of content.

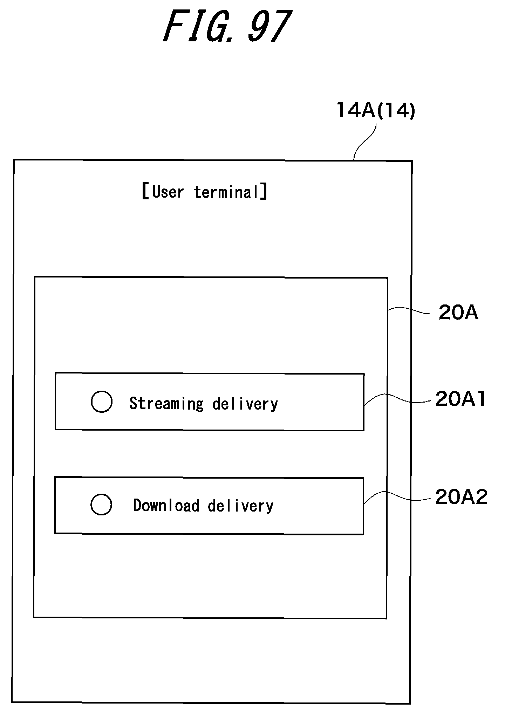

As illustrated in FIG. 97, on the terminals 14A and 14B, the delivery format of content can be designated on the applications 20A and 20B. Specifically, on each of the applications 20A and 20B on the terminals 14A and 14B, either a streaming delivery input interface 20A1 or a download delivery input interface 20A2 can be selected or input. Upon provision of input on the terminals 14A and 14B designating a predetermined delivery format, a delivery format designation signal is generated on the terminals 14A and 14B and output to the server for content delivery 18. The delivery format designation signal is a signal that designates either streaming delivery or download delivery.

Processing to control content delivery is now described.

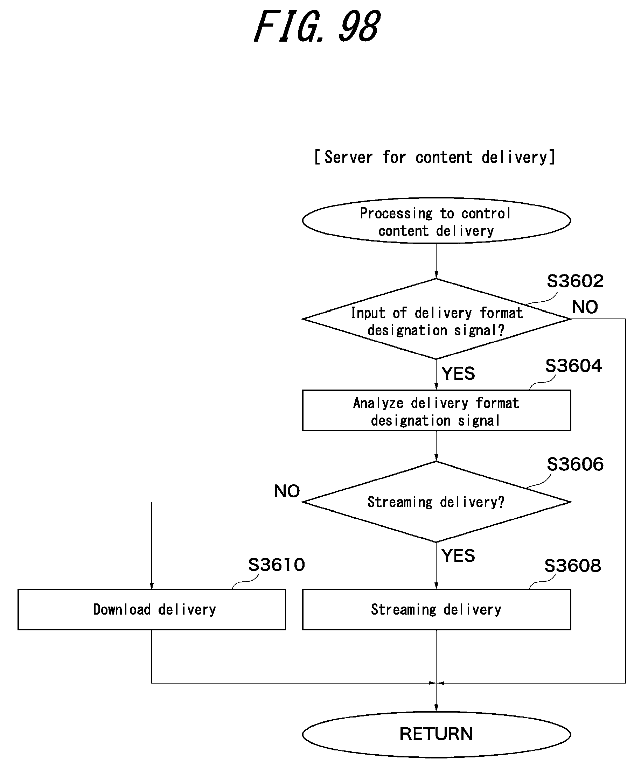

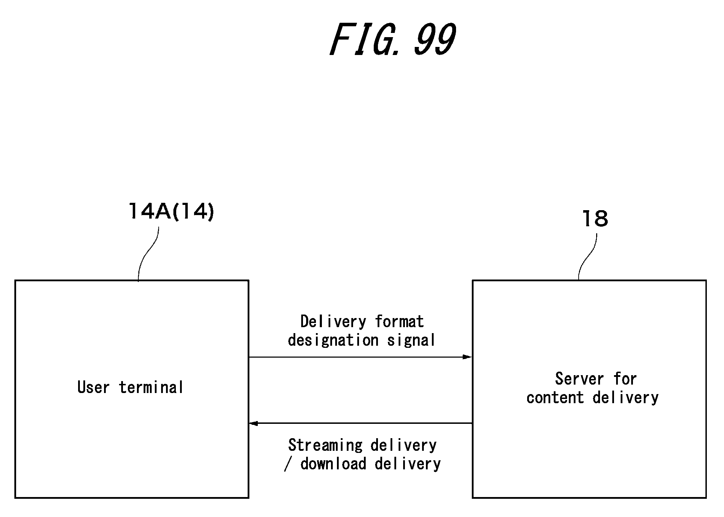

As illustrated in FIG. 98, the server for content delivery 18 judges whether a delivery format designation signal has been input from the terminal 14A (S3602). When it is judged that a delivery format designation signal has been input (S3602: YES), then as illustrated in FIG. 99, the delivery controller 18a4A of the content deliverer 18a4 analyzes the content of the delivery format designation signal (S3604).

Next, when the delivery format is judged to be streaming delivery as the result of analyzing the content of the delivery format designation signal (S3606: YES), then as illustrated in FIG. 99, the content is delivered by streaming from the content deliverer 18a4 to the terminal 14A (S3608).

Conversely, when the delivery format is judged not to be streaming delivery (S3606: NO), the content is delivered by downloading from the content deliverer 18a4 to the terminal 14A (S3610).

In S3606, an example is illustrated of judging the delivery format using streaming delivery as a standard, but of course it may be judged instead whether the delivery format is download delivery.

In this way, the delivery format of content can be designated by the terminals 14A and 14B. This approach allows streaming delivery for users who prefer delivery by streaming and download delivery for users who prefer delivery by downloading.

The advantages of designating the delivery format on the terminals 14A and 14B are as follows. For example, if the delivery format is set by national law for the location where the user resides or is visiting, the set delivery format may be selected. If the copyright fee or the like varies between streaming delivery and download delivery, content can be delivered in the appropriate format.

The processing to control content delivery, or in other words processing to select the delivery format of content, is not limited to one embodiment or to Example 1 of this disclosure and may be applied to all of the Examples.

In a first memory area 18b1 of the memory 18b, the member information registration unit 18a5 saves the member information that was subjected to charge processing on the server for charge management 16. This member information is based on member information transmitted from the server for charge management 16.

The member information registration unit 18a5 changes member information for which charge processing has not been updated on the server for charge management 16 to nonmember information and saves the nonmember information in the first memory area 18b1 of the memory 18b. This nonmember information is based on member information transmitted from the server for charge management 16.

The cache usage permitter 18a6 for example permits use, via the application 20A, of the cache 22 saved on the terminal 14A by delivery of content to the terminal 14A. The cache usage permitter 18a6 may simply permit launching of the application 20A or may actively control execution and operation of the application's various functions. In a configuration in which the cache usage permitter 18a6 and the identicalness determiner 18a3 are provided on the server for content delivery 18 side, the server for content delivery 18 can remotely control replay of the cache 22 saved in the memory of the terminal 14A.

Upon delivering a file from the server for content delivery 18 to the terminal 14A, a file referred to as the cache 22 is created in the memory of the terminal 14A and saved in a predetermined memory area. The destination at which the cache 22 of the content is saved is preferably the memory of the terminal 14A, such as inside a program of the application 20A already stored on the terminal 14A. In this case, the file in the cache 22 of the content is inserted into the program of the application 20A.

For example, in ordinary streaming, this cache 22 is a temporary file and therefore is deleted after a predetermined time elapses. By delivering content via the application 20A used in this disclosure, however, the cache 22 is not deleted right away. Once the cache 22 is created, then when someone having a member qualification inputs member information (ID, password, and the like) and launches the application 20A, replay of the cache 22 via the application 20A is allowed.

In this way, repeated delivery from the server for content delivery 18 is unnecessary, and the cache 22 created and saved on the terminal 14A can be replayed immediately at any time via the application 20A.

In a configuration in which the cache usage permitter 18a6 and the identicalness determiner 18a3 are provided on the terminal 14A side, the cache 22 can be replayed via a function of the application 20A.

Specifically, by adopting a format in which the file of the cache 22 is inserted inside a program of the application 20A, dedicated software (for example, a music player) is launched by the application 20A, and the cache 22 of the content can be replayed.

In a configuration in which the cache usage permitter 18a6 and the identicalness determiner 18a3 are provided on the terminal 14A side, replay of the cache 22 saved on the terminal 14A side is not controlled remotely by the server for content delivery 18, but rather by the terminal 14A, specifically by the application 20A saved on the terminal 14A.

For example, if the function of the identicalness determiner 18a3 is included in the application 20A, then replay of the cache 22 is permitted when identicalness to a member is affirmed.

The same effects are also obtained when launching the application 20B on the terminal 14B.

When the identicalness determiner 18a3 determines that the information input from the terminal 14A is not identical to the member information, then the cache usage prohibitor 18a7 prohibits use of the cache 22 via the application 20A.

In other words, when a person who was previously a member had content delivered in the past, the cache 22 was created and saved on the person's terminal 14A. In this case, someone who matches the member information (i.e. a member) can at any time replay the cache 22 via the application 20A any number of times, but a person for whom member information was changed to nonmember information for any of various reasons, such as not paying a charge, is prohibited from replaying the cache 22 via the application 20A. In this way, the cache usage prohibitor 18a7 prohibits use by nonmembers of the cache 22 via the application 20A.

The following are two examples of methods of prohibiting use of the cache 22 via the application 20A.

When a person changes from being a member to a nonmember, the first method is to invalidate the ID and password that were used at the time of membership. In this case, the application 20A cannot be launched by inputting the invalidated ID and password, and the cache 22 cannot be replayed via the application.

The second method is to store the correspondence relationship between identification information identifying the terminal 14A (for example, an IP address) and member information on the server for content delivery 18 in advance, and when the terminal 14A accesses the server for content delivery 18, to control launching of the application 20A and/or prohibition of replay of the cache 22 based on the identification information of the terminal 14A.

In this way, in a configuration in which the cache usage prohibitor 18a7 and the identicalness determiner 18a3 are provided on the server for content delivery 18 side, the server for content delivery 18 can remotely control prohibition of replay of the cache 22 saved on the terminal 14A.

On the other hand, in a configuration in which the cache usage prohibitor 18a7 and the identicalness determiner 18a3 are provided on the terminal 14A side, replay of the cache 22 can be prohibited via a function of the application 20A.

Specifically, when adopting a format such that the file of the cache 22 is inserted inside a program of the application 20A, dedicated software (for example, a music player) is not launched by the application 20A, thereby prohibiting replay of the cache 22.

In this way, in a configuration in which the cache usage prohibitor 18a7 and the identicalness determiner 18a3 are provided on the terminal 14A side, prohibition of replay of the cache 22 of content saved on the terminal 14A side is not controlled remotely by the server for content delivery 18, but rather by the terminal 14A, specifically by the application 20A saved on the terminal 14A.

For example, if the function of the identicalness determiner 18a3 is included in the application 20A, then replay of the cache 22 of content is prohibited when identicalness with the member is denied.

Using a timer function, the elapsed time determiner 18a8 determines the elapsed time of content stored in a second memory area 18b2. Specifically, the elapsed time determiner 18a8 measures and determines the time elapsed since the content was saved in the second memory area 18b2.

In a predetermined case, the time information provider 18a9 provides predetermined information that suggests the time. Time information includes not only numbers indicating time, but also characters such as "NEW", graphical information, or the like. While the target of provision of time information is the corresponding content, the time information for example is provided around the file or folder of the allowed content, to an area specifying the content, or the like.

Provision of the time information by the time information provider 18a9 is based on the result of the determination by the elapsed time determiner 18a8. For example, when the elapsed time determiner 18a8 determines that content was stored in the second memory area 18b2 within a predetermined time, time information suggesting the time is provided. In this case, the predetermined time information provided to the content can be displayed on a display screen of the terminals 14A and 14B.

The time information eraser 18a10 erases the time information provided to the content in a predetermined case. For example, when the elapsed time determiner 18a8 determines that a predetermined time has elapsed since content to which time information was provided was stored in the second memory area 18b2, the time information that was provided to the content is erased. In this case, the predetermined time information provided to the content is not displayed on the display screen of the terminals 14A and 14B.

The content evaluator 18a11 receives information input via the applications 20A and 20B on the terminals 14A and 14B and evaluates the content. Specifically, when some sort of information evaluating the content is input via the applications 20A and 20B on the terminals 14A and 14B, information suggesting a positive evaluation is provided as support for the content.

The substance of the content evaluation is grouped by the substance, frequency, number of evaluations, or the like of the information input via the applications 20A and 20B on the terminals 14A and 14B, and a ranking display or the like is used as appropriate.

The information input via the applications 20A and 20B on the terminals 14A and 14B includes not only input of character information or the like, but also input by clicking, on the display screen of the terminals 14A and 14B, a predetermined icon or the like displayed in the applications 20A and 20B.

The evaluation information provider 18a12 provides predetermined information that suggests an evaluation reflecting the result of evaluation by the content evaluator 18a11. The evaluation information for example corresponds to characters such as "like" or to predetermined graphical information.

While the target of provision of evaluation information is the corresponding content, the evaluation information for example is provided around the file or folder of the allowed content, to an area specifying the content, or the like. In this case, the predetermined evaluation information provided to the content can be displayed on a display screen on the applications 20A and 20B of the terminals 14A and 14B.

The memory 18b for example includes the first memory area 18b1, the second memory area 18b2, a third memory area 18b3, etc.

Member information for which charge processing by the server for charge management 16 is complete is stored in the first memory area 18b1. Nonmember information is also included in the member information. The member information is transmitted from the server for charge management 16 and saved in the first memory area 18b1.

Content is stored in the second memory area 18b2. The content is not limited to videos and also applies to various files such as image files and text files. The content is, for example, uploaded as appropriate from the artist terminal 14B using the application 20B.

The application 20A for allowing playback of the content on the terminal is stored in the third memory area 18b3.

The application 20A refers to an application program or application software. The application 20A can be downloaded from the server for content delivery 18 by inputting predetermined member information (for example, an ID and password) from each terminal 14A and accessing the server for content delivery 18. By installing the application 20A downloaded onto the terminal 14A, the functions of the server for content delivery 18 can be shared on each terminal 14A.

The application 20B installed on the artist terminal 14B may also be stored in the third memory area 18b3.

The application 20B is an application necessary when uploading a file or the like from the terminal 14B to the server for content delivery 18 and is either the same as the application 20A on the terminal 14A or is a different application.

At least a portion of the structure of the controller 18a and memory 18b provided in the server for content delivery 18 may be provided on the user terminal 14A side.

For example, by providing at least the identicalness determiner 18a3, the member information registration unit 18a5, the cache usage permitter 18a6, the cache usage prohibitor 18a7, and the first memory area 18b1 of the memory 18b on the user terminal 14A side, the relationship to a member can be judged and replay or prohibition of replay of the cache 22 can be controlled by the application 20A saved on the user terminal 14A.

### (User Terminal)

As illustrated in FIGS. 1 and 2, the application 20A for communicating with the server for content delivery 18 is installed in the memory of the user terminal 14A.

The user uses the application 20A of the terminal 14A to communicate with the server for content delivery 18 and to receive delivery of content such as a predetermined video file. The delivered video file can be replayed by the application 20A.

Once the content is delivered, the cache 22 is created and saved in a predetermined memory, or a memory area, of the terminal 14A. When replaying the cache 22, the user inputs valid member information (for example, an ID and password) to launch and execute the application 20A.

For example, as illustrated in FIG. 4, in a configuration in which the identicalness determiner 18a3, cache usage permitter 18a6, and cache usage prohibitor 18a7 are provided on the server for content delivery 18 side, permission to use or prohibition from using the cache 22 saved on the terminal 14A is judged on the server for content delivery 18 side.

In this configuration, the server for content delivery 18 side receives a request signal from the terminal 14A via the application 20A and executes predetermined control processing, or outputs a control signal, to control replay or prohibition of replay of the cache 22 on the terminal 14A.

On the other hand, in a configuration in which the identicalness determiner 18a3, cache usage permitter 18a6, and cache usage prohibitor 18a7 are provided on the terminal 14A side (or inside a program of the application 20A saved on the terminal 14A), it can be judged accurately whether the user is a member on the terminal 14A side alone, and therefore a determination regarding permission to use or prohibition from using the cache 22 saved on the terminal 14A side can be made.

In this configuration, for example when member information (for example, an ID and password) input by the terminal 14A is judged to be accurate information, the application 20A saved on the terminal 14A launches. By executing an operation to replay the cache 22 of the content on the terminal 14A, the application 20A launches dedicated software (for example, a music player) and replays the cache 22. As a result, the above-mentioned request need not be issued from the terminal 14A to the server for content delivery 18, and permission to use or prohibition from using the cache 22 can be controlled on the terminal 14A side alone.

Upon launching the application 20A on the user terminal 14A, a plurality of contents saved in the second memory area 18b2 of the server for content delivery 18 are displayed on a display screen of the terminal 14A. By the user selecting the content to view on the display screen, the user can receive new delivery of the selected content or can replay the cache 22 of already delivered content.

Not only video files, but rather a variety of files saved on the server for content delivery 18 can be viewed or listened to on the user terminal 14A via the application 20A.

On the other hand, in a configuration in which the identicalness determiner 18a3, cache usage permitter 18a6, and cache usage prohibitor 18a7 are provided on the terminal 14A side (or inside a program of the application 20A saved on the terminal 14A), a person who is not a member cannot input valid member information from the terminal 14A. Therefore, the person cannot launch the application 20A, or even if the application 20A can be launched, cannot launch the dedicated software (for example, a music player) and hence cannot replay the cache 22 of the content.

The cache 22 stored on the user terminal 14A can be freely erased with an erasing function of the application 20A. When the cache 22 is not saved on the user terminal 14A, predetermined content is delivered to the user terminal 14A by a delivery request to the server for content delivery 18. The file of the cache 22 is then saved on the user terminal 14A (or in the application 20A saved on the terminal 14A).

### (Artist Terminal)

As illustrated in FIGS. 1 and 2, the application 20B for communicating with the server for content delivery 18 is installed on the artist terminal 14B.

The user uses the application 20B of the terminal 14B to communicate with the server for content delivery 18 and to upload content such as a predetermined video file.

In the case of live delivery, content is delivered using appropriate encoding software.

Content by live delivery from the artist terminal 14B is delivered to the user terminal 14A via the server for content delivery 18.

The application 20B may be launched (used) by inputting valid member information (for example, an ID and password). Not only video files, but also a variety of files such as text files can be uploaded from the artist terminal 14B to the server for content delivery 18 via the application 20B.

A configuration in which the identicalness determiner 18a3 is provided in the application 20B allows determination of whether the artist is a member, thereby allowing judgment of whether the artist is a member on the terminal 14B (application 20B) side. When the artist is judged to be a member, a variety of files can be uploaded from the terminal 14B to the server for content delivery 18 via the application 20B.

### [Various Types of Control Flow in Content Delivery System]

Next, various types of control flow in the content delivery system are described.

### (Various Types of Control Flow in Server for Charge Management)

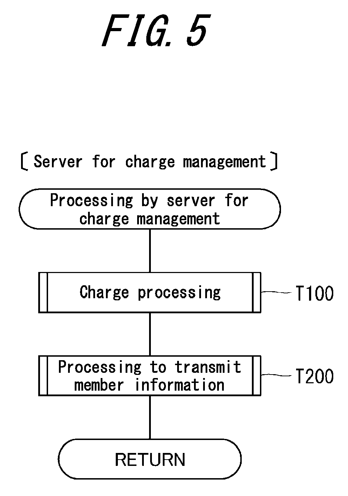

As illustrated in FIG. 5, the server for charge management 16 executes charge processing T100 and processing to transmit member information T200.

### <Charge Processing: T100>

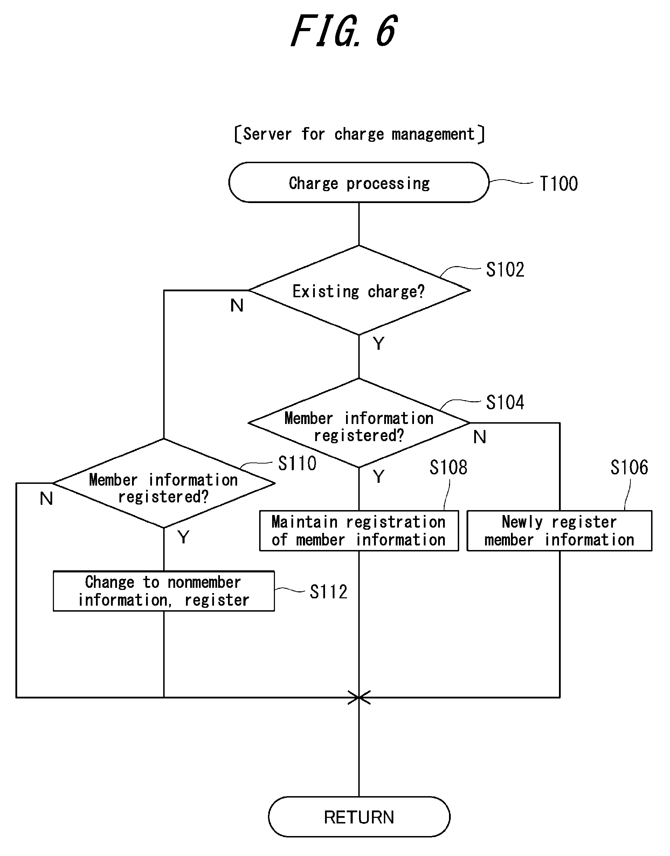

As illustrated in FIG. 6, in the charge processing T100, the controller 16a determines whether a charge has been paid (S102). For example, when the user wants to download and install the application 20A of the terminal 14A, the user provides personal information for becoming a member and also pays a membership fee of a predetermined price. The user performs these procedures on the server for charge management 16 from the user's terminal or the like. The server for charge management 16 confirms whether the membership fee has been paid as a charge and also acquires the member's personal information (for example, an ID and password). In S102, the payment status of the membership fee is determined. The server for content delivery 18 may execute this charge processing.

When the charge has been paid (S102: YES), the controller 16a determines whether the member information has already been registered (S104). If the member information has not already been registered (S104: NO), the controller 16a newly registers the member information in the memory 16b (S106). If the member information has already been registered (S104: YES), registration of the member information is maintained as is in the memory 16b (S108).

On the other hand, when the charge has not been paid (S102: NO), the controller 16a determines whether the member information has already been registered (S110). If the member information has already been registered (S110: YES), the controller 16a changes the member information to nonmember information and registers the nonmember information in the memory 16b (S 112). A person not qualified to use the server for content delivery 18 is thus identified. The charge processing T100 is repeatedly executed at predetermined time intervals.

### <Processing to Transmit Member Information: T200>

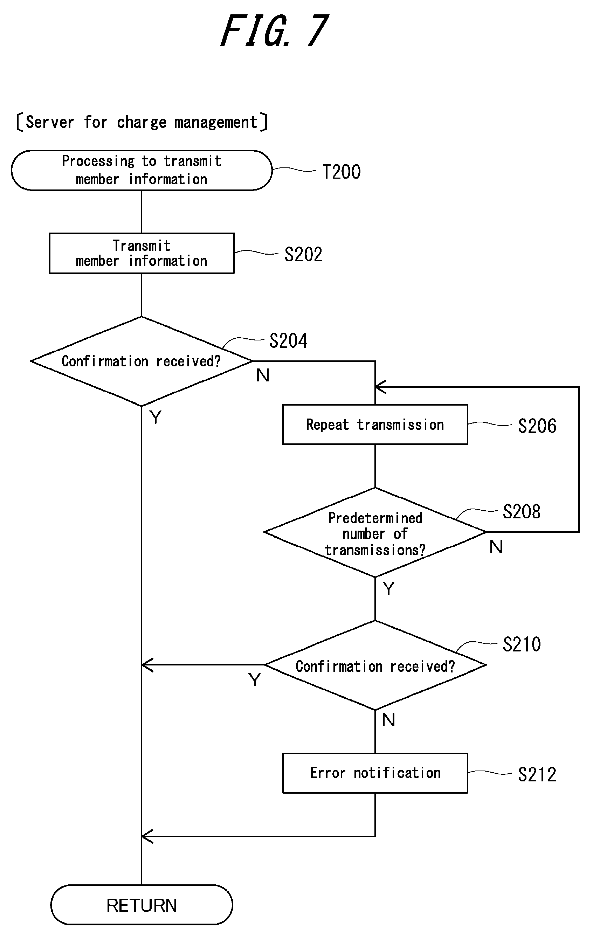

As illustrated in FIG. 7, in the processing to transmit member information T200, member information stored in the first memory area 18b1 of the memory 18b is transmitted to the server for content delivery 18 at a predetermined time (S202). The member information includes at least one of personal information on a person having a member qualification and personal information on a nonmember not having a member qualification. The content of the personal information is as described above.

After transmitting the member information to the server for content delivery 18, the controller 16a determines whether a confirmation signal has been received from the server for content delivery 18 within a predetermined time (S204). When a confirmation signal has not been received from the server for content delivery 18 within a predetermined time (S204: NO), the controller 16a repeats transmission of the member information a prescribed number of times (S206). After transmitting the member information a prescribed number of times (S208: YES), the controller 16a again determines whether a confirmation signal has been received from the server for content delivery 18 (S210).

When a confirmation signal has not been received from the server for content delivery 18 (S210: NO), the controller 16a provides error notification (S212) and terminates the processing to transmit member information T200. The error notification for example includes displaying an indication, on the display 16d of the charge processing server 16, that a confirmation signal cannot be received and contacting the administrator of the server for content delivery 18.

When a confirmation signal is received from the server for content delivery 18 (S204, S210: YES), the processing to transmit member information T200 terminates. The processing to transmit member information T200 is repeatedly executed at predetermined time intervals.

A configuration is preferably adopted to transmit the member information from the server for charge management 16 or the server for content delivery 18 to the terminal 14A and terminal 14B at predetermined times and to manage registration on the terminal 14A and terminal 14B side.

### (Various Types of Control Flow in Server for Content Delivery)

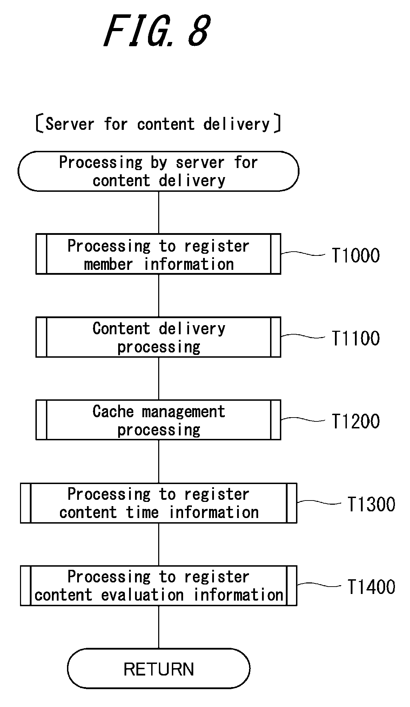

As illustrated in FIG. 8, the server for content delivery 18 for example executes processing to register member information T1000, content delivery processing T1100, cache management processing T1200, processing to register content time information T1300, and processing to register content evaluation information T1400. These processes are repeatedly performed either consecutively or individually.

The cache management processing T1200 may be executed on the terminal 14A side instead of on the server for content delivery 18 side. In this case, with the application 20A already saved on the terminal 14A, the cache management processing T1200 may be executed as one of the functions of the application 20A.

The cache management processing T1200 is processing necessary when the cache occurs and may be omitted for a delivery format in which a cache is unnecessary.

As necessary, the processing to register member information T1000, processing to register content time information T1300, and processing to register content evaluation information T1400 may also be executed on the terminal 14A side.

### <Processing to Register Member Information: T1000>

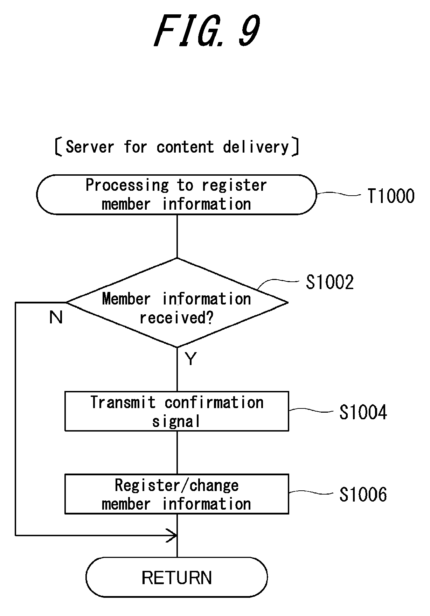

As illustrated in FIG. 9, in the processing to register member information T1000, the member information confirmer 18a1 determines whether member information has been received (S1002). When member information has been received (S1002: YES), the confirmation signal transmitter 18a2 transmits a predetermined confirmation signal to the server for charge management 16 (S1004).

The member information registration unit 18a5 registers the content of the member information in the first memory area 18b1 (S1006). At this time, if there is a change in the member information, such as when included information indicates that a person who was a member has changed to a nonmember, the member information registration unit 18a5 changes the information on the member to that of a nonmember and registers the change. Subsequently, the processing to register member information T1000 terminates. The processing to register member information T1000 is repeatedly executed at predetermined time intervals.

### <Content Delivery Processing: T1100>

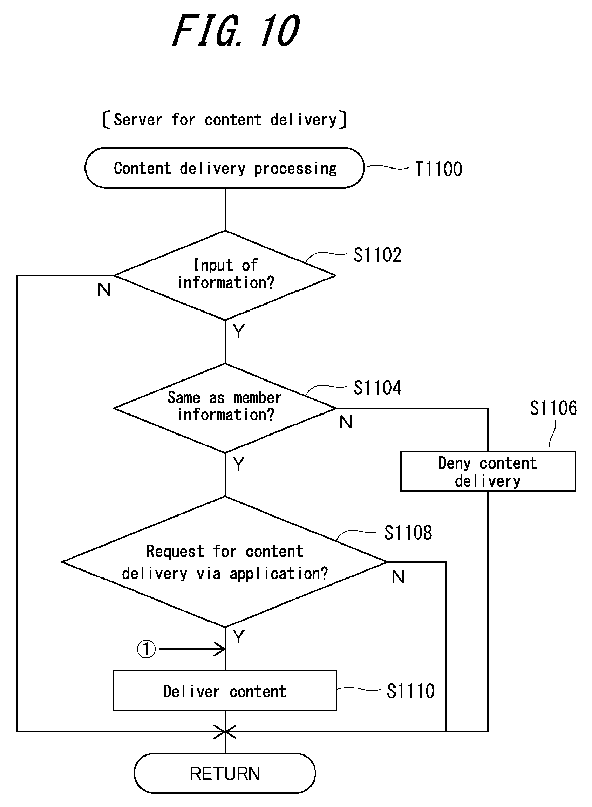

As illustrated in FIG. 10, during the content delivery processing T1100, for example when input of information from the terminal 14A is confirmed (S1102: YES), the identicalness determiner 18a3 determines whether the information input from the terminal 14A is identical to member information (S1104). The judgment of whether the information input from the terminal 14A is identical to member information is, for example, made by confirming whether the ID and password input from the terminal 14A match those of a member. The member's ID and password are stored in the first memory area 18b1, and the identicalness determiner 18a3 reads and confirms the ID and password as appropriate.

When the information input from the terminal 14A is determined not to be identical to member information (S1104: NO), the content deliverer 18a4 denies the request for content delivery and does not deliver content (S1106).

When the information input from the terminal 14A is determined to be identical to member information (S1104: YES), then if there was a delivery request via the application 20A (S1108: YES), the content deliverer 18a4 delivers the requested content, such as a file (S1110).

When the same file has been delivered to the same member in the past, the same file or the like is not delivered again, but rather use of the cache 22 is permitted.

For example, streaming delivery, download delivery, or the like may be used as the form of content delivery.

### <Cache Management Processing: T1200>

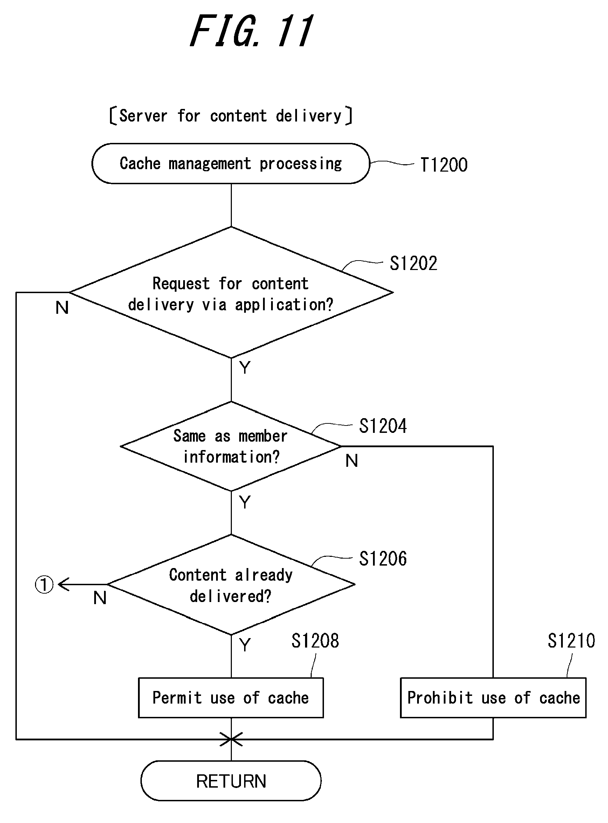

As illustrated in FIG. 11, during the cache management processing T1200, when input of information from the terminal 14A is confirmed (S1202: YES), it is determined whether the information input from the terminal 14A is identical to member information, and if so (S1204: YES), the cache usage permitter 18a6 (or the content deliverer 18a4) determines whether the same content has already been delivered to the terminal 14A of the same member (S1206).

When the same content has already been delivered to the terminal 14A of the same member, a predetermined flag is set, and the cache usage permitter 18a6 (or the content deliverer 18a4) confirms this flag to make a determination.

When the same content has already been delivered to the terminal 14A of the same member (S1206: YES), the cache usage permitter 18a6 responds to the delivery request for the content via the application 20A of the terminal 14A by permitting use of the cache 22 of the content (S1208).

The cache 22 is stored in a predetermined memory area of the terminal 14A and can be replayed via the application 20A. The method of permitting use of the cache 22 includes various means for permitting use of the cache 22 based on a request via the application 20A.

When the same content has not already been delivered to the terminal 14A of the same user (S1206: NO), processing transitions to the content delivery step (S1110) by the server for content delivery 18 in FIG. 10.

On the other hand, when the information input from the terminal 14A is not identical to member information (S1204: NO), the cache usage prohibitor 18a7 prohibits use of the cache 22 saved on the terminal 14A (S1210).

The method of prohibiting use of the cache 22 includes the above-described two methods. For example, the application 20A on the terminal 14A may be controlled to prevent launching (access denial), or when an instruction to replay the cache 22 is issued in the application 20A, the instruction may be invalidated (instruction rejection).

In a configuration in which the cache management processing T1200 is executed on the terminal 14A side, the following steps are performed. For example, step S1202 is skipped, and in S1204, the identicalness determiner 18a3 determines whether the information input from the terminal 14A is identical to member information (S1204).

When the two sets of information are not identical (S1204: NO), the application 20A cannot be launched on the terminal 14A, or even if the application 20A can be launched, dedicated software (for example, a music player) cannot be launched. In either case, the cache 22 cannot be replayed.

In this configuration, the cache usage prohibitor 18a7 is incorporated as a function of the terminal 14A or of the application 20A saved on the terminal 14A, and by operation of the cache usage prohibitor 18a7, replay of the cache 22 inserted (saved) in the terminal 14A or in the application 20A saved on the terminal 14A is prohibited.

When the cache 22 is not inserted (saved) in the terminal 14A or in the application 20A saved on the terminal 14A, the reason is that the cache 22 does not exist, and therefore replay of the cache 22 is impossible.

On the other hand, when the two sets of information are identical (S1204: YES), the application 20A is launched on the terminal 14A. When the cache 22 of content selected from the terminal 14 is inserted (saved) on the terminal 14 side (or inside a program of the application 20A) (S1206: YES), then the application 20A launches dedicated software (for example, a music player), and the selected cache 22 is replayed. Use (replay) of the cache 22 is thus permitted.

In this configuration, the cache usage permitter 18a6 is incorporated as a function of the terminal 14A or of the application 20A saved on the terminal 14A, and by operation of the cache usage permitter 18a6, replay of the cache 22 of the content inserted (saved) in the terminal 14A or in the application 20A saved on the terminal 14A is permitted.

When the cache 22 is not inserted (saved) in the terminal 14A or in the application 20A saved on the terminal 14A (S1206: NO), a delivery request is output to the server for content delivery 18 via the application 20A, and new or repeated delivery of the content (S1110 in FIG. 10) is received.

### <Processing to Register Content Time Information: T1300>

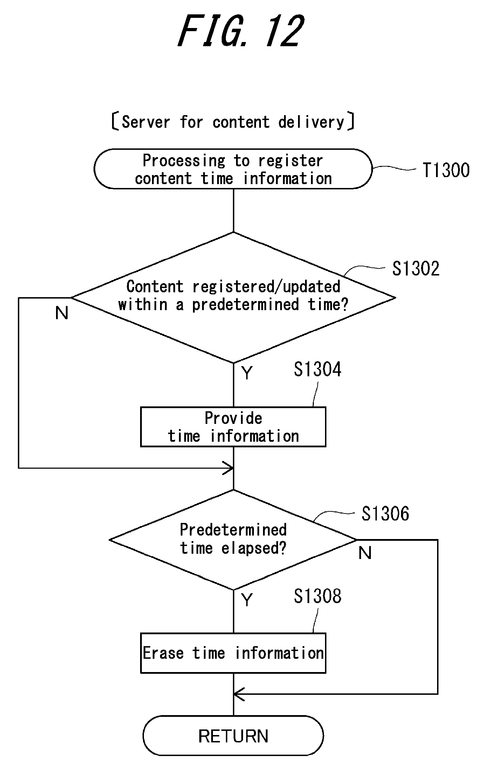

As illustrated in FIG. 12, in the processing to register content time information T1300, the elapsed time determiner 18a8 uses a timer function to determine whether content was stored in the second memory area 18b2 within a predetermined time (S1302).

When it is determined that content was stored in the second memory area 18b2 within a predetermined time (S1302: YES), the time information provider 18a9 provides the targeted content with predetermined time information suggesting the time (S1304).

As a result, predetermined time information is displayed along with display of the targeted content on the display screen of the application 20A of the terminal 14A, allowing visual confirmation by the user.

Subsequently, the elapsed time determiner 18a8 measures the elapsed time of the content to which the time information was provided, and when a predetermined time has elapsed (S1306: YES), the time information eraser 18a10 erases the provided time information from the content (S1308). As a result, the predetermined time information is not displayed on the display screen of the application 20A of the terminal 14A.

On the other hand, when the elapsed time determiner 18a8 determines that content has not been stored in the second memory area 18b2 within a predetermined time (S1302: NO), there is no content targeted for provision of time information, since no new content has been stored.

In this case, the time information is not provided in S1304, and processing proceeds directly to S1306, where the elapsed time determiner 18a8 determines the elapsed time since content to which time information was provided in the past was stored in the second memory area 18b2.

In other words, even when there is no content targeted for new provision of time information, the elapsed time is still measured if there is content to which time information was provided in the past, and the time information is erased as necessary (S1308).

If there is no content to which time information was provided in the past, then there is no content targeted for erasure, and time information is not erased.

The processing to register content time information T1300 may be executed by the terminal 14A or by the application 20A saved on the terminal 14A.

In this case, the time information is provided to the cache 22 of the content inserted into the application 20A saved on the terminal 14A. In other words, S1302 to S1308 of FIG. 12 are executed with respect to the cache 22 of the content inserted into the application 20A saved on the terminal 14A.

### <Processing to Register Content Evaluation Information: T1400>

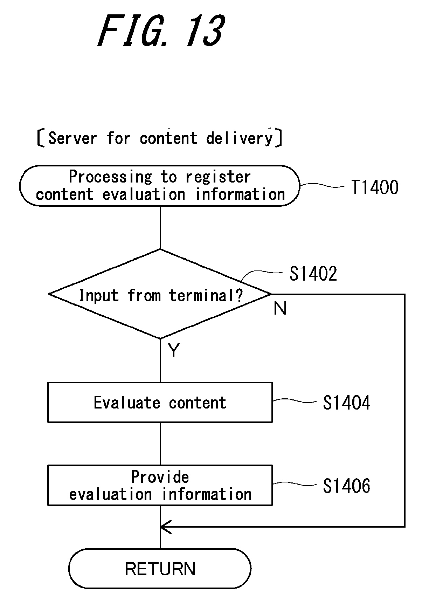

As illustrated in FIG. 13, in the processing to register content evaluation information T1400, when there is an input signal including predetermined input information via the application 20A of the terminal 14A (S1402: YES), the content evaluator 18a11 evaluates the content (S1404). For example, once the application 20A of the terminal 14A has been launched, a plurality of contents saved in the second memory area 18b2 are displayed on the display screen of the terminal 14A.

At this time, by the user inputting information on the display screen to select content targeted for evaluation or to evaluate the content, the content evaluator 18a11 decides on the evaluation of the targeted content. For example, based on the number of times the user provides input for specific content or on the input itself, the content evaluator 18a11 decides on the evaluation of the content.

As one example, the content evaluator 18a11 may count the number of times the user provides input for specific content by clicking an icon on the terminal, the icon corresponding to content that the user positively evaluates or to a region relating to the content. The input by the user for a specific content may be input of a questionnaire with two choices for evaluating content that the user evaluates positively, input of character information, or the like. The content evaluator 18a11 comprehensively judges such input.

Using a predetermined algorithm, the content evaluator 18a11 evaluates the content based on intermittent or continuous evaluation of the content as described above. Therefore, the evaluation by the content evaluator 18a11 continuously changes over time. The information related to the evaluation is, for example, saved in the second memory area 18b2 at a predetermined time or each time the information is updated.

The evaluation information provider 18a12 provides the targeted content with predetermined evaluation information that suggests an evaluation reflecting the result of evaluation by the content evaluator 18a11 (S1406). As a result, predetermined evaluation information for content is displayed along with display of the content on the display screen of the application 20A of the terminal 14A, allowing visual confirmation by the user.

On the display screen of the application 20B of the terminal 14B as well, each content and the evaluation information of each content are also displayed, allowing visual confirmation by the user.

The evaluation information provided by the evaluation information provider 18a12 continuously reflects the evaluation by the content evaluator 18a11, and when the evaluation by the content evaluator 18a11 changes, the evaluation information also changes.

The processing to register content evaluation information T1400 may be executed by the terminal 14A or by the application 20A saved on the terminal 14A. In this case, the evaluation information is provided to the cache 22 of the content inserted into the application 20A saved on the terminal 14A.

In other words, in FIG. 13, evaluation information for the cache 22 of the content inserted into the application 20A saved on the terminal 14A is input to the terminal 14A via a communication interface, and the evaluation result is constructed in S1404. In S1406, the evaluation information is provided to the cache 22 of the content inserted into the application 20A saved on the terminal 14A.

The evaluation information for each content may also be input via the application 20B of the terminal 14B. Similarly in this case, based on the input information, the content evaluator 18a11 evaluates each content, and the evaluation information provider 18a12 provides evaluation information reflecting the evaluation by the content evaluator 18a11. As a result, predetermined evaluation information is displayed along with display of the content on the display screen of the applications 20A and 20B of the terminals 14A and 14B, allowing visual confirmation.

According to this embodiment, when a request to deliver content is issued to the server for content delivery 18 from someone having a member qualification via the application 20A on the terminal 14A, the content is delivered to the terminal 14A. Once the content is delivered, the cache 22 corresponding to the content is created and saved in a memory area of the terminal 14A. Subsequently, if there is a delivery request via the application 20A for content for which the cache 22 was created, the cache 22 is replayed.

In this way, by launching the application 20A of the terminal 14A, the user can immediately replay content that was delivered once as many times as the user wishes using the cache 22 saved on the user's terminal 14A. As a result, redelivery becomes unnecessary, thus saving the time and effort required for delivery.

In a delivery method in which the cache 22 is not generated, streaming delivery is required again for replay.

On the other hand, for someone who does not have a member qualification, the application on the terminal does not launch, or even if the application launches, the instruction to replay the cache 22 is rejected. Therefore, the cache 22 is never replayed by somebody lacking a member qualification.

In particular, since time information is provided to the content saved on the server for content delivery 18, the user can be notified of newly arrived or updated content. The user can confirm such time information on the application 20A of the terminal 14A and use the time information as an aid for selecting what to view or listen to.

Since evaluation information is provided to the content saved on the server for content delivery 18, the user can be notified of evaluation of the content by a third party. The user can confirm such evaluation information on the application 20A of the terminal 14A and use the time information as an aid for selecting what to view or listen to. In particular, by continually changing the details of the evaluation, the user's evaluation can be reflected accurately.

On the artist terminal 14B as well, as on the terminal 14A, the artist can share all of the above-mentioned functions via the application 20B.

Using cloud computing technology in this system theoretically allows a configuration in which the servers 16 and 18 are unnecessary. Therefore, in the above embodiment and the Examples below, the servers are not essential elements of this disclosure.

### [Example 1]

Next, Example 1 of a content delivery system and method of delivering content according to one of the disclosed embodiments is described with reference to the drawings. Structural elements that overlap with the structure of the content delivery system and method of delivering content according to the above embodiment are labeled with the same reference signs, and a description thereof is omitted.

Example 1 is a configuration in which, for example, a function to purchase and sell merchandise or services is provided in a portion of the functions of the application 20A downloaded and installed on the user terminal 14A.

The function to purchase and sell merchandise or services may be provided in a portion of the functions of the application 20B downloaded and installed on the artist terminal 14B. The following illustrates and describes an example of the application 20A downloaded and installed on the user terminal 14A.

Here, the merchandise are, for example, merchandise that the artist registers on the server for content delivery 18 and/or the artist terminal 14B as being for sale. The merchandise may be any item the artists possesses or any item associated with the artist, such as music media (CD, record, cassette tape, MD, or the like), clothing (T-shirt, towel, or the like), tickets to events such as concerts in which the artist participates, or the like.

Services are, for example, services that the artist registers on the server for content delivery 18 and/or the artist terminal 14B as being for sale. Specifically, the services may be any service that the artist is requested to perform.

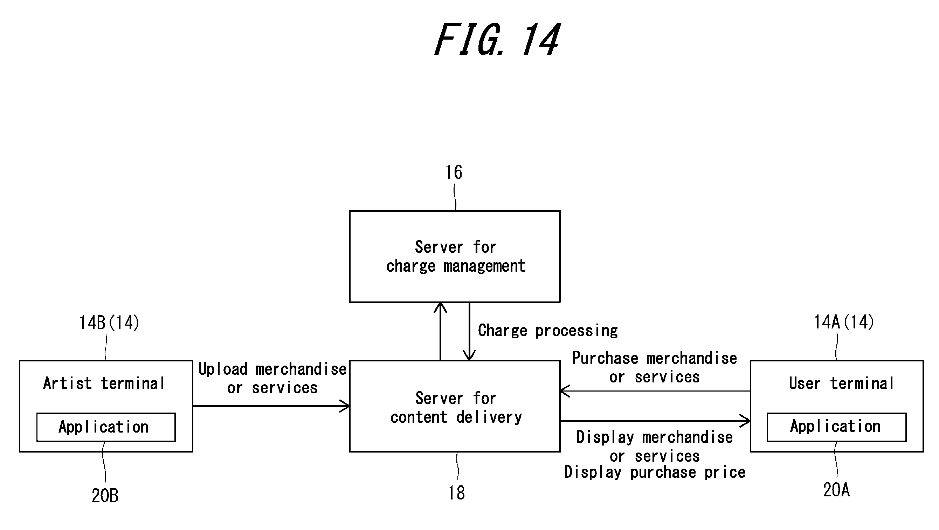

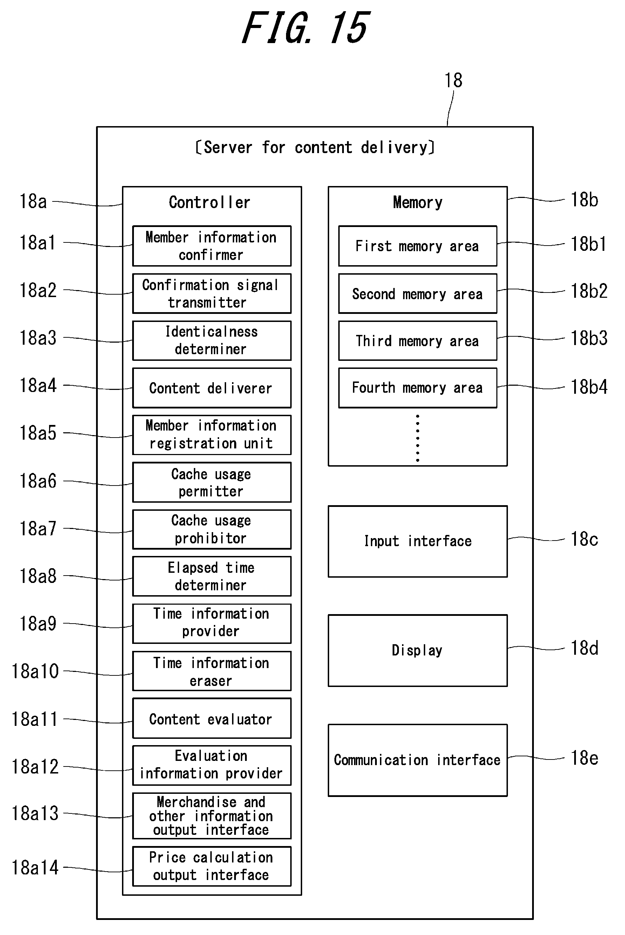

As illustrated in FIGS. 14 and 15, in Example 1, the artist, the artist's agent, or the like uses the application 20B to upload information related to merchandise or services from the artist terminal 14B to the memory 18b of the server for content delivery 18.

Here, information that is related to merchandise or services for sale and that was uploaded from the artist terminal 14B using the application 20B is stored in the memory 18b of the server for content delivery 18.

The information related to merchandise or services that are for sale for example includes a variety of information such as information on the details of the merchandise or services, the price, the method of purchase, and the like.

The information related to merchandise or services registered in the memory 18b of the server for content delivery 18 as being for sale is also output to the user terminal 14A and can be displayed for example on the display of the user terminal 14A using the application 20A, also allowing the user to purchase the desired merchandise or services.

The information related to merchandise or services registered in the memory 18b of the server for content delivery 18 as being for sale is also output to the artist terminal 14B, and can be displayed for example on the display of the artist terminal 14B using the application 20B, also allowing the artist to use the application 20B to purchase the desired merchandise or services.

Processing for accounting required to sell the merchandise or services is, for example, preferably executed by the server for charge management 16 or the server for content delivery 18. The processing is not limited to these servers, however, and may also be executed using electronic payment in an existing payment processing system.

### (Structure of Server for Content Delivery)

As illustrated in FIG. 15, a fourth memory area 18b4 storing the information related to merchandise or services for sale is provided in the memory 18b of the server for content delivery 18.

A merchandise and other information output interface 18a13 for outputting information related to the merchandise or services to the user terminal 14A or the artist terminal 14B and a price calculation output interface 18a14 for calculating price information related to the merchandise or services is provided in the controller 18a.

### (Processing to Register Sale in Server for Content Delivery)

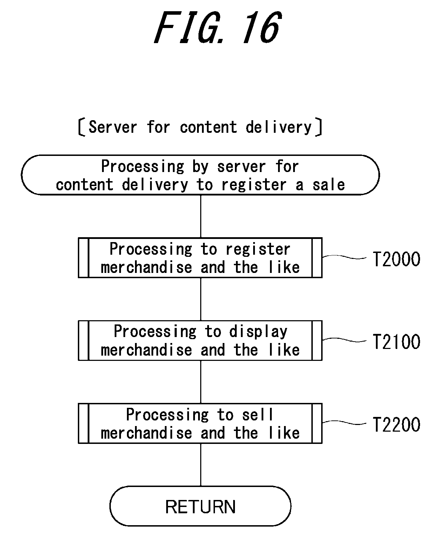

As illustrated in FIG. 16, the server for content delivery 18 for example executes processing to register merchandise and the like T2000, processing to display merchandise and the like T2100, and processing to sell merchandise and the like T2200. These processes are repeatedly performed either consecutively or individually. The processing to register a sale in the server for content delivery, illustrated in FIG. 16, may be executed by being added to a portion of the processing by the server for content delivery 18 illustrated in FIG. 8.

A configuration may be adopted in which at least a portion of the above-mentioned processing T2000, T2100, and T2200 is executed using the application 20A or 20B on the terminal 14A or 14B side or on the server for charge management 16 side.

### <Processing to Register Merchandise and the Like: T2000>

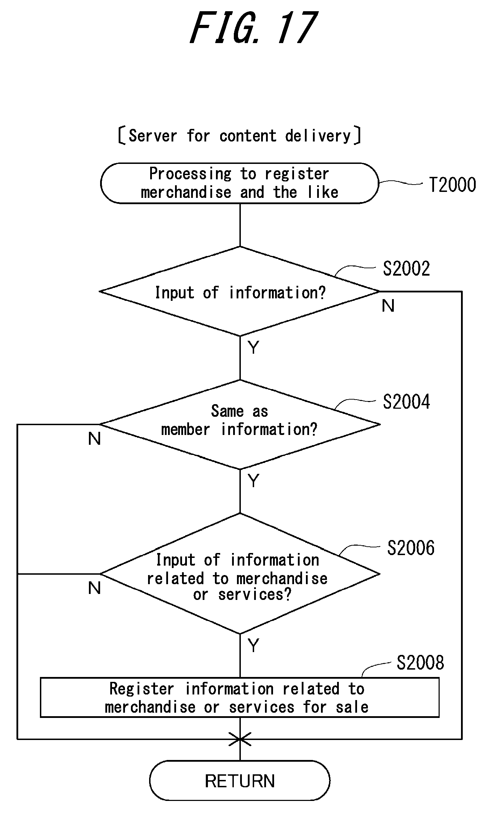

As illustrated in FIG. 17, in the processing to register merchandise and the like T2000, when information is received from the artist terminal 14B (S2002: YES), the identicalness determiner 18a3 determines whether the information is identical to member information (S2004).

Here, a configuration is adopted to allow the member information on an artist to be registered in the first memory area 18b1 of the memory 18b of the server for content delivery 18, and in S2004, it is confirmed whether the information is information registered in the first memory area 18b1.

When the information input from the artist terminal 14B is determined to already be registered as member information of an artist (S2004: YES), the artist is recognized as an official registrant, and the controller 18a determines whether information related to the merchandise or services for sale has been received from the artist terminal 14B (S2006).

When it is determined that input of information related to merchandise or services that are for sale has been received from the artist terminal 14B (S2006: YES), the information related to merchandise or services is registered in the fourth memory area 18b4 of the memory 18b of the server for content delivery 18 (S2008). Uploading of information related to merchandise or services for sale that is received from the artist terminal 14B is thus complete.

In this way, an artist can use the artist terminal 14B to register information related to merchandise or services for sale at any time on the server for content delivery 18.

Steps S2002 and S2004 can be omitted when, for example, the function for processing to register merchandise and the like is executed while the processes (functions) of the application 20B of the artist terminal 14B are already in use.

### <Processing to Display Merchandise and the Like: T2100>

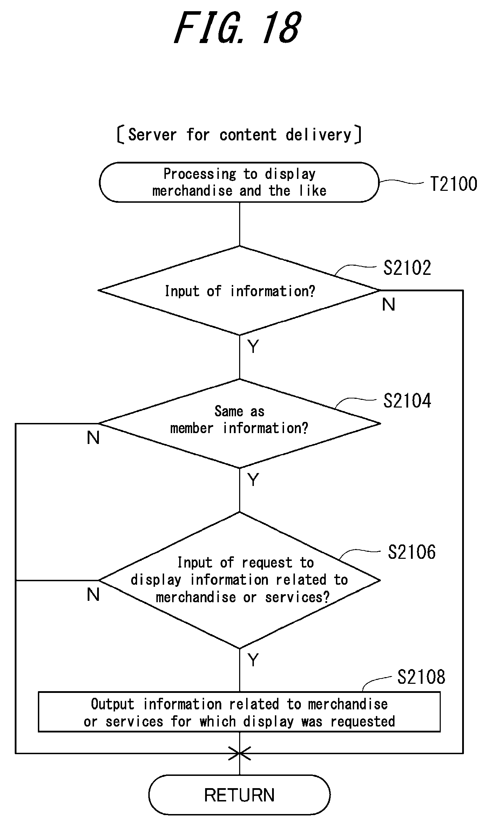

As illustrated in FIG. 18, in the processing to display merchandise and the like T2100, the controller 18a determines whether information has been received from the user terminal 14A (S2102). When it is determined that input of information has been received from the user terminal 14A (S2102: YES), the controller 18a determines whether the information has already been registered as member information of a user (S2104).

Here, a configuration is adopted to allow the member information on a user to be registered in the first memory area 18b1 of the memory 18b of the server for content delivery 18, and in S2104, it is confirmed whether the information is information registered in the first memory area 18b1.

When the controller 18a determines that the information received from the user terminal 14A is already registered as member information of an artist (S2104: YES), the user is recognized as an official registrant, and the controller 18a determines whether a request to display information related to predetermined merchandise or services has been received from the user terminal 14A (S2106).

When it is determined that a request to display information related to predetermined merchandise or services has been received from the user terminal 14A (S2106: YES), information related to the merchandise or services is read from the fourth memory area 18b4 of the memory 18b of the server for content delivery 18 and output from the merchandise and other information output interface 18a13 of the server for content delivery 18 to the user terminal 14A (S2108). In this way, information on merchandise or services that are the object of the display request can be displayed on the application 20A of the user terminal 14A.

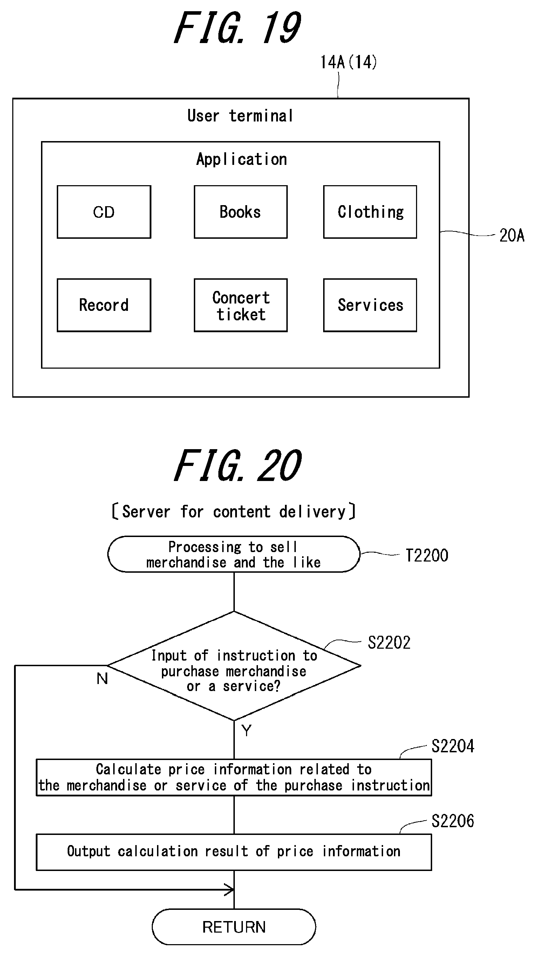

As illustrated in FIG. 19, on the display of the user terminal 14A, the information related to merchandise or services registered in the server for content delivery 18 is displayed in the application 20A. In this way, the user can search on the application 20A for information on merchandise or services in which the user is interested and make purchases as appropriate after comparing information.

The request from the user terminal 14A to display information related to predetermined merchandise or services may, for example, be issued by clicking on or otherwise operating the application 20A to output an instruction command for displaying the merchandise or services registered in the server for content delivery 18.

Steps S2002 and S2004 may be omitted when, for example, the function for displaying merchandise and the like is executed while the processes (functions) of the application 20A of the user terminal 14A are already in use.

On the display of the artist terminal 14B as well, the information related to merchandise or services registered in the server for content delivery 18 is similarly displayed in the application 20B.

### <Processing to Sell Merchandise and the Like: T2200>

The processing to sell merchandise and the like T2200 is, as a general rule, executed following the processing to display merchandise and the like T2100. Since consistency with registered member information has already been verified, the determination of identicalness with member information is skipped.

As illustrated in FIG. 20, in the processing to sell merchandise and the like T2200, the controller 18a determines whether a purchase instruction that selects predetermined merchandise or a predetermined service has been received from the user terminal 14A (S2202).

When it is determined that a purchase instruction selecting predetermined merchandise or a predetermined service has been received from the user terminal 14A (S2202: YES), the price of the merchandise or service is calculated by the price calculation output interface 18a14 of the controller 18a in the server for content delivery 18 (S2204). The price information calculated by the price calculation output interface 18a14 is output from the price calculation output interface 18a14 to the user terminal 14A (S2206). In this way, price information on the merchandise or service that is the object of the purchase instruction can be displayed on the application 20A of the user terminal 14A.

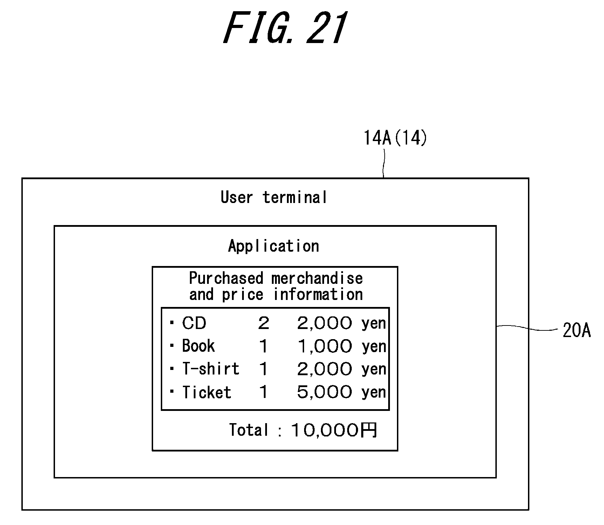

As illustrated in FIG. 21, on the display of the user terminal 14A, the price information related to the merchandise or service that is the object of the purchase instruction, information on the purchased merchandise, or the like are displayed in the application 20A. In this way, the user can acquire detailed information related to the user's purchase.

Existing means may be appropriately selected as the means for shipping the purchased merchandise or the like, and such information is also included as appropriate.

A purchase instruction selecting predetermined merchandise or a predetermined service from the user terminal 14A may, for example, be issued by clicking on or otherwise operating the application 20A to issue an instruction command for performing a procedure to purchase merchandise or services registered in the server for content delivery 18.

An example of processing to pay a fee is now described. Methods for the processing to pay a fee for example include a method to pay the corresponding price directly after the user or artist expresses an intention to purchase predetermined merchandise or a predetermined service, as well as a method to pay by credit, such as electronic money.

In the former case, payment is made at a predetermined location or to a predetermined institution before the merchandise or the like is shipped, or within a predetermined period of time after the merchandise arrives. In this case, the means of payment may be a transfer at a financial institution such as the bank or post office, transfer/payment at a shop such as a convenience store, payment by credit card, or the like.

In the latter case, the user or artist purchases predetermined electronic money in advance. As processing for purchase of electronic money, the purchase price is determined, and after payment to a predetermined institution, a special design indicating electronic money is displayed in a predetermined area of a liquid crystal display of the terminals 14A and 14B. While the special design may be of any form, a design that readily conjures up an image of money is preferred.

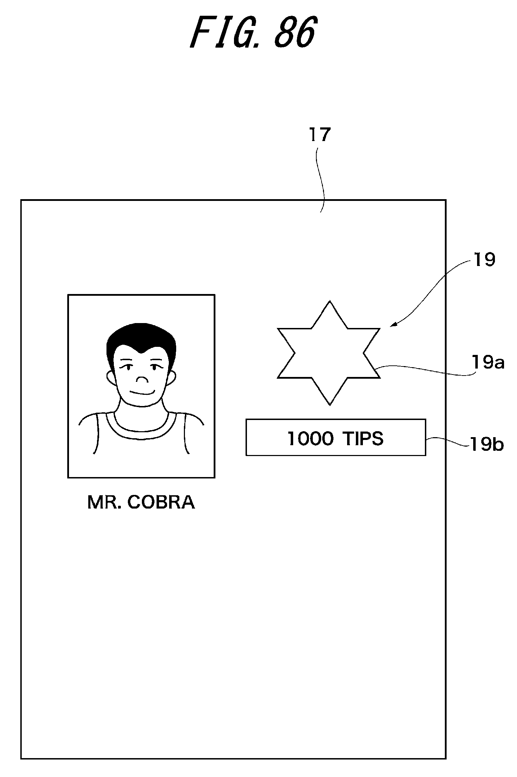

FIG. 86 illustrates an example of the special design. The example of a special design 19 is displayed on a management screen 17 via the terminals 14A and 14B and is a combination of a design 19a and a quantity display 19b indicating the price. An indicator or the like may also be used for the quantity display 19b. For example when 1,000 dollars are paid, 1,000 TIPS are provided and displayed as the quantity display 19b. The numerical information in the quantity display 19b varies in accordance with the payment amount, the purchase price, or the amount of reward.

Next, the configuration of the server for content delivery 18 is described.

### (Server for Content Delivery)

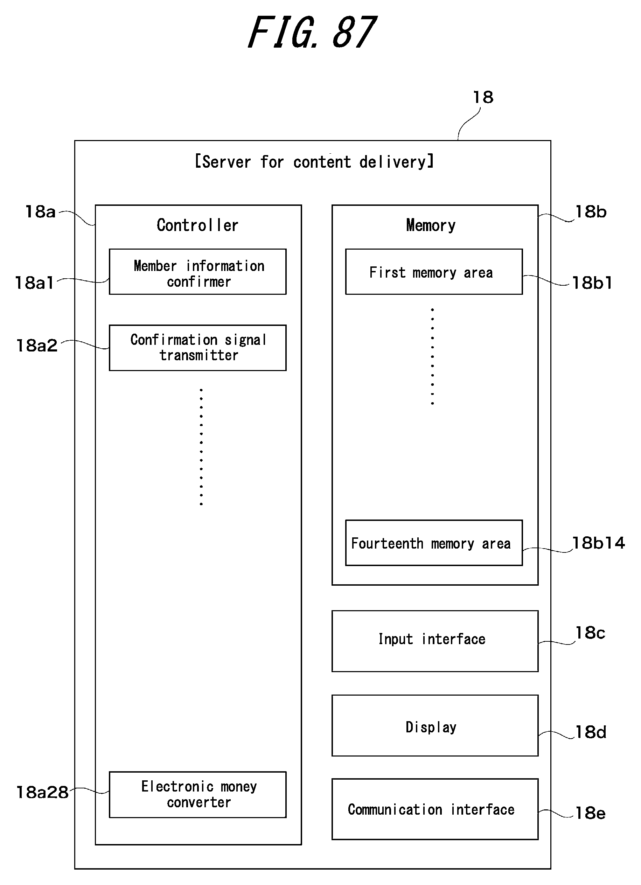

As illustrated in FIG. 87, the controller 18a of the server for content delivery 18 includes an electronic money converter 18a28. The electronic money converter 18a28 determines the correspondence relationship between the price required for purchase or the like and the quantity of electronic money. The memory 18b includes a fourteenth memory area 18b14. An electronic money table indicating the correspondence relationship between the price required for purchase or the like and the quantity of electronic money is stored in the fourteenth memory area 18b14. The electronic money converter 18a28 determines the quantity of electronic money based on the purchase price and the electronic money table. The display 18c can control display of the quantity of electronic money determined by the electronic money converter 18a28. As a result, the quantity of electronic money that the user has purchased can be displayed on a liquid crystal display or the like on the terminal side. The electronic money converter 18a28 also has the function of adjusting the quantity of electronic money when electronic money is first purchased and when predetermined merchandise or a predetermined service is purchased.

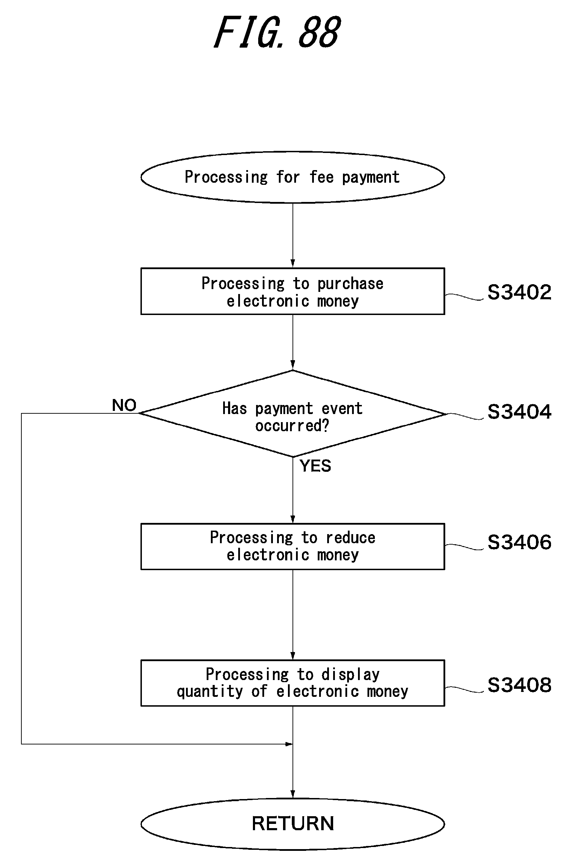

Next, an example of processing to pay a fee using electronic money is described. The flowchart in FIG. 88 assumes that the user or artist has purchased a predetermined purchase price of electronic money in advance and that a predetermined quantity of electronic money exists.

### <Processing for Fee Payment: T2300>

As illustrated in FIG. 88, processing to purchase electronic money is executed (S3402). For example, the user or artist pays a purchase price for electronic money to a predetermined institution. Payment of the purchase price may be made by accessing the server for content delivery 18 and expressing intent to purchase, and by inputting a personal credit card number or financial institution account number into the server for content delivery 18.

Next, the controller 18a of the server for content delivery 18 examines whether a predetermined payment event has occurred (S3404). A payment event for example corresponds to whether the user or artist has executed processing on the terminal 14A or 14B to purchase predetermined merchandise or a predetermined service. Specifically, when the user or artist executes processing on the terminal 14A or 14B to purchase predetermined merchandise or a predetermined service, a purchase request signal is output from the terminal 14A or 14B to the server for content delivery 18. The controller 18a of the server for content delivery 18 determines the information related to the purchase price from the purchase request signal and examines whether a predetermined payment event has occurred.

The electronic money converter 18a28 that is part of the controller 18a may examine whether a predetermined payment event has occurred.

Next, when a predetermined payment event has occurred (S3404: YES), the electronic money converter 18a28 identifies the quantity of electronic money corresponding to the purchase price of the merchandise or service and executes processing to reduce the current quantity of electronic money (S3406). Specifically, based on the purchase request signal from the terminal 14A or 14B, the electronic money converter 18a28 determines the purchase price of the merchandise or service. The quantity of electronic money corresponding to the purchase price is then subtracted from the current quantity of electronic money ((current quantity of electronic money) - (quantity of electronic money corresponding to purchase price) = quantity of electronic money after reduction processing).

Next, the display 18d of the server for content delivery 18 executes processing to display the quantity of electronic money after reduction processing (S3408). As a result, the quantity of electronic money after reduction processing is displayed on the terminal side.

When a user or artist purchases predetermined merchandise or a predetermined service, purchase processing that uses cash may be replaced by purchase processing that uses electronic money. Hence, purchasing processing and payment for merchandise or services can be made safer.

As described above, in Embodiment 1, the applications 20A and 20B can be provided with a function to purchase and sell merchandise or services. A sales contract can thus be concluded between the user and an artist, and activities to purchase and sell merchandise and the like can be supported smoothly.

Information by word-of-mouth relating to merchandise or services provided by the artist can also be registered via the user terminal 14A or artist terminal 14B in the memory 18b of the server for content delivery 18. A setting may also be made so that based on such word-of-mouth information, the controller 18a selects popular merchandise or the like or selects merchandise with a high degree of satisfaction, creates a tally for a predetermined ranking or the like, and outputs the tally to the user terminal 14A.

### [Example 2]

Next, Example 2 of a content delivery system and method of delivering content according to one of the disclosed embodiments is described with reference to the drawings. Structural elements that overlap with the structure of the content delivery system and method of delivering content according to the above Embodiments and to Example 1 are labeled with the same reference signs, and a description thereof is omitted.

Example 2 prescribes various calculations and processing when purchasing a concert ticket using a function to purchase and sell merchandise or services that is included as part of the functions of the application 20A downloaded and installed on the user terminal 14A or as part of the functions of the application 20B downloaded and installed on the artist terminal 14B.

The processing to purchase a concert ticket may be executed through payment with cash or through electronic money based on the processing for fee payment illustrated in FIG. 88.

In Example 2, in T2000 of FIG. 16, for example an artist or a related person uploads information (including date and time, price, seat number, location, artist name or group name, and the like; the same is true below) related to a concert ticket to the memory 18b of the server for content delivery 18 at a predetermined time via the application 20B.

In addition to the actual artist or group, a related person may for example include the manager for an artist or group, or the administrator of an entertainment office or the like to which the artist or group belongs.

In T2100 of FIG. 16, information related to the concert ticket for sale registered in the memory 18b of the server for content delivery 18 can be output to the user terminal 14A and can be displayed for example on the display of the user terminal 14A using the application 20A.

In T2200 of FIG. 16, a concert ticket that each user wants can also be purchased via the application 20A.

Similarly, in T2100 of FIG. 16, information related to the concert ticket for sale registered in the memory 18b of the server for content delivery 18 can also be output to the artist terminal 14B and can be displayed for example on the display of the artist terminal 14B using the application 20B.

In T2200 of FIG. 16, a concert ticket that each artist wants to purchase can also be purchased via the application 20B.

Processing for accounting required to sell a concert ticket is, for example, preferably executed by the server for charge management 16 and/or the server for content delivery 18. The processing is not limited to these servers, however, and may also be executed using electronic payment in an existing payment processing system.

### (Structure of Server for Content Delivery)

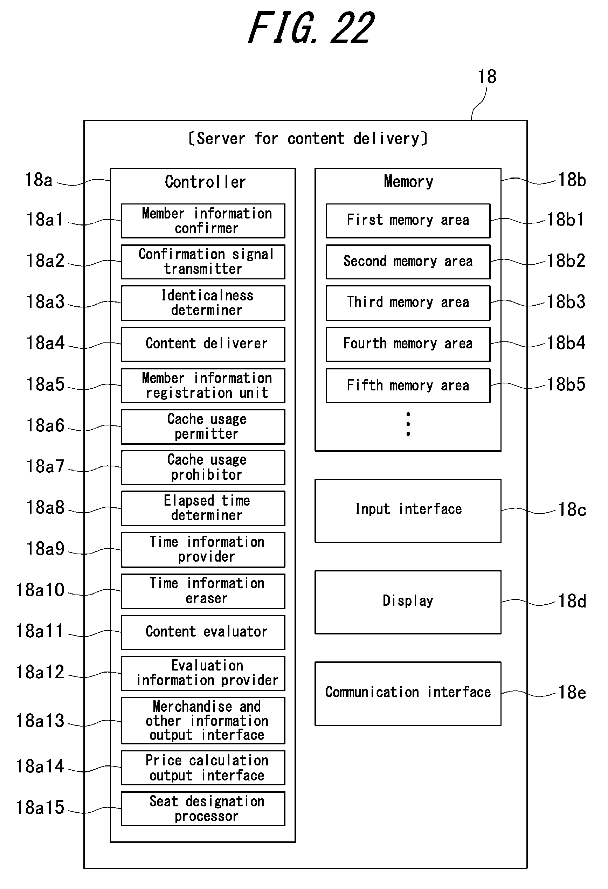

As illustrated in FIG. 22, information related to concert tickets for sale is stored in the fourth memory area 18b4 of the server for content delivery 18.

The merchandise and other information output interface 18a13 of the controller 18a outputs information related to a concert ticket to the user terminal 14A or the artist terminal 14B. The price calculation output interface 18a14 calculates price information related to the concert ticket in S2204 and S2206 of FIG. 20.

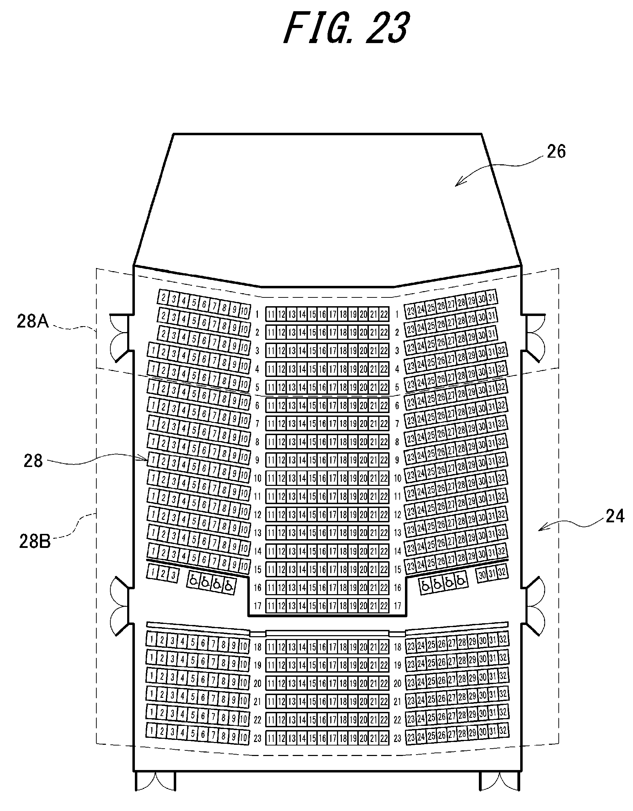

The controller 18a of the server for content delivery 18 includes a seat designation processor 18a15. Upon receiving an instruction to purchase a seat via the application 20A or 20B of the terminal 14A or 14B, the seat designation processor 18a15 designates the position of a seat in a concert hall 24 (see FIG. 23) based on a seat designation program PR1.

Information related to the seat, in the concert hall 24, that the purchaser wants is included in the instruction to purchase a seat. Here, information such as information related to the seat number and price is included in the information related to the seat in the concert hall 24.

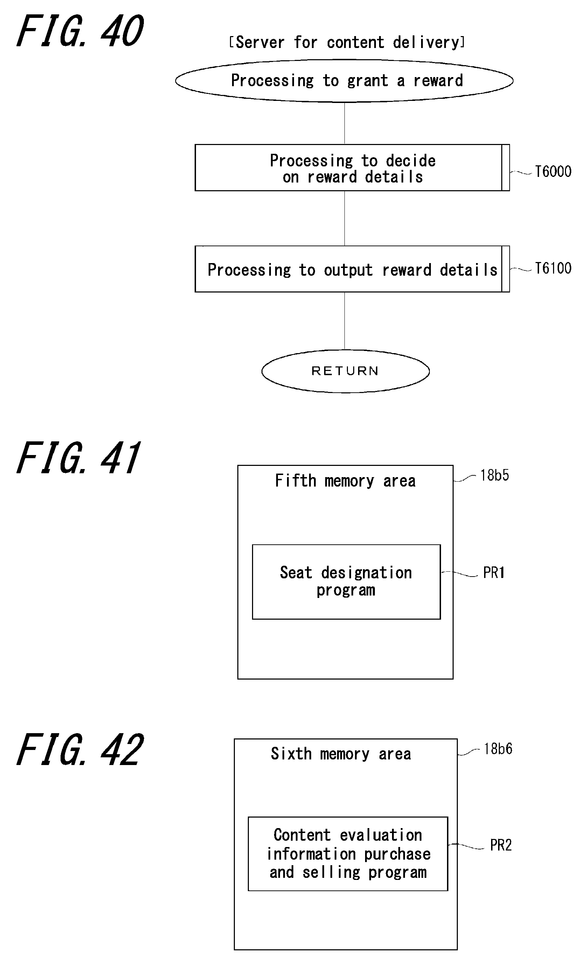

The memory 18b of the server for content delivery 18 includes a fifth memory area 18b5. As illustrated in FIG. 41, the fifth memory area 18b5 stores the seat designation program PR1 for designating a seat based on the following: seat information related to seats in the concert hall including VIP seats, priority seats, premium seats, and the like; seat designation information indicating the relationship between the type of concert ticket and the seat position; and the type of concert ticket designated by the user or artist via the application 20A or 20B.

As illustrated in FIG. 23, among all of the seats 28 in the concert hall 24, the VIP seats, priority seats, premium seats, and the like are in a special seating zone 28A assignable only when purchasing a concert ticket using the application 20A or 20B.

The special seating zone 28A is, for example, priority seating provided at a position near the stage 26, where the artist is easier to see than in a regular seating zone 28B that can be acquired by a regular sales route for concert tickets.

Within the seating zone 28A of VIP seats, priority seats, premium seats, and the like, seats may be distinguished between based on the price and type of concert ticket. The users and the like can thus designate and purchase a desired seat based on the price and type of concert ticket.

Therefore, when the user or artist purchases a concert ticket with the application 20A or 20B, the seat is assigned based on the seat designation program PR1 for the concert hall 24 taking into consideration the time of the concert ticket purchase, the price of the purchased concert ticket, and the like. As a result, when the user or artist purchases a concert ticket with the application 20A or 20B, a more attractive seat can be acquired than when purchasing by another route. Fans can thus get the very best seat.

Furthermore, purchasing concert tickets with the application 20A or 20B allows provision of a concert hall 24 in which more attractive seats are designated than when purchasing by another route. Fans of a particular artist will find the concert to be exceptional.

Example 2 provides motivation for installing the applications 20A and 20B, achieves smooth business transactions, and contributes to further development of music culture and the music industry.

For processing related to the sale of concert tickets in the server for content delivery, the flowcharts in FIGS. 16 to 18 and FIG. 20 may be used as appropriate. A description of this processing is omitted.

### [Example 3]

Next, Example 3 of a content delivery system and method of delivering content according to one of the disclosed embodiments is described with reference to the drawings. Structural elements that overlap with the structure of the content delivery system and method of delivering content according to the above Embodiments and Examples are labeled with the same reference signs, and a description thereof is omitted.

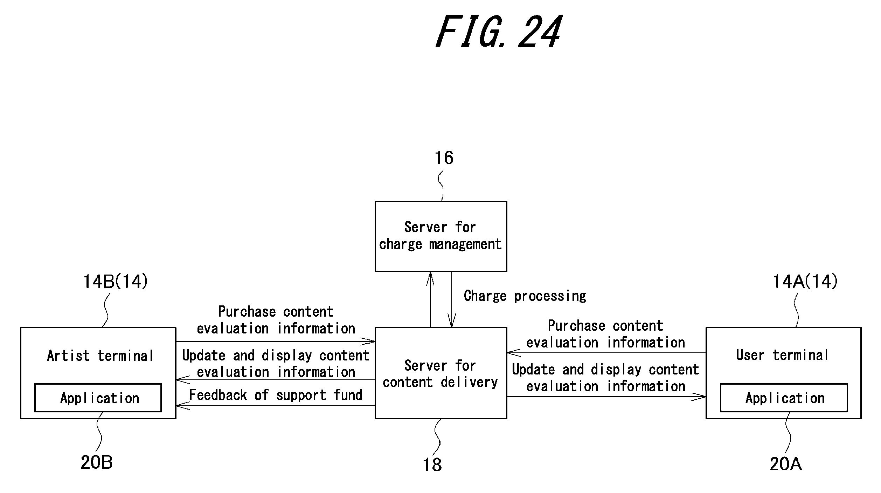

In Example 3, as illustrated in FIG. 24, the content evaluator 18a11 that is included as part of the functions of the application 20A downloaded and installed on the user terminal 14A or as part of the functions of the application 20B downloaded and installed on the artist terminal 14B can be used to purchase and sell evaluation information of various contents.

The user or artist can purchase evaluation information of a predetermined content using the applications 20A and 20B of the terminals 14A and 14B. For example, the user or artist accesses a screen, for purchasing and selling content evaluation information, that is displayed on the application 20A or 20B of the terminal 14A or 14B and finalizes the purchase of a desired content after expressing an intention to purchase by indicating a predetermined purchase price.

Content evaluation information is information indicating the evaluation of a predetermined content.

The method of purchase at this time may be set to be the same as when purchasing merchandise through conventional online shopping.

The processing to purchase content evaluation information may be executed through payment with cash or through electronic money based on the processing for fee payment illustrated in FIG. 88.

When content evaluation information for predetermined content is purchased, the content evaluation information for that content improves in accordance with the purchase price. Specifically, if the content evaluation information before purchase is displayed as "10 likes", the count of "likes" increases in accordance with the purchase price and for example changes to display "30 likes".

In this way, the evaluation of the content for which the purchase is made rises and can be visually confirmed as content evaluation information on the applications 20A and 20B of the terminals 14A and 14B.

The processing to purchase content evaluation information may, for example, be executed by the server for charge management 16. In this case, the server for charge management 16 requests that the buyer pay the purchase price.

Payment processing may be executed via electronic processing, such as online banking, or a paper invoice may be issued at a predetermined time, with payment being allowed at specific financial institutions, convenience stores, or the like. The buyer may also be charged by adding the purchase price on to the buyer's monthly membership fee for the following month or the like.

The price that the buyer pays to purchase the content evaluation information is accepted by the administrator who runs the server for content delivery 18 or the server for charge management 16.

The administrator then pays the entire amount paid by the buyer, or an amount (support fund) corresponding to a predetermined ratio based on a contract, to the artist who registered the content for which the purchase was made. This approach contributes to improving an artist's cash flow and can further enhance the artist's musical activity. At the same time, artists are also encouraged to participate in the music industry, thereby stimulating the music industry even more.

The processing to purchase content evaluation information may be executed by the server for content delivery 18.

### (Structure of Server for Content Delivery)

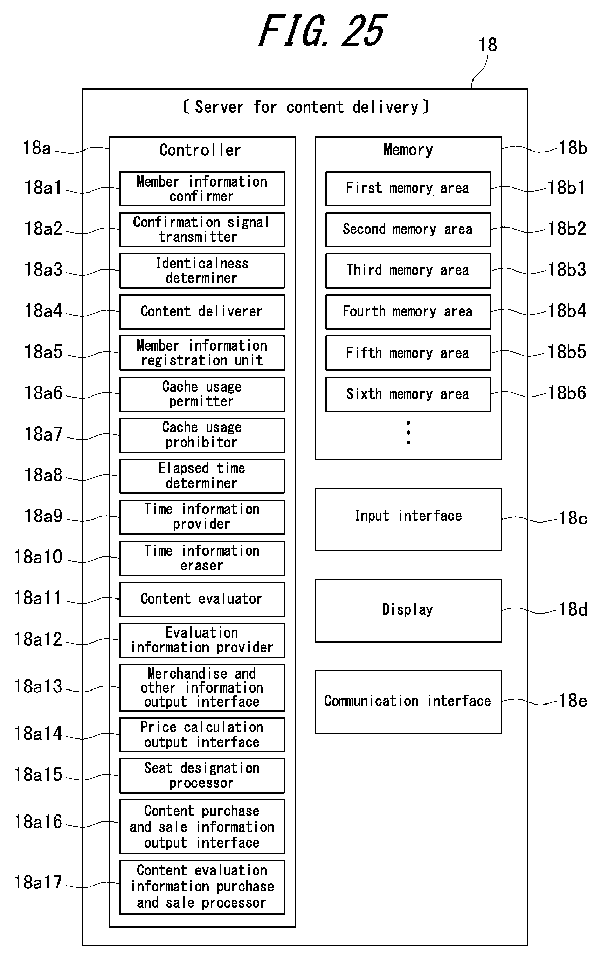

As illustrated in FIGS. 25 and 42, a sixth memory area 18b6 that stores a content evaluation information purchase and selling program PR2 for executing processing to purchase and sell content evaluation information and that stores information related to the content evaluation information that was purchased and sold (such as sale price, feedback price, and information on change in content evaluation) and the like is provided in the memory 18b of the server for content delivery 18.

For example, a content purchase and sale information output interface 18a16 for outputting purchase and sale information on content evaluation information to the terminals 14A and 14B and a content evaluation information purchase and sale processor 18a17 for executing processing to purchase and sell content evaluation information is provided in the controller 18a.

The content purchase and sale information output interface 18a16 receives an instruction to display content purchase and sale information via the application 20A or 20B and outputs the purchase and sale information on content evaluation information to the terminals 14A and 14B.

The content evaluation information purchase and sale processor 18a17 receives an instruction to purchase content evaluation information via the application 20A or 20B and executes processing to purchase and sell content evaluation information.

### (Processing to Purchase and Sell Content Evaluation Information in Server for Content Delivery)

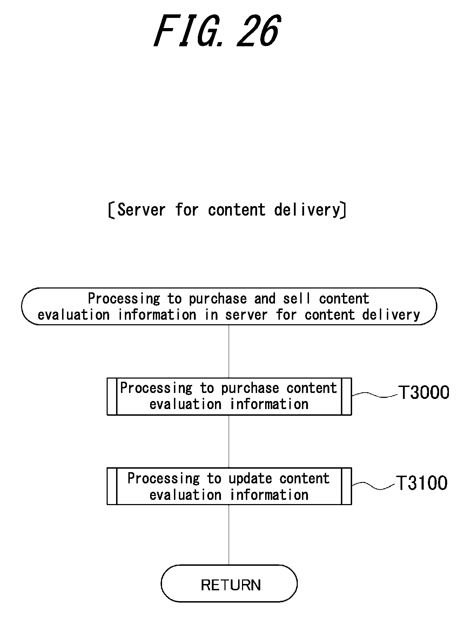

As illustrated in FIG. 26, the server for content delivery 18 for example executes processing to purchase content evaluation information T3000 and processing to update content evaluation information T3100. These processes are repeatedly performed either consecutively or individually. The processing to purchase and sell content evaluation information in the server for content delivery illustrated in FIG. 26 may be executed by being added to a portion of the processing by the server for content delivery 18 illustrated in FIG. 8.

A configuration may be adopted in which at least a portion of the above-mentioned processing T3000 and T3100 is executed using the application 20A or 20B on the terminal 14A or 14B side or on the server for charge management 16 side.

Here, the above description of the processing to register content evaluation information T1400 illustrated in FIG. 8 is supplemented. In the processing to register content evaluation information T1400, the content evaluator 18a11 evaluates each content based on information input from the terminals 14A and 14B (for example, a signal generated by a one-click operation on a display button) (S1402, S1404).

For example, the content evaluator 18a11 counts the input information or the number of times information is input and evaluates each content based on the total or the like.

The content evaluator 18a11 preferably includes, for example, a CPU, timer, or the like suited for counting the input information.

The matter evaluated by the content evaluator 18a11 is saved in the second memory area 18b2 and the sixth memory area 18b6 of the memory 18b for each content. Therefore, the details on the evaluation of each content, specifically a cumulative overall evaluation, is stored in the second memory area 18b2 and the sixth memory area 18b6.

The evaluation information provider 18a12 of the controller 18a provides each content with predetermined information that reflects the evaluation stored in the second memory area 18b2 and the sixth memory area 18b6 (S1406). As the evaluation information, for example information generated by a combination of numbers, characters, and graphics, such as "985 likes" or "7 likes", is used.

In this example, the numbers have value as information representing the degree of evaluation. A larger number can be judged to indicate a relatively higher evaluation and a smaller number to indicate a relatively lower evaluation.

The processing to purchase and sell content evaluation information in FIG. 26 implements the purchase and sale of evaluation information on each content registered in the processing to register content evaluation information T1400. Details are described below.

### <Processing to Purchase Content Evaluation Information: T3000>

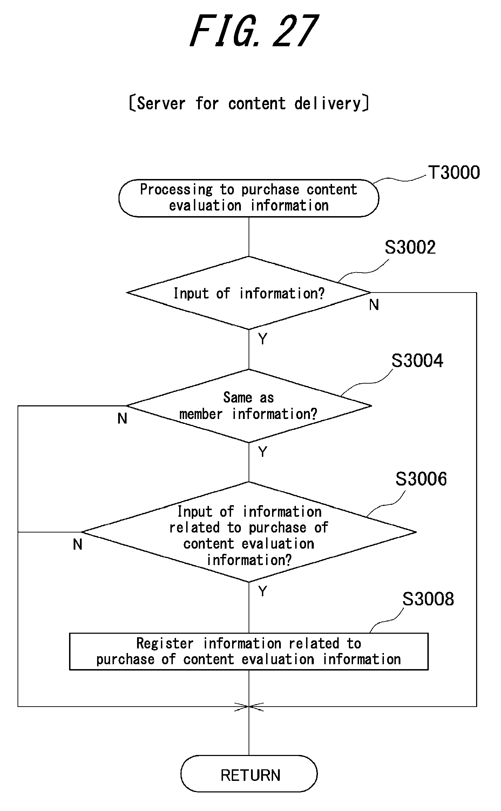

As illustrated in FIG. 27, in the processing to purchase content evaluation information T3000, when information is received from the terminal 14A or 14B (S3002: YES), the identicalness determiner 18a3 determines whether the information is identical to member information (S3004).

Here, a configuration is adopted to allow the member information to be registered in the first memory area 18b1 of the memory 18b of the server for content delivery 18, and in S3004, it is confirmed whether the information is information registered in the first memory area 18b1.

Information related to the user or artist is included in the member information.

When the information input from the terminal 14A or 14B is determined to have already been registered as member information (S3004: YES), the user or artist is recognized as an official registrant, and the controller 18a determines whether information related to the purchase of content evaluation information has been received from the terminal 14A or 14B via the application 20A or 20B (S3006).

When it is determined that information related to the purchase of content evaluation information has been received from the terminal 14A or 14B via the application 20A or 20B (S3006: YES), the information related to the purchase of content evaluation information is registered in the sixth memory area 18b6 of the memory 18b in the server for content delivery 18 (S3008). As a result, the information related to the purchase of content evaluation information (the content corresponding to the purchased content evaluation information, the purchase price, and the like) is stored along with the purchase time.

People can thus purchase content evaluation information for content that they like.

Steps S3002 and S3004 may be omitted when information has already been input during prior use of the processing (functions) of the application 20A or 20B of the terminal 14A or 14B.

An example of a display screen on each terminal when purchasing content evaluation information of a predetermined content is described here, using the terminal 14A and the application 20A as an example.

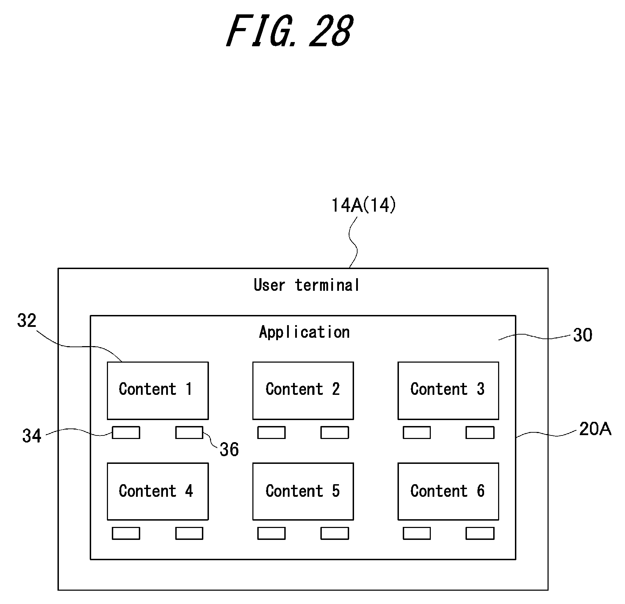

As illustrated in FIG. 28, a purchase and sale information display screen 30 is displayed in a predetermined area in the application 20A of the terminal 14A by the content purchase and sale information output interface 18a16 of the controller 18a in the server for content delivery 18. For example, a plurality of contents 32 (contents 1 to 6 in FIG. 28), along with an evaluation information display 34 and a purchase information input interface 36 corresponding to each content, are displayed on the purchase and sale information display screen 30.

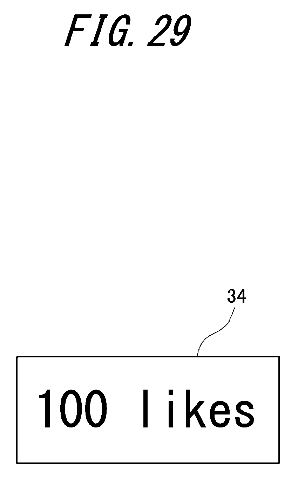

The evaluation information display 34 may, for example, be displayed as "100 likes" as in FIG. 29. This means that the positive evaluation "like" was pressed 100 times. A larger number of "likes" means that the corresponding content is more highly evaluated.

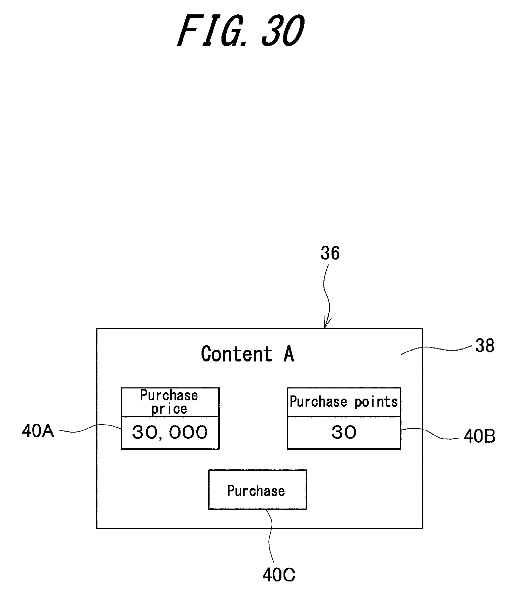

Once the purchase information input interface 36 is clicked, for example an evaluation information purchase screen 38 is displayed, as in FIG. 30. For example a purchase price input interface 40A, purchase point input interface 40B, and purchase decider 40C are displayed on the evaluation information purchase screen 38.

The purchase price input from the terminal 14A is, for example, displayed in the purchase price input interface 40A.

For example, the number of points to be purchased input from the terminal 14A or the number of points corresponding to the purchase price input from the terminal 14A is displayed in the purchase point input interface 40B.

The purchase decider 40C is a button (i.e. an icon) for expressing a decision to purchase after inputting the purchase price or the number of points to purchase. For example, once the purchase decider 40C in the application 20A of the terminal 14A is clicked, a signal indicating a decision to purchase is output to the server for content delivery 18 and/or the server for charge management 16. As a result, the transaction is finalized, an amount of content evaluation information for the content corresponding to the number of purchase points for the content is added, and payment processing is executed on the server for content delivery 18 and/or the server for charge management 16.

### <Processing to Update Content Evaluation Information: T3100>

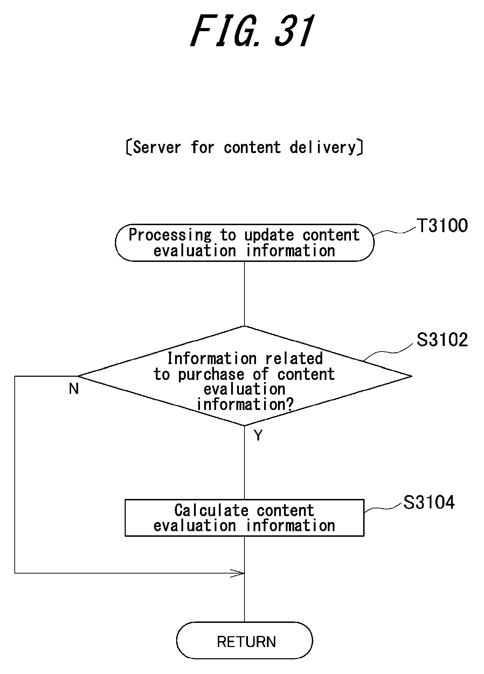

As illustrated in FIG. 31, in the processing to update content evaluation information T3100, the content evaluation information purchase and sale processor 18a17 determines whether information related to the purchase of content evaluation information has been received from the terminal 14A or 14B via the application 20A or 20B (S3102).

The determination of whether information related to the purchase of content evaluation information has been received may, for example, be made by determining whether a signal, which is output from the terminal side by a click operation or the like on the purchase decider 40C, indicating a decision to purchase has been input into the server for content delivery.

When the content evaluation information purchase and sale processor 18a17 determines that information related to the purchase of content evaluation information has been received (S3102: YES), then based on the purchase price and the number of purchased points, the content evaluation information purchase and sale processor 18a17 calculates the content evaluation information of the content that was the object of purchase (S3104).

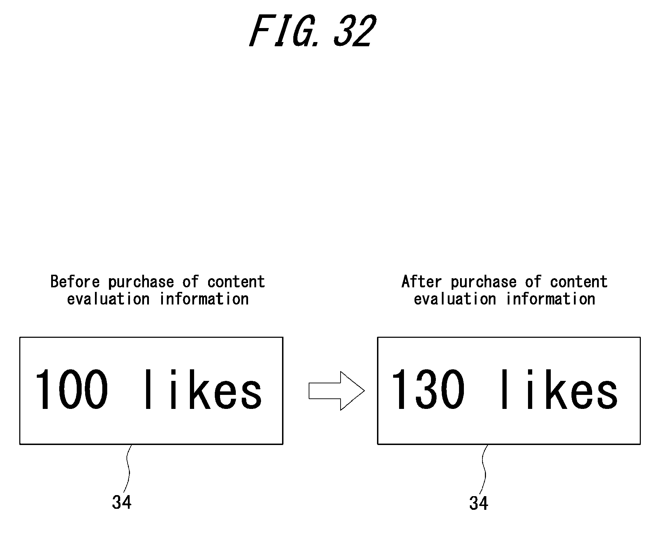

Here, in the step to calculate the content evaluation information, for example the number of purchased points is added to the current number of points. Specifically, as illustrated in FIG. 32, when the number of points of a predetermined content before purchase is "100 likes", and the number of purchased points is 30, then the points are added as "100 likes" + "30 likes" = "130 likes".

The content evaluation information after the update processing is, for example, saved in the sixth memory area 18b6 of the memory 18b.

The result of processing to update the content evaluation information can be displayed using the applications 20A and 20B of the terminals 14A and 14B. Users or the like can thus purchase content evaluation information for content by an artist that they support.

When content evaluation information is purchased, the content evaluation information of the corresponding content is updated. Therefore, the artist is motivated to engage in musical activity and is provided a path or an opportunity to become a well-selling, famous artist. The music industry is therefore also stimulated. Furthermore, all or a portion of the purchase price is passed on to the artist as a support fund, thus allowing personal music promotion that also combines fundraising.

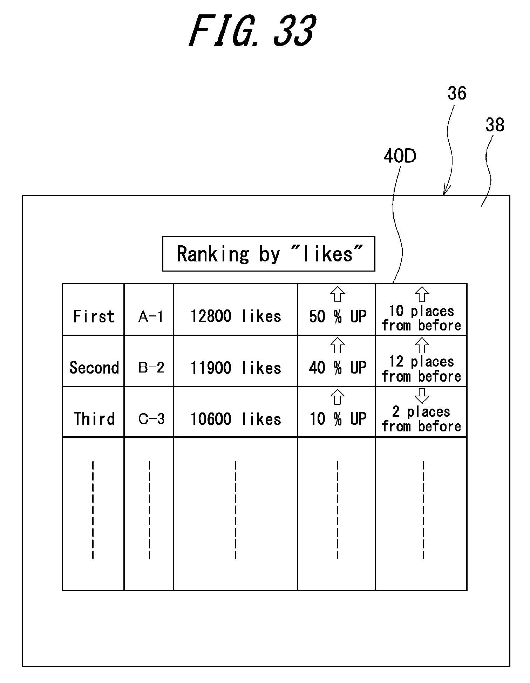

For example, as illustrated in FIG. 33, a content ranking display 40D may be provided in the evaluation information purchase screen 38 displayed when clicking on the purchase information input interface 36. A ranking by "likes" is, for example, displayed in the content ranking display 40D.

As an example of the ranking by "likes", for example the name and content number of the top-ranked contents, the number of likes, the rate of increase (or rate of decrease) in the number of likes from the previous ranking, the rate of increase (or rate of decrease) in the position from the previous ranking, and the like at a predetermined time are displayed. The display of this information is updated at predetermined times.

As a result, the position of the artist being supported among all of the artists, popular contents, and the like can be confirmed with the content ranking display 40D. Therefore, users can learn the popularity of artists that they like and are further encouraged to engage in support activities.

The content evaluation information may also be purchased via the terminal 14B and the application 20B.

### (Processing for Artist Support Fund Feedback in Server for Content Delivery)

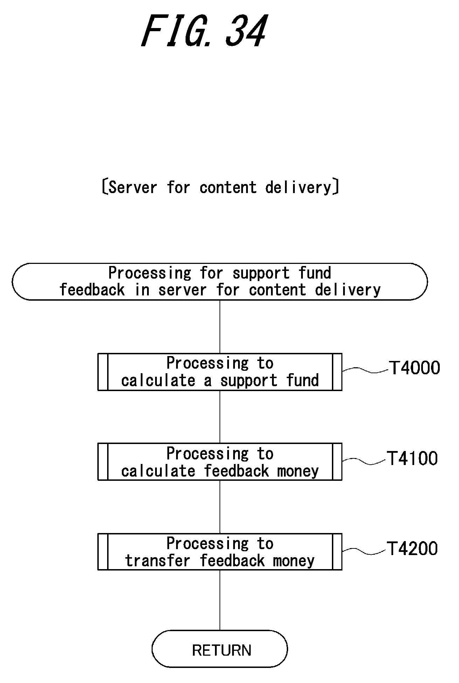

As illustrated in FIG. 34, the server for content delivery 18 for example executes processing to calculate a support fund T4000, processing to calculate feedback money T4100, and processing to transfer feedback money T4200. These processes are repeatedly performed either consecutively or individually. The processing for artist support fund feedback in the server for content delivery, illustrated in FIG. 34, may be executed by being added to a portion of the processing by the server for content delivery 18 illustrated in FIG. 8.

The processing for artist support fund feedback may be executed on the server for charge management 16 side.

In the processing to calculate a support fund T4000, the content evaluation information purchase and sale processor 18a17 executes processing to determine the artist and content corresponding to the content evaluation information purchased by the user or the like and to calculate the total amount of the purchase price. In this processing, for example calculation may be made based on information output from the server for charge management 16, or the server for content delivery 18 may make a calculation based on information related to the purchase and sale of content evaluation information output from the terminals 14A and 14B.

In the processing to calculate feedback money T4100, the content evaluation information purchase and sale processor 18a17 executes processing to calculate the amount of the support fund for the artist to whom the purchased content evaluation information belongs, based on the total amount of the purchase price calculated in the processing to calculate the support fund T4000. The amount of the support fund is calculated based on a predetermined feedback money calculation program.

The feedback money calculation program is, for example, saved in the sixth memory area 18b6 of the memory 18b in the server for content delivery 18.

The feedback money calculation program is, for example, a program that determines the amount of the support fund for the artist to be an amount corresponding to a predetermined proportion of the purchase price. The amount other than the support fund paid to the artist is, for example, allocated as an administration reward or the like paid to the administrator.

Other than being used as a support fund paid to the artist, this money may for example be allocated as a reward for an artist whose content is replayed a high number of times.

Specifically, the content evaluator 18a11 counts the number of times content is replayed, displays a ranking of the top-ranked artists, and pays a reward of a predetermined proportion to the top-ranked artist(s). There may be one or multiple top-ranked artists. In the case of multiple top-ranked artists, the reward may be paid by varying the proportion of the reward in accordance with the ranking of the number of times content is replayed.

In the processing to transfer feedback money T4200, processing to notify the artist and to pay the support fund calculated in the processing to calculate feedback money T4100 is executed.

The artist may be notified of the support fund by, for example, sending an e-mail to an e-mail address that the artist registered in advance.

The artist may be paid the support fund by, for example, a transfer to a predetermined account at a financial institution or by using an existing payment processing system.

According to Example 3, content evaluation of a content can be purchased and sold via the applications 20A and 20B of the terminals 14A and 14B. Therefore, people can purchase content evaluation information for predetermined content as a way of investing in an artist that they support. By content evaluation information for content being purchased, the evaluation of the artist's content improves, attracting the attention of more users and allowing self-promotion.

At the same time, a portion of the purchase price from the user is paid to the artist as a support fund. This improves artists' cash flow, allowing artists to further devote themselves to musical activity. As a result, the music industry is stimulated, thus contributing to further development of the music industry.

### [Example 4]

Next, Example 4 of a content delivery system and method of delivering content according to one of the disclosed embodiments is described with reference to the drawings. Structural elements that overlap with the structure of the content delivery system and method of delivering content according to the above Embodiments and Examples are labeled with the same reference signs, and a description thereof is omitted.

Example 4 relates to a function to use an acceleration sensor or a vibration sensor installed in the user terminal 14A or the artist terminal 14B in order for all of the users and artists to compete over the degree of excitement and degree of support at an artist's live event. The following illustrates and describes an example of an acceleration sensor 14a1 in the user terminal 14A.

### (Structure of Terminal)

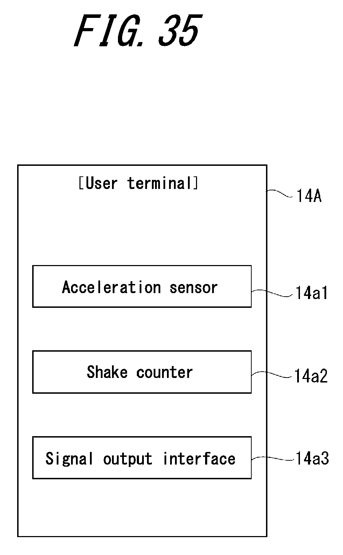

As illustrated in FIG. 35, the user terminal 14A for example includes the acceleration sensor 14a1, a shake counter 14a2, and a signal output interface 14a3.

A sensor preinstalled in the user terminal 14A may, for example, be used as the acceleration sensor 14a1. When the user holds and shakes the user terminal 14A, the acceleration sensor 14a1 for example detects vibration based on a change in acceleration occurring in the terminal 14A. The principle of detection by the acceleration sensor 14a1 is based on a known principle, and therefore a description thereof is omitted.

The shake counter 14a2 is configured integrally with or separately from the acceleration sensor 14a1 and counts the number of times vibration is detected by the acceleration sensor 14a1. The shake counter 14a2 for example receives a detection signal output by the acceleration sensor 14a1 and counts the number of vibrations based on the number of times the detection signal is received. Based on the detection signal from the acceleration sensor 14a1, the shake counter 14a2 also generates a count signal indicating the number of vibrations of the user terminal 14A.

The signal output interface 14a3 for example outputs the detection signal output from the acceleration sensor 14a1 and the count signal output from the shake counter 14a2 to the server for content delivery 18 or the server for charge management 16. The signal output interface 14a3 may be provided as a function of the applications 20A and 20B, and the detection signal and count signal may be output via the applications 20A and 20B.

While a description of the structure of the artist terminal 14B is omitted, a similar structure as that of the user terminal 14A may be adopted.

### (Structure of Server for Content Delivery)

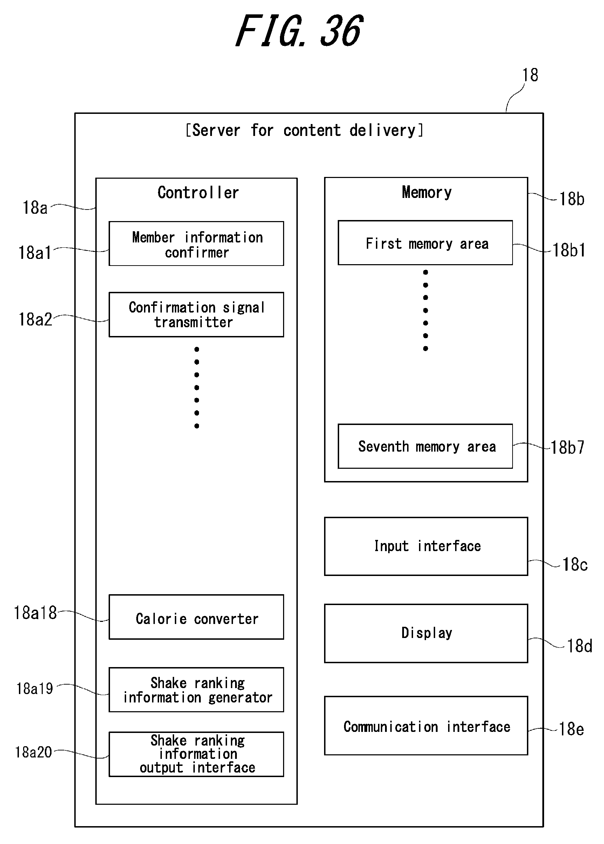

As illustrated in FIG. 36, the controller 18a of the server for content delivery 18 for example includes a calorie converter 18a18, a shake ranking information generator 18a19, and a shake ranking information output interface 18a20.

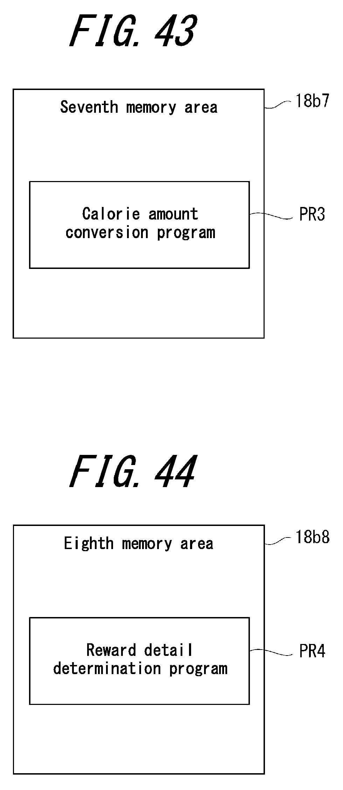

Based on the count signal output from the user terminal 14A, the calorie converter 18a18 performs a conversion to a predetermined calorie amount and generates calorie amount data indicating the calorie amount. Conversion to the calorie amount is, for example, based on a calorie amount conversion program PR3 saved in a seventh memory area 18b7 of the memory 18b, as illustrated in FIG. 43. The calorie amount data yielded by the calorie converter 18a18 is, for example, saved in the seventh memory area 18b7 of the memory 18b.

Based on calorie amount data generated by the calorie converter 18a18, the shake ranking information generator 18a19 generates information related to a ranking indicating the relative superiority of calorie amounts. The information related to the ranking may, for example, be named "shake ranking information".

For example, a count signal is output to the server for content delivery 18 from a plurality of user terminals 14A and artist terminals 14B, and based on these count signals, calorie amount data indicating calorie amounts is generated by the calorie converter 18a18. The shake ranking information generator 18a19 compares the calorie amount data and generates shake ranking information that ranks the calorie amounts in order from the largest amount. As illustrated in FIG. 43, the shake ranking information is saved as data, for example in the seventh memory area 18b7 of the memory 18b.

When the server for content delivery 18 is accessed by the user terminal 14A and the artist terminal 14B via the applications 20A and 20B, the shake ranking information output interface 18a20 outputs shake ranking information so that the shake ranking information can be displayed on the terminals 14A and 14B via the applications 20A and 20B.

Alternatively, the shake ranking information output interface 18a20 may create shake ranking content indicating shake ranking information or update the content. This content can be displayed on the terminals 14A and 14B via the applications 20A and 20B.

As illustrated in FIGS. 36 and 43, the memory 18b of the server for content delivery 18 for example includes a seventh memory area 18b7. For example, calorie amount data, data related to count detection, data indicating a shake value, data indicating shake ranking, and the like are saved in the seventh memory area 18b7 along with the calorie amount conversion program PR3.

The calorie amount conversion program PR3 is, for example, data (such as a table) indicating the correspondence relationship between the count by the acceleration sensor, acquirable from the count signal, and the calorie amount.

### (Processing to Calculate Ranking of Calorie Amounts in Server For Content Delivery)

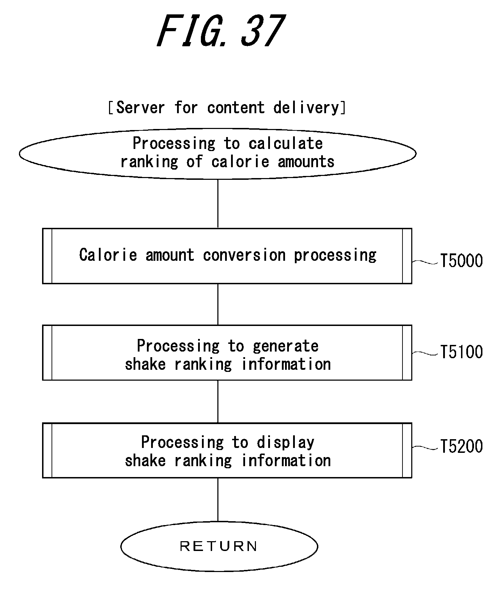

As illustrated in FIG. 37, the server for content delivery 18 executes processing to calculate the ranking of calorie amounts, which for example includes calorie amount conversion processing T5000, processing to generate shake ranking information T5100, and processing to display shake ranking information T5200. These processes are performed either consecutively or individually at predetermined times. The processing to calculate the ranking of calorie amounts in the server for content delivery 18, illustrated in FIG. 37, may be executed by being added to a portion of the processing by the server for content delivery 18 illustrated in FIG. 8.

A configuration may be adopted in which at least a portion of the above-mentioned processing T5000, T5100, and T5200 is executed using the application 20A or 20B on the terminal 14A or 14B side or on the server for charge management 16 side.

### <Calorie Amount Conversion Processing: T5000>

In the calorie amount conversion processing T5000, for example when a predetermined acceleration occurs or a change in the acceleration occurs on the user terminal 14A or the like, a count signal is output from the user terminal 14A or the like to the server for content delivery 18.

The case of a certain acceleration or a change in the acceleration occurring on the user terminal 14A may, for example, arise when a user, who is participating in a live event of an artist that the user likes, dances or moves rhythmically while wearing or holding the user terminal 14A. Acceleration may also occur or change in the user terminal 14A due to the user exercising by running, walking, or the like while wearing the user terminal 14A. By the user terminal 14A being held against the user's body, acceleration occurs or changes in the user terminal 14A.

Acceleration and changes in acceleration occurring in the artist terminal 14B can be considered in the same way.

The calorie amount conversion processing T5000 is similar when, in addition to the count signal, for example a signal including a detection signal is output from the user terminal 14A or the like to the server for content delivery 18.

Here, a function to output the count signal from the terminals 14A and 14B to the server for content delivery 18 may, for example, be provided in advance in the program functions of the applications 20A and 20B, or the controller 18a may be provided with a function for transmitting the count signal. In this way, a count signal can be output from the signal output interface 14a3 of each terminal 14A to the server for content delivery 18. On the terminal 14A or 14B, by selecting a predetermined shake count function (not illustrated) while the application 20A or 20B is launched, the number of vibrations can be detected by the acceleration sensor 14a1, and the corresponding count signal can easily be output.

When the count signal is output to the server for content delivery 18, the calorie converter 18a18 converts the count signal to a predetermined calorie amount based on the count signal output from the user terminal 14A and the calorie amount conversion program PR3 saved in the seventh memory area 18b7 of the memory 18b. The calorie converter 18a18 then generates calorie amount data indicating the calorie amount. The calorie amount data yielded by the calorie converter 18a18 is, for example, saved in the seventh memory area 18b7 of the memory 18b.

In the calorie amount conversion processing T5000, conversion to a calorie amount is performed using the calorie amount conversion program PR3, based on the count signal output from the terminal 14A or 14B. Therefore, the amount of energy for producing acceleration or for producing a change in acceleration in the terminal 14A or 14B can be learned.

### <Processing to Generate Shake Ranking Information: T5100>

In the processing to generate shake ranking information T5100, based on calorie amount data generated by the calorie converter 18a18, the shake ranking information generator 18a19 generates information related to a ranking. The ranking is, for example, a ranking of the amounts of energy in order from the largest amount and indicates information related to the top-ranked user(s). Since calorie amount data is generated for each terminal, the information related to the top-ranked user(s) may, for example, include the amount of energy, the name of the top-ranked user(s), and the like. In this way, it becomes clear which user is exercising or engaging in a support activity for an artist or the like. The shake ranking information is saved as data, for example in the seventh memory area 18b7 of the memory 18b.

In the processing to generate shake ranking information T5100, the calorie amount consumed by each user or artist or the amount of exercise can be recorded as the shake ranking information. Such shake ranking information can be used for various marketing activities as data on individual users.

### <Processing to Display Shake Ranking Information: T5200>

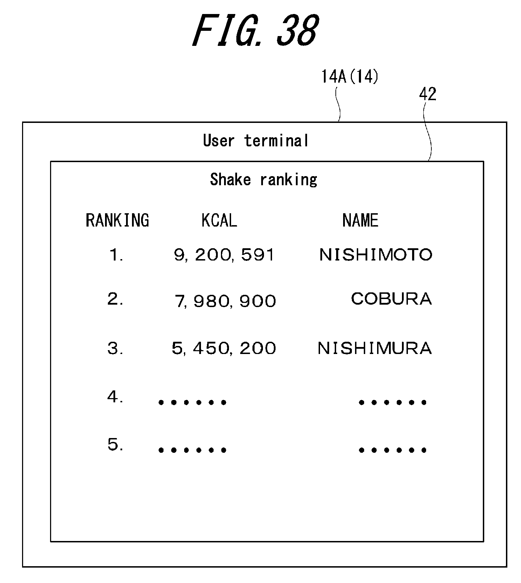

In the processing to display shake ranking information T5200, when the server for content delivery 18 is accessed by the user terminal 14A and the artist terminal 14B via the applications 20A and 20B, the shake ranking information output interface 18a20 outputs shake ranking information so as to be displayable on the terminals 14A and 14B via the applications 20A and 20B. As a result, as illustrated in FIG. 38, a shake ranking table is displayed in a predetermined shake ranking display screen 42 on the terminals 14A and 14B via the applications 20A and 20B.

The shake ranking table for example includes the calorie amount and the name of the top-ranked user(s). The shake ranking table makes it obvious who is most enthusiastically exercising or engaging in a support activity for an artist.

A superb business model that uses IT technology and contributes to the top-ranked person(s) in the shake ranking has been conceived. This business model may, for example, be called processing to grant a reward to the top-ranked person(s) in the shake ranking.

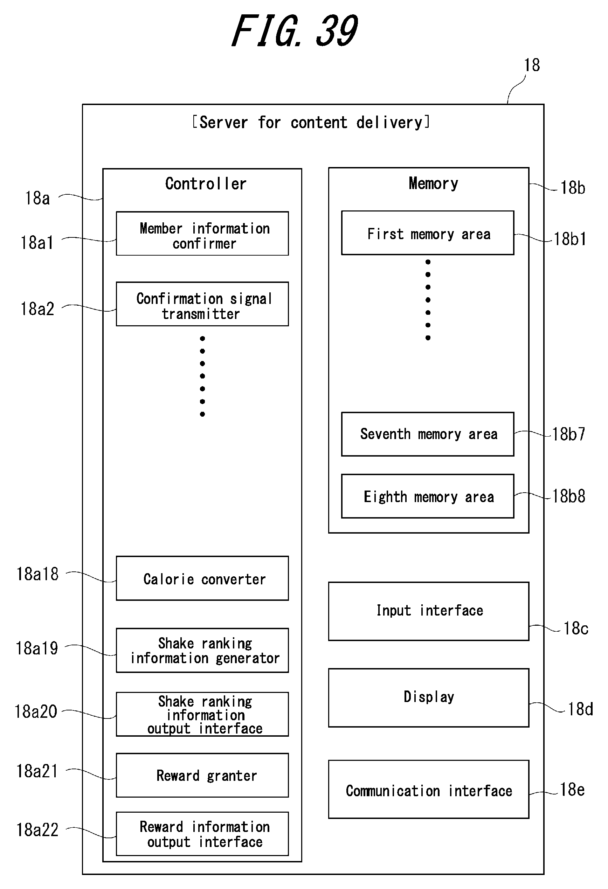

As illustrated in FIG. 39, the controller 18a of the server for content delivery 18 may for example include a reward granter 18a21.

The reward granter 18a21 decides on a reward amount for a user or artist who is to be commended in accordance with prescribed regulations. The reward granter 18a21 has a function not only to decide on a reward for the top-ranked person(s) in the shake ranking, but also for a predetermined user or artist based on all types of data that can be acquired with the server for content delivery 18.

Based on the shake ranking information generated by the shake ranking information generator 18a19, the reward granter 18a21 decides on the reward details. The reward details for example include information related to the rewarded person, the amount of the reward, and the like. The reward details are specified based on the reward detail determination program PR4 illustrated in FIG. 44. As illustrated in FIG. 44, the reward detail determination program PR4 is for example saved in an eighth memory area 18b8 of the memory 18b.

As illustrated in FIG. 39, the controller 18a of the server for content delivery 18 may for example include a reward information output interface 18a22.

The reward information output interface 18a22 outputs the reward information decided on by the reward granter 18a21 to a predetermined terminal 14A or 14B or to the server for charge management 16. As a result, the recipient can be notified of the reward details, and reward payment processing proceeds smoothly.

### (Processing to Grant a Reward in Server for Content Delivery)

The processing to grant a reward to the top-ranked person(s) in the shake ranking is now described. The processing to grant a reward may, for example, be executed by the server for content delivery 18. Another server, however, such as the server for charge management 16, may execute this processing.

As illustrated in FIG. 40, the processing to grant a reward for example includes processing to decide on reward details T6000 and processing to output reward details T6100.

### <Processing to Decide on Reward Details: T6000>

In the processing to decide on reward details T6000, the reward granter 18a21 decides on reward details based on the shake ranking information and the reward detail determination program PR4. To decide on the reward details, for example the top-ranked person(s) in the shake ranking are selected, and a monetary award of a predetermined amount provided by a supporting company or the like is decided on. Besides a monetary award, the right to display an advertisement in a predetermined area of the application 20A or 20B may be provided.

Groups that are grouped by artist may also be made to compete over the shake ranking. For example, users may be grouped by artist, the groups may compete over the calorie amount, i.e. the amount of energy, and a ranking may be displayed. The reward granter 18a21 may also decide to grant a predetermined reward to the artist supported by the top-ranked group.

The reward details decided on in the processing to decide on reward details T6000 may, for example, be saved in the eighth memory area 18b8 illustrated in FIG. 44 as reward decision information.

### <Processing to Output Reward Details: T6100>

In the processing to output reward details T6100, the reward information output interface 18a22 outputs reward decision information to the terminal 14A or 14B of the recipient of the reward and to the server for charge management 16. As a result, the recipient of the reward can learn the reward details via the application 20A or 20B on the recipient's own terminal 14A or 14B. By outputting the reward information to the server for charge management 16, the processing to grant a reward in the server for charge management 16 proceeds smoothly.

According to Example 4, the exercise energy by people holding the terminal 14A or 14B in their hand and moving is converted to a calorie amount. The movement may, for example, be to participate in a live activity or the like and wave the terminal 14A or 14B around, or may be a movement such as working out, dancing, jogging, or walking. The amount of movement is considered to show support for a favorite artist and is ultimately converted to an amount of energy expended on support. A plurality of users or artists compete over the amount of energy. Therefore, users become more and more fervent in their support activities for an artist so as not to lose to other users. This not only helps artists but also contributes to further progress of the music industry.

Furthermore, a ranking based on the amount of energy is generated, and a predetermined reward is granted to the top-ranked person(s). By adopting this business model, the reward becomes a form of motivation, spurring the users on in their support activities for artists. As a result, support for artists becomes even more fervent, making the music industry more lively.

In the shake ranking display screen 42 illustrated in FIG. 38, a link may be provided to the management screen of the top-ranked person(s), so that by clicking on the link, the management screen of the top-ranked person(s) can be viewed. Other users or the like can thus be informed of the top-ranked person(s), and advertisements displayed on the management screen can be publicized.

### (Conversion to Electronic Money)

Either or both of the shake count by the shake counter 14a2 (for example, see FIG. 35) and the calorie amount resulting from conversion of the shake count may be converted into electronic money. In this case, based on an electronic money table, the electronic money converter 18a28 provided in the controller 18a of the server for content delivery 18 converts at least one of the shake count, which can be acquired from the shake counter 14a2, and the calorie amount converted by the calorie converter 18a18 (for example, see FIG. 36) into electronic money. The electronic money converter 18a28 then adds the quantity of electronic money corresponding to the shake count or the calorie amount to the current quantity of electronic money. In other words, the quantity of electronic money corresponding to the shake count or the calorie amount is added to the current quantity of electronic money ((current quantity of electronic money) + (quantity of electronic money corresponding to shake count or calorie amount) = quantity of electronic money after processing for addition).

An electronic money table indicating the correspondence relationship between the shake count and electronic money, an electronic money table indicating the correspondence relationship between the calorie amount and electronic money, and the like are stored in the fourteenth memory area 14 of the memory 18b in the server for content delivery 18.

The display 18d of the server for content delivery 18 executes control so that the quantity of electronic money after the processing for addition is displayable on the terminal side.

As a result, the usable quantity of electronic money can be increased by the energy a person expends. Electronic money thus become more convenient.

### [Example 5]

Next, Example 5 of a content delivery system and method of delivering content according to one of the disclosed embodiments is described with reference to the drawings. Structural elements that overlap with the structure of the content delivery system and method of delivering content according to the above Embodiments and Examples are labeled with the same reference signs, and a description thereof is omitted.

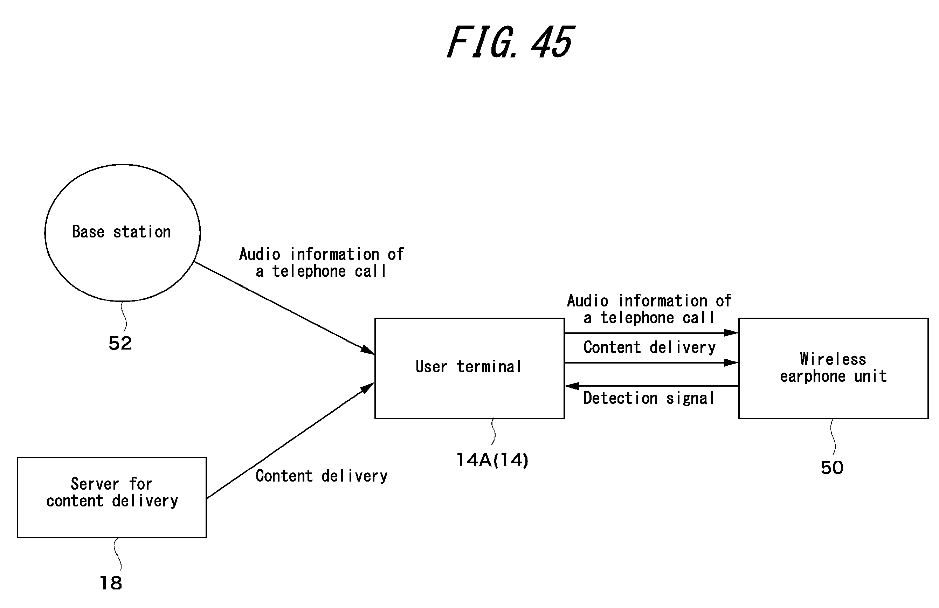

As illustrated in FIG. 45, Example 5 adopts a structure in which a wireless earphone unit 50 can be connected for example wirelessly to the user terminal 14A or the artist terminal 14B. Content, such as music delivered from the server for content delivery 18 to the terminal 14A or 14B, or audio information such as a phone call transmitted from a base station 52 is output to the wireless earphone unit 50 for example by wireless communication, and the user or the like can hear the content such as music or the audio information of the telephone call through the wireless earphone unit 50.

While the following illustrates and describes an example of the user terminal 14A as a terminal, a similar structure may be adopted for the artist terminal 14B as well.

### (Structure of Terminal)

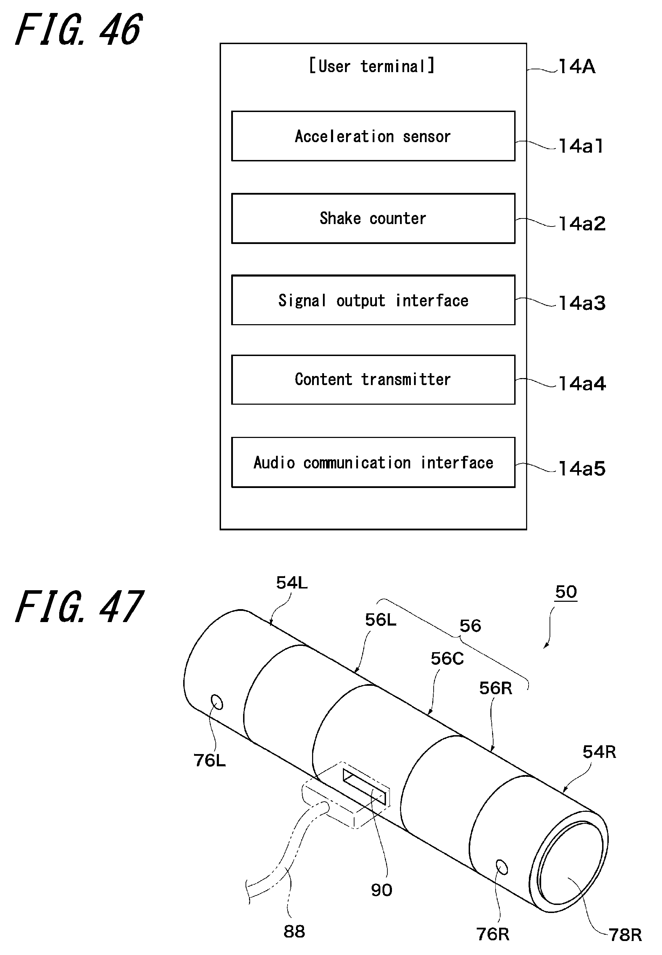

As illustrated in FIG. 46, the user terminal 14A for example includes an acceleration sensor 14a1, a shake counter 14a2, a signal output interface 14a3, a content transmitter 14a4, and an audio communication interface 14a5.

The content transmitter 14a4 executes predetermined modulation processing on the information of content delivered from the server for content delivery 18 and transmits the result to the wireless earphone unit 50, for example wirelessly. In this context, wireless communication for example refers to converting the input information into an electrical signal and then modulating and transmitting the converted signal wave.

"Modulation" refers to processing to include a signal wave, which is an electrical signal of audio or video information, in a carrier such as radio waves, light, or sound. The modulated wave is referred to as a modulation wave.

A known principle for transmitting information such as content may be adopted. As a technique for transmitting and receiving a stereo audio signal in a known wireless headphone system, for example the technique disclosed in JP 2008-153736 A may be used.

The audio communication interface 14a5 executes predetermined electrical processing as necessary on the audio information by telephone communication transmitted from the base station 52 and transmits the result to the wireless earphone unit 50, for example wirelessly. Furthermore, the audio communication interface 14a5 executes predetermined electrical processing as necessary on the audio information by telephone communication input from the wireless earphone unit 50 and transmits the result to the base station 52. As a result, a telephone call can be held between the other party's telephone apparatus and the wireless earphone unit 50.

A known principle for transmitting and receiving information such as audio may be adopted. As a technique for transmission and reception in a known mobile phone system, for example the technique disclosed in JP 2001-45145 A may be used.

### (Structure of Wireless Earphone Unit)

The structure of the wireless earphone unit 50 is now described. In a known wireless earphone unit, left and right earphones are structured separately from the body, which is inconvenient to manage and carry. Since the earpieces of the earphones are always exposed, the earphones also risk being damaged. Furthermore, known earphones have a poor design, and there is a strong consumer need for a wireless earphone unit with a sophisticated design. It would therefore be helpful to offer consumers a superb wireless earphone unit having a sophisticated design, as described below.

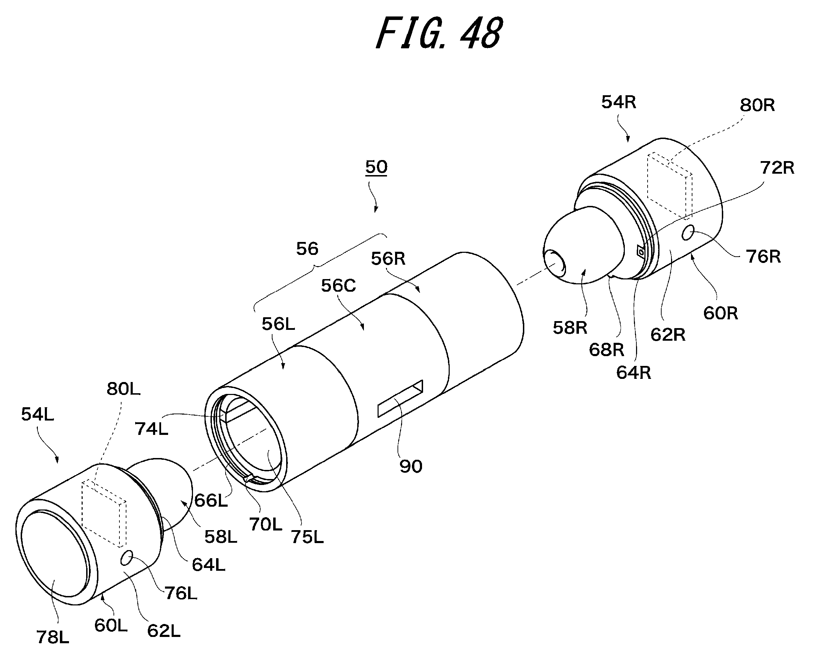

As illustrated in FIGS. 47, 48, and 49, the wireless earphone unit 50 for example include a right-ear earphone 54R, a left-ear earphone 54L, and a charging unit 56.

The right-ear earphone 54R for example includes an earpiece 58R and an earphone body 60R.

The earpiece 58R is, for example, structured with a material (substance) that is soft and elastic, such as silicone or rubber. The earpiece 58R is worn by being inserted into the user's ear hole.

The earpiece 58R may be configured to be detachable from the earphone body 60R. In this way, the earpiece 58R can be removed from the earphone body 60R, making it easy to clean, repair, or exchange the earpiece 58R.

The earphone body 60R for example includes a cylindrical housing 62R. The housing 62R for example includes a fitting portion (not illustrated) that enables detachment of the earpiece 58R. For example, a screw structure; an engaging structure, with plastic or other pieces; magnets; or the like may be used as the fitting portion.

The housing 62R is formed as a cylinder having a predetermined curvature radius throughout, yet this example is not limiting. The housing 62R may for example be configured with a transparent material that is colorless or colored and allows the internal structure to be viewed from the outside.

The housing 62R includes an attaching portion 64R allowing attachment to the charging unit 56. The attaching portion 64R for example engages or fits into an attachment receiving portion 66R on the charging unit 56 side.

The attaching portion 64R for example includes a positioning portion 68R for engagement or fitting with the attachment receiving portion 66R. The attachment receiving portion 66R on the charging unit 56 side for example includes a positioning receiving portion 70R into which the positioning portion 68R is inserted. A positioning protrusion, for example, may be used as the positioning portion 68R. A positioning recess, for example, may be used as the positioning receiving portion 70R.

A structure may be adopted in which a positioning recess is formed in the attaching portion 64R and a positioning protrusion is formed in the attachment receiving portion 66R.

The attaching portion 64R of the housing 62R or an adjacent portion for example includes a power supply terminal 72R. The attachment receiving portion 66R of the charging unit 56 or an adjacent portion for example includes a power supply terminal 74R. When the housing 62R is attached to the charging unit 56, the power supply terminals 72R and 74R can come into contact with each other. At this time, the housing 62R and the charging unit 56 are in a state allowing for conduction.

For example, when adopting a structure in which the right-ear earphone 54R is engaged by being rotated relative to the charging unit 56, the power supply terminals 72R and 74R can come into contact at the position where rotation of the housing 62R relative to the charging unit 56 is complete.

A portion of the surface of the housing 62R for example includes an audio input interface 76R. A microphone, for example, may be used as the audio input interface 76R. In a state in which the right-ear earphone 54R is mounted in the ear, the user's speech is input via the audio input interface 76R.

Predetermined electrical processing is applied to the user's speech input into the audio input interface 76R, and the result is transmitted from an audio communication interface 54R2 of the earphone 54R to the terminal 14A, for example wirelessly. Transmitting audio information from the terminal 14A via the base station 52 allows a phone conversation to be held.

Instead of the audio input interface 76R, or along with the audio input interface 76R, a bone-conduction section (not illustrated) may be provided. The bone-conduction section detects vibration of skin in the ear hole or of bones, such as skull bones, and can input or output audio information or the like. The bone-conduction section may, for example, be provided in at least a portion of the earpiece 58R. A wireless earphone unit that employs a bone-conduction method can thus be provided. A known principle of bone conduction may be used, and a description thereof is omitted.

The housing 62R includes a button switch 78R, for example at the end face thereof. For example a push-type switch, a touch sensor-type switch, or the like may be used as the button switch 78R. When the button switch 78R is pushed or contacted, a controller 54R3 of the right-ear earphone 54R judges whether the mode is an output mode to output content received by a content receiver 54R1 or a communication mode to communicate audio of a telephone call using the audio communication interface 54R2.

The "button switch" is one embodiment of the "switch" of this disclosure, but the "switch" is not limited to being a button switch.

The basis on which the controller 54R3 of the right-ear earphone 54R judges the mode may, for example in the case of a push-type switch, be the number of times the button switch 78R has been pushed (number of pushes) or the time that the switch is continuously pushed (pushing time).

Specifically, when judging based on the number of pushes of the button switch 78R, the mode is judged to be the content output mode when the number of pushes within a predetermined time is "1" and to be the mode to communicate audio of a telephone call when the number of pushes within a predetermined time is "2".

Furthermore, when judging the mode based on the pushing time of the button switch 78R, for example a time serving as a basis for judgment (standard time) may be set in advance, and the mode may be judged to be the content output mode when the pushing time is longer than the standard time and to be the mode to communicate audio when the pushing time is shorter than the standard time.

Alternatively, in the processing to judge based on the number of pushes or pushing time of the button switch 78R, an ON/OFF switching mode may be added to a power supply 54R5 of the right-ear earphone 54R. Specifically, the switching mode may be entered when the button switch 78R is pushed a specific number of times, or when the button switch 78R is continuously pushed for a specific length of time, and the controller 54R3 of the right-ear earphone 54R may execute control to switch between the power supply 54R5 being ON and OFF. Furthermore, a switching mode to switch between starting (ON) and stopping (OFF) the charging of rechargeable batteries 82R and 82L may be added to the switching mode.

In this disclosure, the power supply being "ON" refers for example to being in an active state in which power is supplied to a control unit, a circuit board, and the like. The power supply being "OFF" refers for example to being in a suspended state in which power is not supplied to the control unit, the circuit board, and the like.

On the other hand, when the button switch 78R is configured as a touch sensor-type, the controller 54R3 of the right-ear earphone 54R judges the mode and executes switching control based on the number of times the button switch 78R is contacted (number of contacts) or the length of time of the contact (contact time).

Specifically, when judging based on the number of contacts of the button switch 78R, the mode may be judged to be the content output mode when the number of contacts is "1" and to be the mode to communicate audio of a telephone call when the number of contacts is "2".

Furthermore, when judging the mode based on the contact time of the button switch 78R, for example a time serving as a basis for judgment (standard time) may be set in advance, and the mode may be judged to be the content output mode when the contact time is longer than the standard time and to be the mode to communicate audio of a telephone call when the contact time is shorter than the standard time.

Alternatively, in the processing to judge based on the number of contacts or contact time of the button switch 78R, an ON/OFF switching mode may be added to the power supply 54R5 of the right-ear earphone 54R. Specifically, the switching mode may be entered when the button switch 78R is contacted a specific number of times, or when the button switch 78R is continuously contacted for a specific length of time, and the controller 54R3 of the right-ear earphone 54R may execute control to switch between the power supply 54R5 being ON and OFF. Furthermore, a switching mode to switch between starting (ON) and stopping (OFF) the charging of rechargeable batteries 82R and 82L may be added to the switching mode.

The housing 62R for example includes a control unit 80R inside the housing 62R. The control unit 80R is disposed to be detachable from the housing 62R.

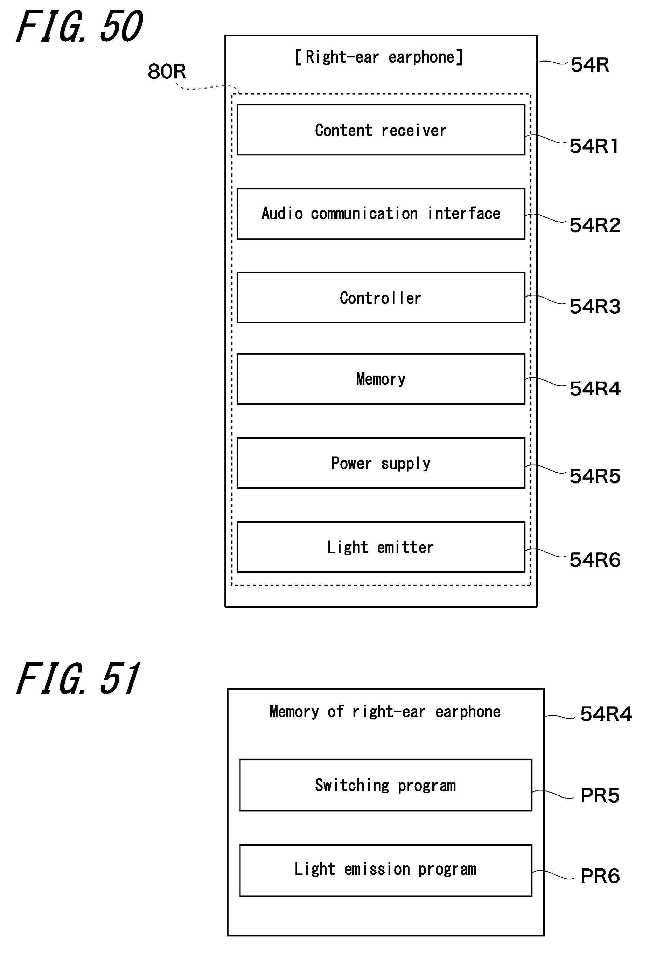

As illustrated in FIG. 50, the control unit 80R for example includes the content receiver 54R1, the audio communication interface 54R2, the controller 54R3, a memory 54R4, the power supply 54R5 and a light emitter 54R6.

Here, when the housing 62R is configured using a transparent material, the control unit 80R can be visually confirmed from outside the housing 62R. At this time, if the light emitter 54R6 is controlled by the controller 54R3 to emit light, the housing 62R can be visually confirmed by emitting the light therein that passes through the housing 62R.

The content receiver 54R1 receives a signal of content transmitted, for example wirelessly, from the terminal and executes predetermined demodulation processing, outputting the result from the earpiece 58R as sound information. A known structure may be used for the content receiver 54R1.

"Demodulation" refers to processing to remove the carrier component from the received modulation wave so as to extract only the signal wave component. The wave modulated at the transmitting side is transmitted through the transmitter and receiver and demodulated at the receiver side, and the extracted signal wave is output.

The audio communication interface 54R2 receives an audio signal of a telephone call transmitted from the terminal, for example wirelessly, executes predetermined electrical processing as necessary, and outputs the result from the earpiece 58R as sound information. Alternatively, the audio communication interface 54R2 executes predetermined electrical processing as necessary on audio information input from the audio input interface 76R of the earphone 54R and transmits the result to the terminal side as sound information. By transmission via the terminal 14A and the base station 52, a telephone call can be held between the other party's telephone apparatus and the wireless earphone unit 50. A known structure may be used for the audio communication interface 54R2.

The controller 54R3 comprehensively controls the right-ear earphone 54R. Based on information input from the button switch 78R, the controller 54R3 controls switching between the mode to output content, the mode to communicate audio of a telephone call, and the ON/OFF mode of the power supply 54R5. The control for switching between modes is executed based on information input from the button switch 78R and on a switching program PR5 (see FIG. 51) stored in the memory 54R4.

As illustrated in FIG. 51, for example the switching program PR5 for the controller 54R3 to execute switching control and a light emission program PR6 that prescribes light emission patterns of the light emitter 54R6 are stored in the memory 54R4.

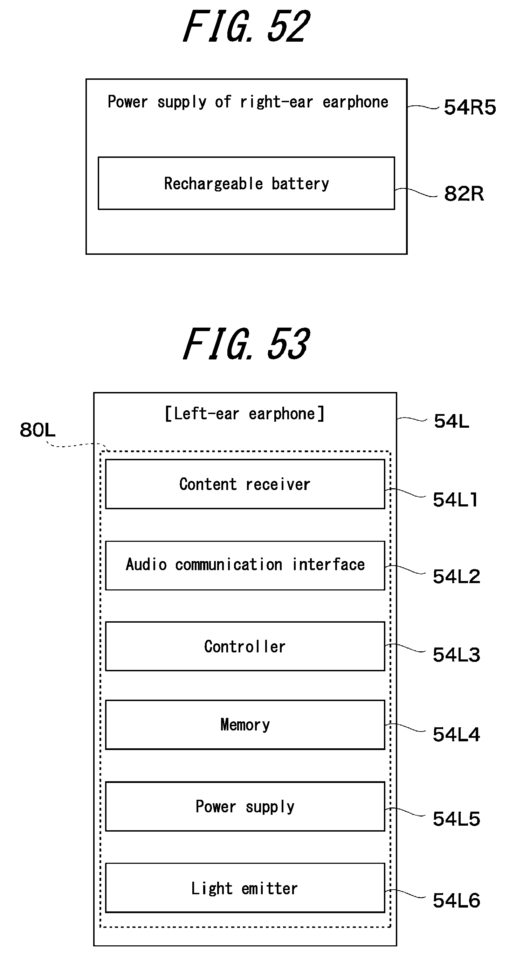

As illustrated in FIG. 52, the power supply 54R5 includes a rechargeable battery 82R. A structure may be adopted in which, while the right-ear earphone 54R is electrically connected to the charging unit 56 (conduction state), the electrical connection between power supply terminals is acquired as a trigger, and based on this trigger, charging of the rechargeable battery 82R begins.

Furthermore, for example control may be executed so that the power supply 54R5 is ON while the right-ear earphone 54R is detached from the charging unit 56 (non-conduction state between the earphone 54R and the charging unit 56) and is OFF when the right-ear earphone 54R is attached to the charging unit 56 (conduction state between the earphone 54R and the charging unit 56).

Here, the control to switch between the power supply 54R5 being ON/OFF may, for example, be executed by the controller 54R3 or the like based on a predetermined program (software) for detecting the conduction state (whether there is conduction) between the earphone 54R and the charging unit 56. Furthermore, without going through the controller 54R3 or the like, the conduction state (whether there is conduction) between the earphone 54R and the charging unit 56 may be detected by the power supply 54R5 and used as a trigger for executing control to switch between the power supply 54R5 being ON/OFF.

The light emitter 54R6 is, for example, configured with an LED. Control of light emission by the light emitter 54R6 is executed by the controller 54R3 based on a light emission program PR6. Light emission of the light emitter 54R6 for example is controlled to begin when the right-ear earphone 54R is detached from the charging unit 56, and light emission of the light emitter 54R6 is controlled to begin or to stop when the right-ear earphone 54R is attached to the charging unit 56. The light emission pattern of the light emitter 54R6 may be changed according to the circumstances. For example, the light emission pattern of the light emitter 54R6 when the right-ear earphone 54R is detached from the charging unit 56 and the light emission pattern of the light emitter 54R6 when the right-ear earphone 54R is attached to the charging unit 56 may be controlled to differ.

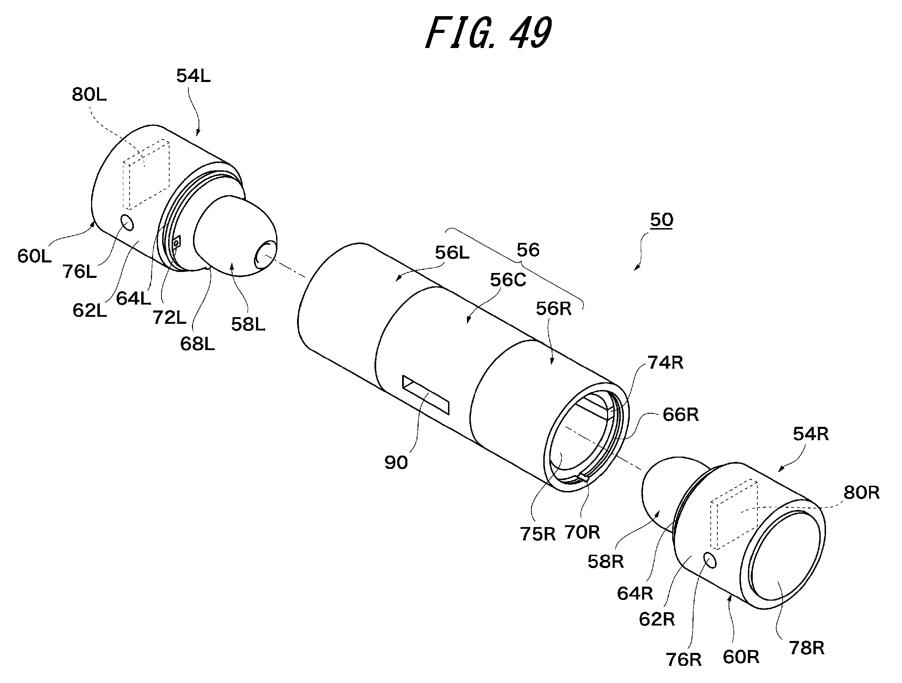

For the structure of the left-ear earphone 54L, the same structure as that of the right-ear earphone 54R may be adopted. The structure of the left-ear earphone 54L is illustrated in FIGS. 49 to 51 and FIGS. 53 to 55. Since the structure is redundant, however, a description thereof is omitted. The reference signs in the drawings include "R" for the structure of the right-ear earphone 54R and "L" for the structure of the left-ear earphone 54L.

As illustrated in FIGS. 47 to 49, the charging unit 56 is shaped cylindrically overall. For example, the dimensions may be set so that the curvature radius of the charging unit 56 is approximately the same as the curvature radius of the housings 62R and 62L of the earphones 54R and 54L. In other words, the dimensions may be set so that the curvature of the charging unit 56 is approximately the same as the curvature of the housings 62R and 62L of the earphones 54R and 54L. As a result, while the earphones 54R and 54L are connected to the charging unit 56, no unevenness or the like occurs at the boundary between the earphones 54R and 54L and the charging unit 56, so that the charging unit overall forms one complete cylindrical member. The handling and exterior design of the wireless earphone unit 50 thus improve.

The charging unit 56 for example includes a charging unit central portion 56C, a charging unit right-side portion 56R disposed axially on one side of the charging unit central portion 56C, and a charging unit left-side portion 56L disposed axially on the other side of the charging unit central portion 56C.

The charging unit right-side portion 56R is for example shaped cylindrically and includes a storage section 75R storing the earpiece 58R of the right-ear earphone 54R. When the right-ear earphone 54R is attached to the charging unit right-side portion 56R, the earpiece 58R is thus stored completely in the storage section 75R of the charging unit right-side portion 56R.

As described above, the charging unit right-side portion 56R includes the attachment receiving portion 66R. The conduction state can be entered by the attaching portion 64R of the right-ear earphone 54R attaching to the attachment receiving portion 66R and the power supply terminals 72R and 74R thereof contacting each other.

The charging unit left-side portion 56L is for example shaped cylindrically and includes a storage section 75L storing the earpiece 58L of the left-ear earphone 54L. When the left-ear earphone 54L is attached to the charging unit left-side portion 56L, the earpiece 58L is thus stored completely in the storage section 75L of the charging unit left-side portion 56L.

As described above, the charging unit left-side portion 56L includes the attachment receiving portion 66L. The conduction state can be entered by the attaching portion 64L of the left-ear earphone 54L attaching to the attachment receiving portion 66L and the power supply terminals 72L and 74L thereof contacting each other.

The positioning portion 68L formed in the attaching portion 64L and the positioning receiving portion 70L formed in the attachment receiving portion 66L have a similar structure to that of the positioning portion 68R and the positioning receiving portion 70R, and hence a description thereof is omitted.

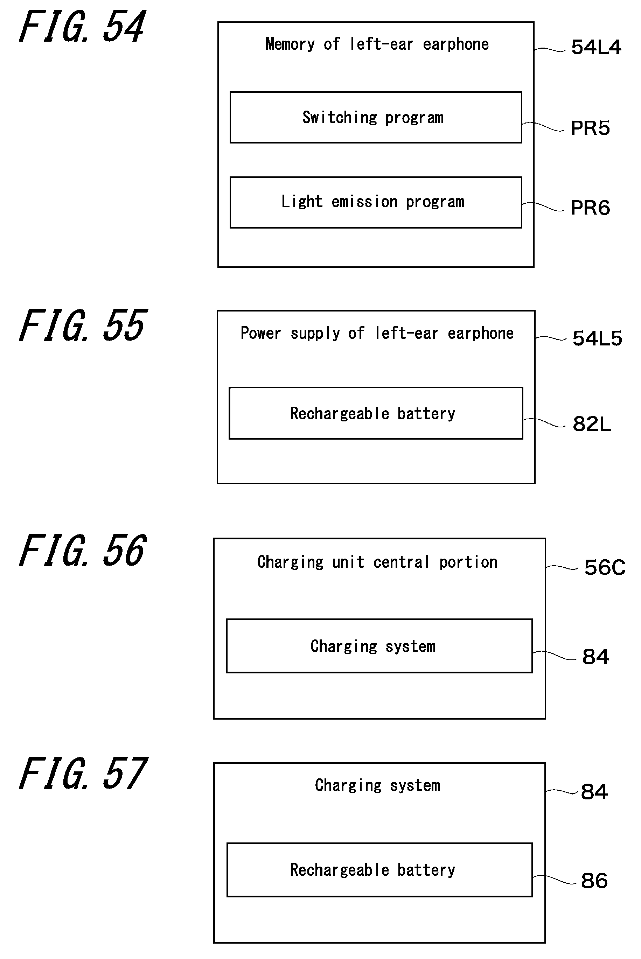

As illustrated in FIG. 56, the charging unit central portion 56C for example includes a charging system 84. As illustrated in FIG. 57, the charging system 84 includes a rechargeable battery 86 for supplying power to the earphones 54R and 54L. For example, when the earphones 54R and 54L are connected to the charging unit 56 and the conduction state is entered, the charging system 84 charges the rechargeable batteries 82R and 82L of the earphones 54R and 54L by supplying power thereto. As a result, each time the earphones 54R and 54L are connected to the charging unit 56, the rechargeable batteries 82R and 82L of the earphones 54R and 54L are recharged, which is convenient.

As illustrated in FIGS. 47 to 49, a USB terminal 90 to which a USB connector 88 can be connected is provided on the surface of the charging unit central portion 56C. As illustrated in FIG. 57, by electrically connecting the USB connector 88 to the USB terminal 90, the rechargeable battery 86 of the charging system 84 can be recharged.

The charging system 84 is not an essential structure. For example, instead of including the charging system 84, the charging unit 56 may be structured simply as a connection unit for connecting the earphones 54R and 54L or as an attachment unit.

According to Example 5, the outer appearance of the wireless earphone unit 50 is cylindrical overall, yielding an extremely innovative design. A wireless earphone unit 50 that has an innovative, sleek frame can thus be provided.

Since the earphones 54R and 54L are detachable from the charging unit 56, the earphones 54R and 54L can be handled easily.

Since the charging unit right-side portion 56R and charging unit left-side portion 56L are provided in the charging unit 56, the storage sections 75R and 75L thereof can store the earpieces 58R and 58L of the earphones 54R and 54L. As a result, when the wireless earphone unit 50 is not in use, the earpieces 58R and 58L can be prevented from exposure and protected while the earphones 54R and 54L are attached to the charging unit 56.

In particular, damage to the earpieces 58R and 58L can be controlled, and the earpieces 58R and 58L can be prevented from becoming dirty. By having a portion of the charging unit 56 function as a storage case for the earpieces 58R and 58L, an increase in the number and size of parts in the wireless earphone unit 50 can be controlled.

In a state in which the earphones 54R and 54L are attached to the charging unit 56, the power supply terminals are electrically connected. This state of electrical connection (conduction state) is acquired as a trigger. Based on this trigger, the power supplies 54R5 and 54L5 of the earphones 54R and 54L turn OFF, and charging of the rechargeable batteries 82R and 82L begins. As a result, when the earphones 54R and 54L are to be used, the rechargeable batteries 82R and 82L are always in a fully charged state, reducing the chance of the charge running out during use.

Since the earphones 54R and 54L are formed from transparent material, the earphones 54R and 54L emit light from the inside by the light emitters 54R6 and 54L6 emitting light. As a result, the novelty and design of the earphones 54R and 54L can be improved. By adjusting the light emitting pattern of the light emitters 54R6 and 54L6, the light emitting pattern can be changed in accordance with use, making the earphones more fashionable.

Pushing the button switches 78R and 78L provided in the earphones 54R and 54L allows control to switch with a one-touch operation between delivery of content, such as music, and output of audio for a telephone call. Furthermore, this structure enables control to switch between the ON and OFF modes of the power supplies 54R5 and 54L5 in the earphones 54R and 54L, thus achieving an energy conservation effect as well.

At the position of connection between the earphones 54R and 54L and the charging unit 56, the positioning portions 68R and 68L are provided in the attaching portions 64R and 64L, and the positioning receiving portions 70R and 70L are provided in the attachment receiving portions 66R and 66L. Therefore, the operation to connect the earphones 54R and 54L and the charging unit 56 is both easy and certain.

### <Modification to Example 5>

The following describes a modification to Example 5.

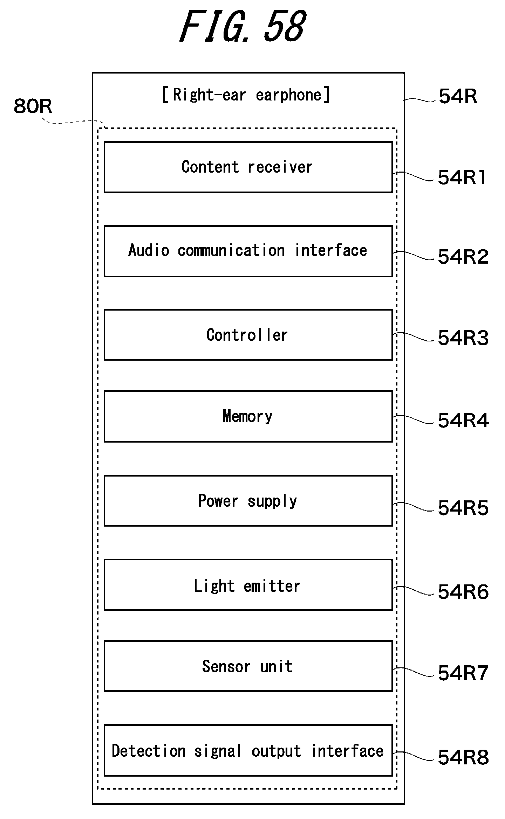

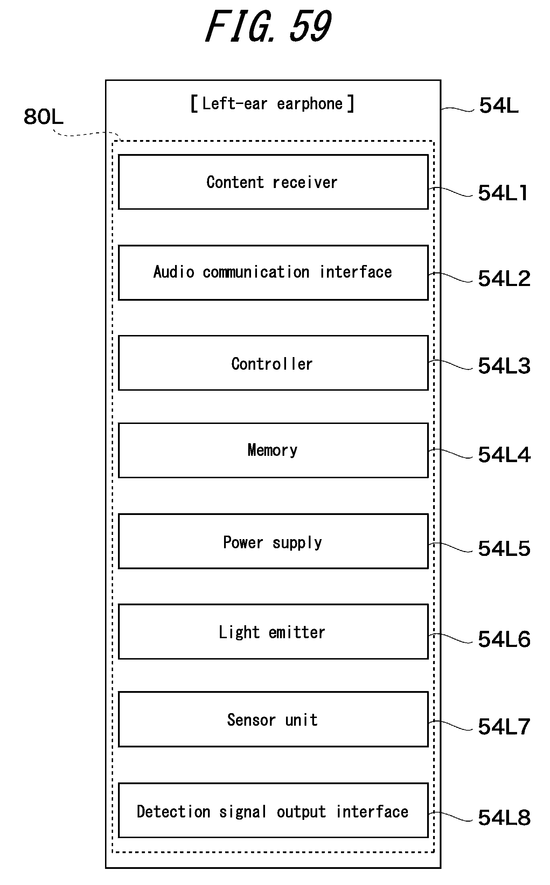

As illustrated in FIGS. 58 and 59, in Modification 1 to Example 5, sensor units 54R7 and 54L7 are provided in the earpieces 58R and 58L of the earphones 54R and 54L. The sensor units 54R7 and 54L7 contact the skin of the ear hole or the like and detect the user's physical condition.

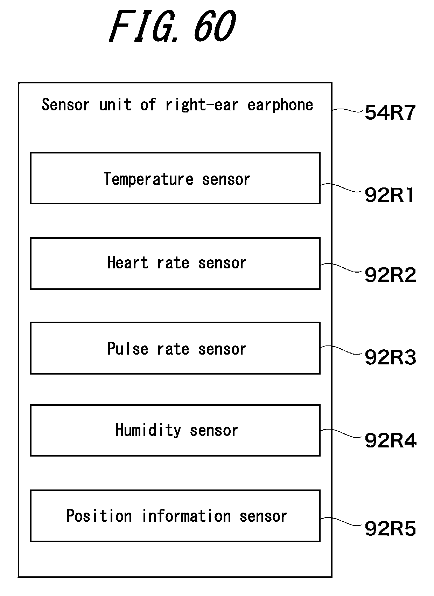

As illustrated in FIG. 60, for example one or a plurality of the following may be used in the sensor unit 54R7 of the right-ear earphone 54R: a temperature sensor 92R1, heart rate sensor 92R2, pulse rate sensor 92R3, humidity sensor 92R4, position information sensor 92R5, and the like.

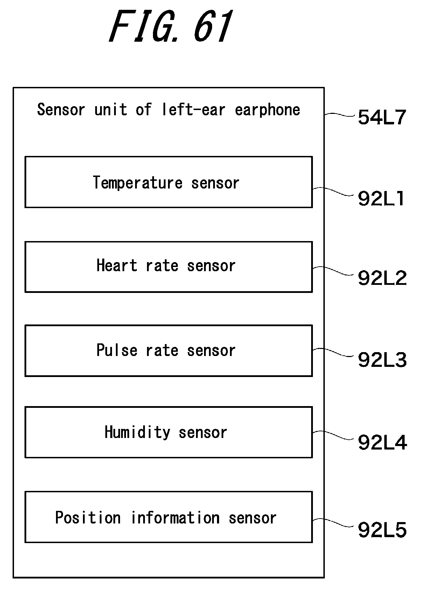

As illustrated in FIG. 61, for example one or a plurality of the following may be used in the sensor unit 54L7 of the left-ear earphone 54L: a temperature sensor 92L1, heart rate sensor 92L2, pulse rate sensor 92L3, humidity sensor 92L4, position information sensor 92L5, and the like.

The temperature sensors 92R1 and 92L1 are sensors for measuring the user's body temperature by contacting the skin or the like when inserted in the user's ear hole. The user's body temperature and changes thereto can be detected.

The heart rate sensors 92R2 and 92L2 are sensors for measuring the user's heart rate by contacting the skin or the like when inserted in the user's ear hole. The user's heart rate and changes thereto can be detected.

The pulse rate sensors 92R3 and 92L3 are sensors for measuring the user's pulse rate by contacting the skin or the like when inserted in the user's ear hole. The user's pulse rate and changes thereto can be detected.

The humidity sensors 92R4 and 92L4 are sensors for measuring the humidity in the user's ear hole by contacting the skin or the like when inserted in the user's ear hole. The user's health status and changes thereto can be detected.

The position information sensors 92R5 and 92L5 are sensors for detecting position information on the user when inserted in the user's ear hole. A GPS system may, for example, be used as the position information sensors 92R5 and 92L5. The position of the user and the earphones 54R and 54L can thus be learned. As a result, information related to the user's activity range or trajectory can be acquired. The position of the earphones 54R and 54L can also be identified in case they are lost.

As illustrated in FIGS. 58 and 59, for example the earphones 54R and 54L may include detection signal output interfaces 54R8 and 54L8. The detection signal output interfaces 54R8 and 54L8 output the detection signals generated by the sensor units 54R7 and 54L7 to the user terminal 14A.

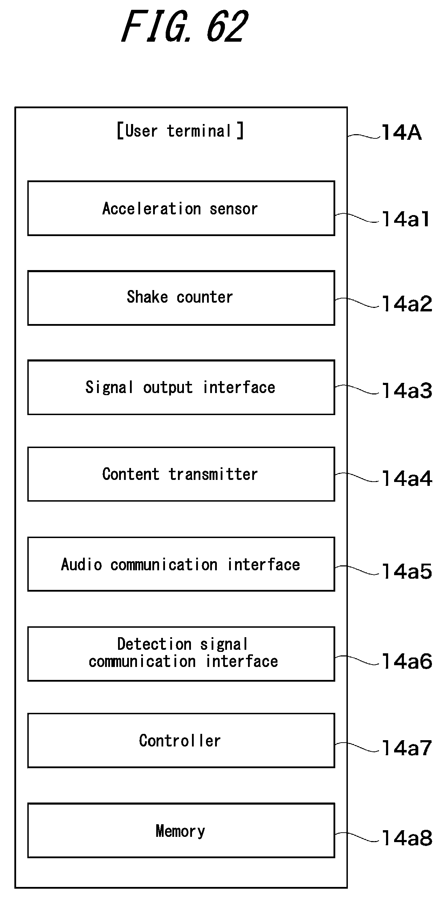

As illustrated in FIG. 62, the user terminal 14A includes a detection signal communication interface 14a6, a controller 14a7, and a memory 14a8. The detection signal communication interface 14a6 receives the detection signal output from the detection signal output interfaces 54R8 and 54L8 of the earphones 54R and 54L. The detection signal is recognized by the controller 14a7 as indicating the user's health status and position information and is saved in the memory 14a8 as special information on the user.

For example a bio-table indicating the relationship between the detection signal and the health status is stored in the memory 14a8. Based on the bio-table, the controller 14a7 can therefore identify the user's health status or bioenergy.

The detection signal communication interface 14a6 of the user terminal 14A outputs the special information related to the user's health status or bioenergy to the server for content delivery 18 or to another specialized institution.

As a result, information related to the user's health status or changes thereto can be acquired. Also, providing information related to the user's health status or activity range to the server for content delivery 18 or to a specialized institution allows advice related to medical information or the like to be provided to the user or allows a business strategy, such as marketing, to be proposed based on data regarding the user's health status or position information.

Furthermore, by outputting the information related to the user's health status or activity range to the server for content delivery 18, the controller 18a of the server for content delivery 18 generates matching information matched with music in order to improve the user's health status. The matching information matched with music is music information that is suitable for the user. Outputting the matching information matched with music to the user terminal 14A allows users to learn what music is optimal for them. Furthermore, by receiving delivery of optimal music and listening to the music, users can try to improve their health status, feel refreshed, and improve their activity range. As a result, users might obtain the effect of strengthening their immune system through music. Music can also be advertised to users, thereby stimulating the music industry.

In Modification 1 to Example 5, an example of a structure in which the controllers 54R3 and 54L3 of the earphones 54R and 54L judge the user's health status is illustrated, but the user's health status may instead be judged on the server for content delivery 18 side.

### [Example 6]

Next, Example 6 of a content delivery system and method of delivering content according to one of the disclosed embodiments is described with reference to the drawings. Structural elements that overlap with the structure of the content delivery system and method of delivering content according to the above Embodiments and Examples are labeled with the same reference signs, and a description thereof is omitted.

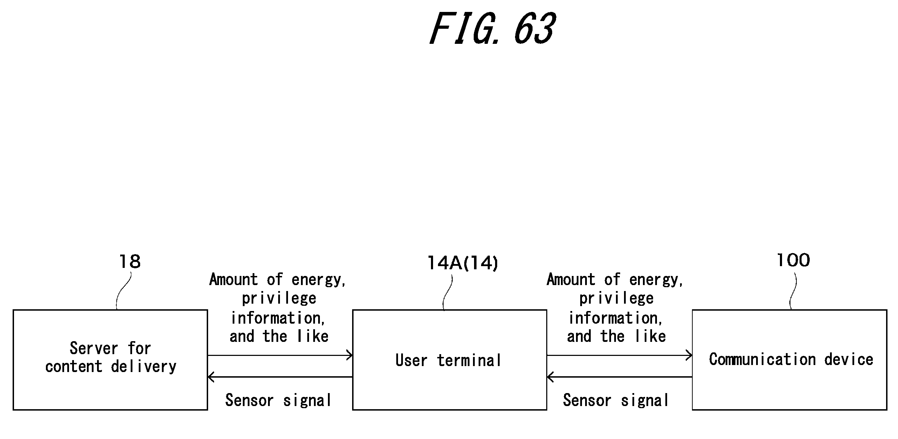

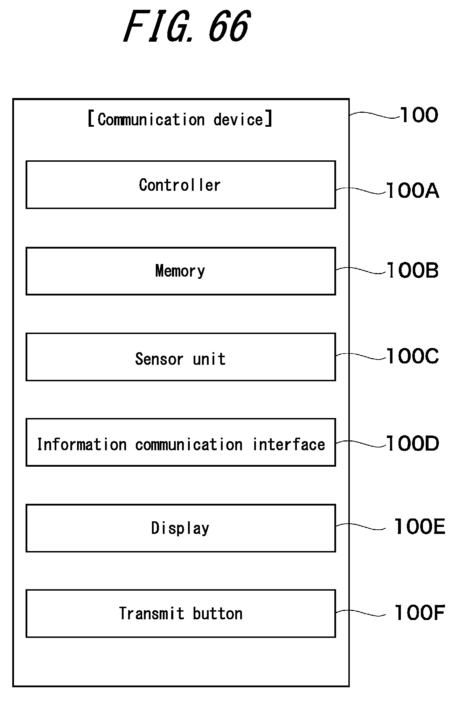

As illustrated in FIG. 63, Example 6 adopts a structure in which a communication device 100 can be connected for example wirelessly to the user terminal 14A or the artist terminal 14B. The communication device 100 includes a sensor unit 100C formed by a plurality of sensors (see FIG. 66). Information detected by the sensor unit 100C is converted to a predetermined signal and transmitted to the user terminal 14A or the artist terminal 14B wirelessly. The user terminal 14A or artist terminal 14B can thus acquire, analyze, and accumulate information detected by the communication device 100. Furthermore, such information may be used as big data for a variety of uses. Many such uses may be envisioned, including health management, marketing, consumer behavior, medical treatment/welfare, and the like.

In Example 6, the communication device 100 is for example worn on the user's body, the energy released by motion or the like by the user's body or the energy released by exercise or the like is rendered visible as a numerical value or the like, and some sort of privilege is granted to the user(s) with the top-ranked numerical value(s). Example 6 addresses the desire to be rewarded in some form for the energy expended to support an artist at a live event or the energy expended on one's own exercise.

While the following illustrates and describes an example of the user terminal 14A as a terminal, a similar structure may be adopted for the artist terminal 14B as well.

### (Structure of Server for Content Delivery)

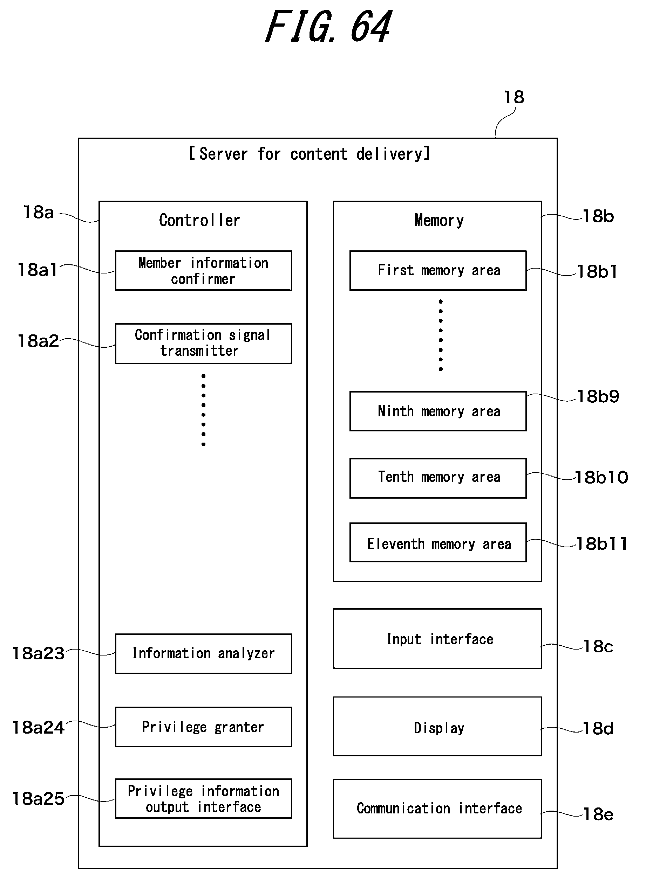

As illustrated in FIG. 64, a controller 18 of the server for content delivery 18 for example includes an information analyzer 18a23, a privilege granter 18a24, and a privilege information output interface 18a25.

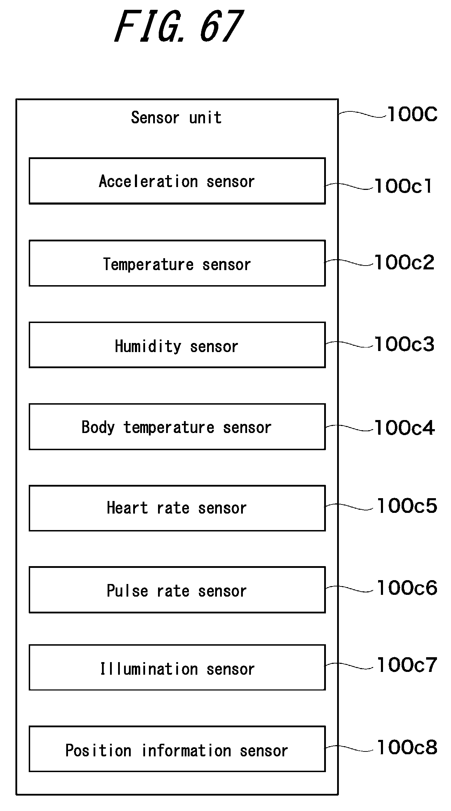

Based on a sensor signal transmitted from the terminal 14A, the information analyzer 18a23 quantifies the information measured by the sensor unit 100C (see FIGS. 66 and 67).

Specifically, when the sensor unit 100C is an acceleration sensor 100c1, then based on the sensor signal transmitted from the acceleration sensor 100c1, information is acquired on the magnitude of the acceleration at a predetermined time or time period, the number of vibrations (shake count) yielded by counting the number of changes in acceleration, or the like. Such information is saved as the user's activity data, for example in a ninth memory area 18b9 of the memory 18b.

When the sensor unit 100C is a temperature sensor 100c2, then based on the sensor signal transmitted from the temperature sensor 100c2, information is acquired on the temperature at a predetermined time or time period, the change in temperature, or the like. Such information is saved as the user's activity data, for example in the ninth memory area 18b9 of the memory 18b.

When the sensor unit 100C is a humidity sensor 100c3, then based on the sensor signal transmitted from the humidity sensor 100c3, information is acquired on the humidity at a predetermined time or time period, the change in humidity, or the like. Such information is saved as the user's activity data, for example in the ninth memory area 18b9 of the memory 18b.

When the sensor unit 100C is a body temperature sensor 100c4, then based on the sensor signal transmitted from the body temperature sensor 100c4, information is acquired on the user's body temperature at a predetermined time or time period, the change in body temperature, or the like. Such information is saved as the user's vital data, for example in the ninth memory area 18b9 of the memory 18b.

When the sensor unit 100C is a heart rate sensor 100c5, then based on the sensor signal transmitted from the heart rate sensor 100c5, information is acquired on the user's heart rate at a predetermined time or time period, the change in heart rate, or the like. Such information is saved as the user's vital data, for example in the ninth memory area 18b9 of the memory 18b.

When the sensor unit 100C is a speech recognition sensor 100c6, then for example speech by the user or the like is received, and a sensor signal is generated by the speech recognition sensor 100c6. Based on this sensor signal, information on the content of the user's speech at a predetermined time or time period is acquired. Such information is saved as the user's activity data, for example in the ninth memory area 18b9 of the memory 18b.

When the sensor unit 100C is an illumination sensor 100c7, then based on the sensor signal transmitted from the illumination sensor 100c7, information is acquired for example on the user's activity history at a predetermined time or time period. Such information is saved as the user's activity data, for example in the ninth memory area 18b9 of the memory 18b.

When the sensor unit 100C is a position information sensor 100c8, then based on the sensor signal transmitted from the position information sensor 100c8, information is acquired for example on the user's activity history at a predetermined time or time period. Such information is saved as the user's activity data, for example in the ninth memory area 18b9 of the memory 18b.

The privilege granter 18a24 grants a predetermined privilege based on the sensor signal of the sensor unit 100C. The type of privilege is for example determined based on a privilege table stored in a tenth memory area 18b10 of the memory 18b. This privilege table is a table prescribing the correspondence relationship between the result of analysis by the information analyzer 18a23 and the type of privilege in the privilege granter 18a24.

As the first type of privilege, for example the number of vibrations yielded by the acceleration sensor 14a1 are added to the count by the shake counter 14a2 in the terminal 14A that is used in Example 4. For example, the privilege granter 18a24 may transmit a signal to the terminal 14A for adding a count based on the sensor signal to the count by the shake counter 14a2 (the number of vibrations acquired by the acceleration sensor 14a1). Alternatively, the privilege granter 18a24 may execute processing to add a calorie amount based on the sensor signal in the processing to convert to a calorie amount in the calorie converter 18a18 of the server for content delivery 18. With this structure, the amount of energy based on the sensor signal of the sensor unit 100C in the communication device 100 can be added to the amount of energy based on the detection signal from the acceleration sensor 14a1 of the terminal 14A, allowing fans to compete over the total calorie amount covering all support activities.

As the second type of privilege, for example the amount of energy based on the sensor signal from the sensor unit 100C of the communication device 100 may be converted to points. In this case, for example a point table prescribing the relationship between the amount of energy and the number of points may be stored in the tenth memory area 18b10 of the memory 18b, and the number of points may be determined based on this point table. The amount of energy that is converted into points may be not only the amount of energy based on the sensor signal from the sensor unit 100C of the communication device 100, but also for example the amount of energy based on the detection signal from the acceleration sensor 14a1, or the total amount of energy that is the sum of the amount of energy based on the sensor signal from the sensor unit 100C of the communication device 100 and the amount of energy based on the detection signal from the acceleration sensor 14a1.

As the third type of privilege, for example the number of points resulting from conversion into points based on the amount of energy may be converted into a monetary amount. In this case, a monetary amount table prescribing the relationship between the number of points and the monetary amount may be stored in the tenth memory area 18b10 of the memory 18b, and the monetary amount may be determined based on this monetary amount table. The monetary amount converted from the number of points may be used as a discount when purchasing merchandise or the like with the terminal 14A via the server for content delivery 18. This monetary amount may also be used as a discount coupon when purchasing merchandise or the like in a store, such as a convenience store or department store. Since the case of purchasing merchandise or the like with the terminal 14A via the server for content delivery 18 is described in Example 1, a description thereof is omitted.

As the fourth type of privilege, for example the electronic money converter 18a28 (see FIG. 87) may identify the quantity of electronic money based on the amount of energy and the electronic money table stored in the fourteenth memory area and add this quantity to the current quantity of electronic money.

As another type of privilege, for example the user's degree of health may be estimated using a health table that prescribes the correspondence relationship between the amount of energy and the degree of health, health advice information may be generated in correspondence with the degree of health, and this information may be transmitted to the terminal 14A from the server for content delivery 18. As a result, users can manage their own health using the terminal 14A. The health table is for example stored in the tenth memory area 18b10 of the memory 18b.

The information analyzer 18a23 and the privilege granter 18a24 may be disposed either on the terminal 14A side or on the communication device 100 side.

As illustrated in FIG. 64, the memory 18b of the server for content delivery 18 includes the ninth memory area 18b9, the tenth memory area 18b10, and an eleventh memory area 18b 11.

The data of the sensor signal transmitted from the sensor unit 100C, along with information or data on the vital energy and activity energy of the user or the like identified based on the sensor signal, are stored in the ninth memory area 18b9. Such information or data on the vital energy and activity energy are saved separately for each user or artist.

For example the privilege table prescribing the relationship between the sensor signal transmitted from the sensor unit 100C and the privilege is stored in the tenth memory area 18b10. In this way, for example the numerical values and range of the sensor signal transmitted from the sensor unit 100C are divided up, and privilege information is allocated in correspondence with the divisions.

The type of privilege, the privilege information, or the data allocated to each user are saved in the eleventh memory area 18b11. The type of privilege, the privilege information, or the data are saved separately for each user or artist.

As illustrated in FIG. 64, the privilege information output interface 18a25 of the server for content delivery 18 can transmit, to the terminal 14A of each user, the amount of energy, the type of privilege or the privilege information of the user, and data related to point information, discount information, and the like.

Instead of the privilege information output interface 18a25, the communication interface 18e can also transmit, to the terminal 14A of each user, the amount of energy, the type of privilege or the privilege information of the user, and data related to point information, discount information, and the like.

The terminal 14A of each user can display, on a display 14a10 of the terminal 14A of the user, the information and data stored in the ninth memory area 18b9, the tenth memory area 18b10, and the eleventh memory area 18b11. In this way, users can easily learn their own amount of energy and type of privilege.

### (Structure of Terminal)

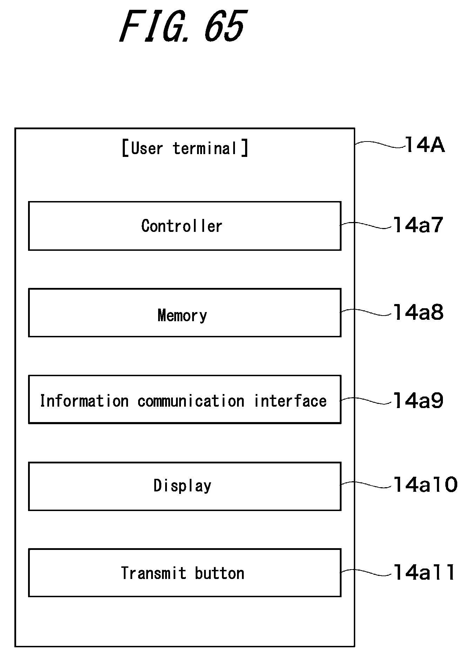

As illustrated in FIG. 65, the user terminal 14A for example includes the controller 14a7, the memory 14a8, an information communication interface 14a9, the display 14a10, and a transmit button 14a11.

The controller 14a7 controls the user terminal 14A overall and the constituent elements thereof.

Predetermined programs are stored in the memory 14a8. The programs for example include a program related to driving the sensor unit 100C and a program for transmitting information acquired by the sensor unit 100C. The information or data measured by the sensor unit 100C is also saved in the memory 14a8. For example, with regard to measured data on the user, information related to the change in data over a predetermined time period (length of time) may be saved in the memory 14a8. In this way, the user's biorhythm and health status can be displayed on the display 14a10 of the terminal 14A.

Analysis information yielded by analyzing the sensor signal in the information analyzer 18a23 of the server for content delivery 18, biological information on the user based on the analysis information, the vital energy and activity energy, and privilege information and data allocated to the user may also be saved in the memory 14a9.

The information communication interface 14a9 for example can transmit, to the server for content delivery 18, the sensor signal transmitted from the communication device 100. The information communication interface 14a9 can also receive various signals transmitted from the server for content delivery 18 and transmit these signals to the communication device 100.

The display 14a10 may, for example, be configured with a liquid crystal display and can display the results of measurement by the sensor unit 100C and the like.

By being pressed or contacted by the user or the like, the transmit button 14a11 can transmit the sensor signal received from the sensor unit 100C. The sensor signal is, for example, transmitted to the server for content delivery 18.

### (Structure of Communication Device)

As illustrated in FIG. 66, the communication device 100 is formed in the shape of a band or an accessory that can be worn on a part of the body of a person such as the user, for example on the wrist, ankle, forehead/head, or the like. The communication device 100 may, for example, be called a MaTuRi fuel band, a MaTuRi energy band, or the like.

The communication device 100 for example includes a controller 100A, a memory 100B, the sensor unit 100C, an information communication interface 100D, a display 100E, and a transmit button 100F.

The controller 100A controls the communication device 100 overall and each constituent element thereof.

Predetermined programs are stored in the memory 100B. The programs for example include a program related to driving the sensor unit 100C and a program for transmitting information acquired by the sensor unit 100C. The information or data measured by the sensor unit 100C is also saved in the memory 100B. For example, with regard to measured data on the user, information related to the change in data over a predetermined time period (length of time) may be saved in the memory 100B. In this way, the user's biorhythm and health status can be displayed on the display 100E of the communication device 100.

The sensor unit 100C measures the physical condition, or measures the vital energy and the activity energy, of the user or the like who is wearing the communication device 100. The sensor unit 100C detects the physical condition or detects the vital energy and activity energy of the user and then generates and transmits a sensor signal reflecting the result of detection. The sensor signal generated by the sensor unit 100C may, for example, be transmitted via the information communication interface 100D.

The sensor unit 100C may be formed by one sensor or by a plurality of sensors. Specifically, as illustrated in FIG. 67, the sensor unit 100C may be formed by one or more of the following: the acceleration sensor 100c1, temperature sensor 100c2, humidity sensor 100c3, body temperature sensor 100c4, heart rate sensor 100c5, speech recognition sensor 100c6, illumination sensor 100c7, and position information sensor (GPS) 100c8.

For example a sensor for counting the user's breathing or a sensor for detecting the user's pulse rate, the user's blood flow, or the like may also be used as the sensor unit 100C.

While the user for example wears the communication device 100 on the wrist or other part of the body, the acceleration sensor 100c1 measures the acceleration or change in acceleration occurring in the communication device 100. In this way, the exercise energy resulting from the user's body motion is measured. Information related to the results of measurement by the acceleration sensor 100c is included in the sensor signal.

While the user for example wears the communication device 100 on the wrist or other part of the body, the temperature sensor 100c2 measures the temperature or change in temperature of the environment surrounding the user as sensed by the communication device 100. In this way, the energy resulting from the user's activity is identified. Information related to the results of measurement by the temperature sensor 100c2 is included in the sensor signal.

While the user for example wears the communication device 100 on the wrist or other part of the body, the humidity sensor 100c3 measures the humidity or change in humidity of the environment surrounding the user as sensed by the communication device 100. In this way, the exercise energy resulting from the user's activity is identified. Information related to the results of measurement by the humidity sensor 100c3 is included in the sensor signal.

While the user for example wears the communication device 100 on the wrist or other part of the body, the body temperature sensor 100c4 measures the body temperature or change in body temperature of the user as sensed by the communication device 100. In this way, the exercise energy resulting from the user's body motion is measured. Information related to the results of measurement by the body temperature sensor 100c4 is included in the sensor signal.

While the user for example wears the communication device 100 on the wrist or other part of the body, the heart rate sensor 100c5 measures the heart rate or change in heart rate of the user as sensed by the communication device 100. In this way, the exercise energy resulting from the user's body motion is measured. Information related to the results of measurement by the heart rate sensor 100c5 is included in the sensor signal.

While the user for example wears the communication device 100 on the wrist or other part of the body, the speech recognition sensor 100c6 measures the voice of the user and of the surroundings as sensed by the communication device 100. In this way, the energy resulting from the user's activity is identified. Information related to the results of measurement by the speech recognition sensor 100c6 is included in the sensor signal. The principle of speech recognition may, for example, be a method to store a speech recognition program in the memory 100B or the like and use the program to recognize speech. Speech may also be inferred based on characteristics of voice frequency, or speech may be recognized using artificial intelligence or the like.

While the user for example wears the communication device 100 on the wrist or other part of the body, the illumination sensor 100c7 measures the illumination or change in illumination of the environment surrounding the user as sensed by the communication device 100. In this way, the energy resulting from the user's activity is identified. Information related to the results of measurement by the illumination sensor 100c7 is included in the sensor signal.

While the user for example wears the communication device 100 on the wrist or other part of the body, the position information sensor 100c8 measures position information or change in position information of the user as sensed by the communication device 100. In this way, the energy resulting from the user's activity is identified. Information related to the results of measurement by the position information sensor 100c8 is included in the sensor signal.

As illustrated in FIG. 66, the information communication interface 100D for example can transmit the above-mentioned sensor signal to the terminal 14A. At this time, the sensor signal may be converted into a predetermined electrical signal and transmitted. The information communication interface 100D can also receive various signals transmitted from the terminal 14A.

The display 100E may, for example, be configured with a liquid crystal display and can display the results of measurement by the sensor unit 100C and the like.

By being pressed or contacted by the user or the like, the transmit button 100F can transmit the sensor signal received from the sensor unit 100C. The sensor signal is, for example, transmitted to the terminal 14A or the server for content delivery 18.

As described above, the communication device 100 can quantitatively identify the amount of energy expended on actions and activities of the user wearing the communication device 100, such as exercise, jogging, walking, dancing, or sports, and can transmit the result to an external destination as the sensor signal of the sensor unit 100C.

### (Processing to Grant a Privilege)

The following describes processing to grant a privilege in Example 6. The following is only an example of processing to grant a privilege, and processing is not limited to this example.

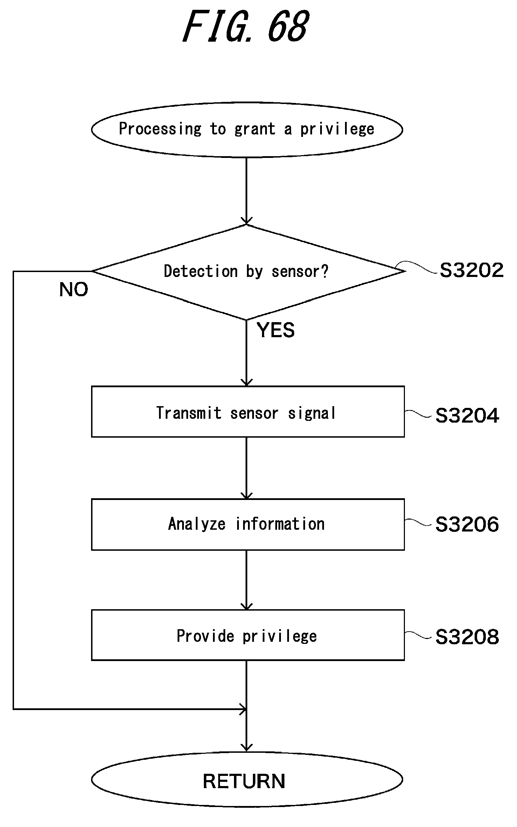

As illustrated in FIG. 68, the sensor unit 100C of the communication device 100 judges whether outside energy has been detected (S3202). In this case, the trigger for detection by the sensor unit 100C is, for example, that the communication device 100 be worn on the wrist and that a sensor mode of the communication device 100 is ON. Upon some type of outside energy being applied to the communication device 100, the sensor unit 100C detects the energy.

Such outside energy for example includes exercise energy generated when the user engages in sports, dancing, jogging, swimming, or walking, and also includes activity energy generated when the user participates in a live event and moves along with the artist. In other words, all of the energy generated as a result of motion by the user's body is captured by the sensor unit 100C and output as a sensor signal.

Next, when outside energy is detected by the sensor unit 100C, the information communication interface 100D transmits the sensor signal at a predetermined time (S3204). The sensor signal is transmitted to the terminal 14A, but instead of the terminal 14A, the sensor signal may be transmitted to the server for content delivery 18. Furthermore, the sensor signal may be transmitted to both the terminal 14A and the server for content delivery 18.

The time at which the sensor signal is transmitted from the sensor unit 100C may, for example, be a time that is prescribed in advance by a program. In this case, the sensor signal may be transmitted at the moment of detection by the sensor unit 100C, or the sensor signal may be accumulated in the memory 100B, and after a predetermined time has elapsed, the accumulated sensor signals may be transmitted automatically.

Furthermore, the sensor signal may be transmitted by operating the transmit button 100F of the communication device 100. The user can thus transmit the sensor signal at any desired time. In this case, the sensor signals occurring between the previous time of transmission and the current time of transmission may be accumulated, and all of the sensor signals may be transmitted at the current time of transmission.

The sensor signal is not limited to a structure in which one type of sensor signal is transmitted once when the communication device 100 detects outside energy one time. For example, the number of detections by the sensor unit 100C in a predetermined length of time may be counted, and a sensor signal provided with information indicating the count may be generated and transmitted. With this structure, since information on the count is included in one type of sensor signal, it suffices to transmit one type of sensor signal once.

The sensor signal transmitted from the communication device 100 or the terminal 14A is, for example, input into the communication interface 18e of the server for content delivery 18.

Next, based on the sensor signal input into the communication interface 18e, the information analyzer 18a23 of the server for content delivery 18 analyzes the information from the sensor unit 100C (S3206). At this time, the information analyzer 18a23 quantifies the energy based on the sensor signal. Furthermore, the quantified data is saved in the ninth memory area b9 of the memory 18b as activity data or vital data for each user.

As described above, the relationship between the numerical value of the energy and the user is saved in the ninth memory area b9 of the memory 18b. Users can each display the numerical value of their own energy using the terminal 14A or the communication device 100. At this time, the user's terminal 14A or communication device 100 may access the server for content delivery 18 and acquire information stored in the ninth memory area b9 of the memory 18b. Furthermore, the information may be transmitted from the server for content delivery 18 to the user's own terminal 14A or communication device 100, saved on the user's own terminal 14A or communication device 100, and displayed.

The sensor unit 100C is configured with the types of sensors illustrated in FIG. 67, and the energy information that can be acquired from each type of sensor is as described above.

Next, the privilege granter 18a24 of the server for content delivery 18 determines a privilege in accordance with analysis of information based on the sensor signal (S3208). The type of privilege is, for example, determined using the privilege table. Examples of the type of privilege are as described above. The amount of energy that users expend is thus returned to the users themselves, thereby making the users even more active. Furthermore, displaying a ranking of support for artists allows a visually confirmable return for the artist that the user supports as well.

In particular, when the type of privilege is to convert the amount of energy expended by the user or artist into points that act as a discount ticket, merchandise purchased using the server for content delivery 18 is discounted by a predetermined monetary amount.

Alternatively, by constructing a technique to link the server for content delivery 18 to one's own electronic money system, a predetermined discount can be received when purchasing merchandise at a store, such as a convenience store or department store, using an existing electronic money system, without going through the server for content delivery 18.

Furthermore, by constructing a technique to link the server for content delivery 18 over a network to the system of a predetermined medical institution, health advice can be obtained in real time from a medical professional. As a result, the user or artist's daily health management can be enhanced.

As described above, the relationship between the type of privilege and the user is saved in the eleventh memory area b11 of the memory 18b. Users can each display their own privilege information using the terminal 14A or the communication device 100. At this time, the user's terminal 14A or communication device 100 may access the server for content delivery 18 and acquire information stored in the eleventh memory area b1 of the memory 18b. Furthermore, the information may be transmitted from the server for content delivery 18 to the user's own terminal 14A or communication device 100, saved on the user's own terminal 14A or communication device 100, and displayed.

According to Example 6, by wearing the communication device 100, the exercise energy generated as a result of the body motion of the user or the like, or the activity energy generated due to the user's activity, can be acquired or captured by the communication device 100. By analyzing the energy with the information analyzer 18a23 of the server for content delivery 18, the amount of energy consumed by each user is identified. Users can acquire information related to their own amount of energy consumption from the terminal 14A and use the information for a variety of purposes. Furthermore, by providing a predetermined privilege for the user's amount of energy consumption, the user's activity is returned to the user in the form of a privilege, making the user even more enthusiastic about support activities for an artist.

As one example of use, a ranking of the amount of energy consumed by users may be displayed, and users or the artists supported by the users may compete with each other. As an example of privileges, information related to a predetermined reward, discount coupon, or discount ticket for the top-ranked user(s) may be transmitted from the server for content delivery 18 to the terminal 14A of the top-ranked user(s).

As an example of the privilege, a discount when purchasing merchandise may be obtained by converting the amount of energy the user consumed through activity into points, a coupon, or electronic money. For example, when purchasing merchandise or a service with the sales function of the server for content delivery 18, the points, coupon, or electronic money may be used for a discounted purchase. A discount on the price of the merchandise or service may thus be obtained, and the use of electronic money can also be encouraged.

The points, coupon, or electronic money are not limited to being used when purchasing merchandise or services using the server for content delivery 18 and may also be used when purchasing merchandise at a store, such as a convenience store or department store.

As an example of the privilege, an advertising space, within the application, for displaying a predetermined advertisement may be provided in accordance with the user's amount of energy. The advertising space may of course be provided to the artist that the user supports. The size (area) of the advertising space is proportional to the user's amount of energy. By displaying an advertisement or the like for a sponsor or another company in the advertising space, the user or artist can obtain a predetermined reward from the advertiser. This is also a valid business model for passing on the advertising fee from the advertiser to the user or artist.

### (Illustrative Case)

The following describes an illustrative case of Example 6.

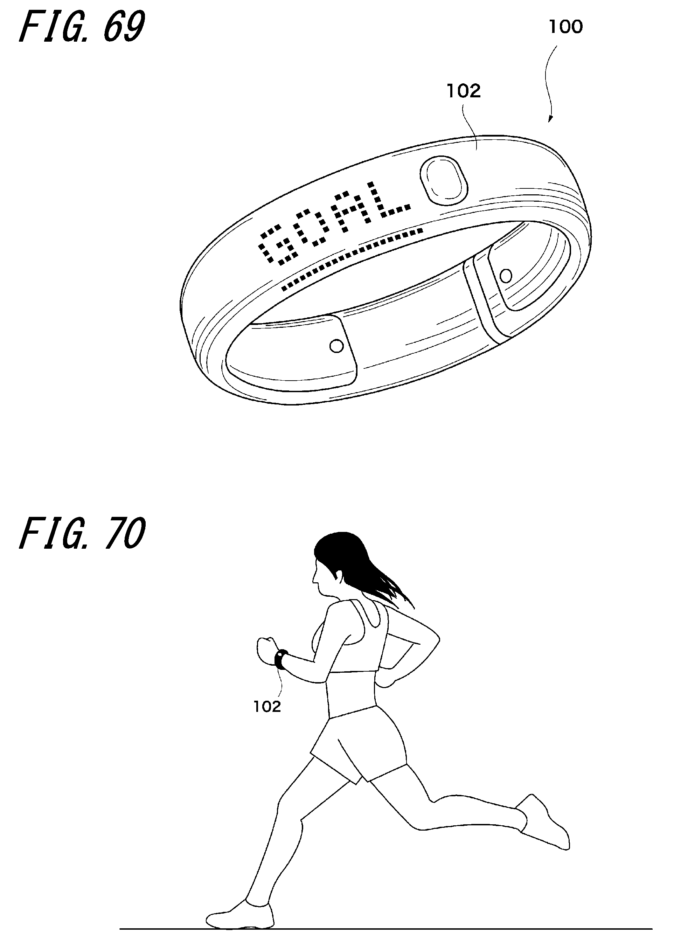

As illustrated in FIG. 69, as the communication device 100 of Illustrative Case 1, for example a band 102 wearable on the wrist or other body part of the user or the like is convenient. In this case, the communication device 100 may be called a MaTuRi band or a MaTuRi fuel band.

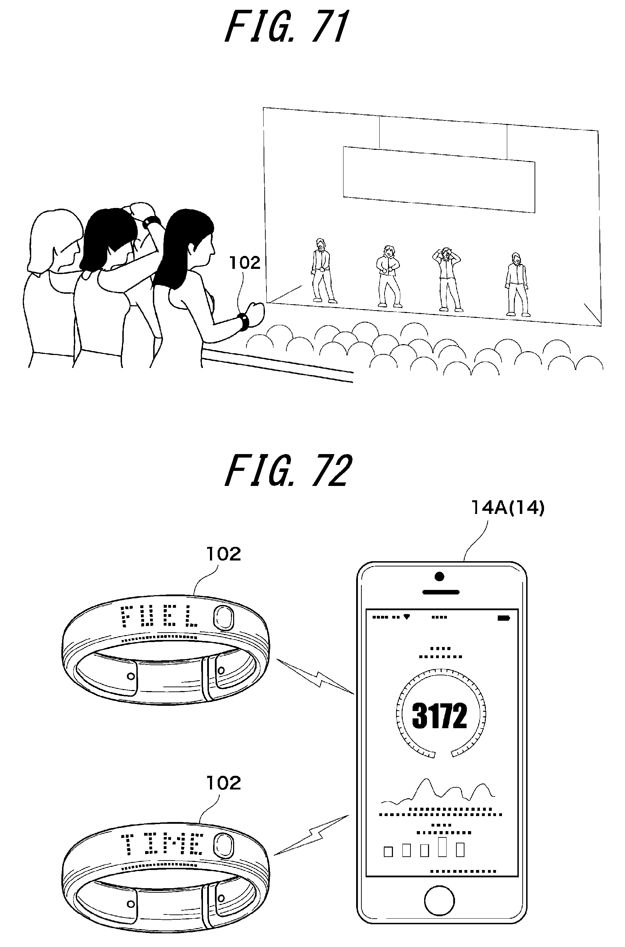

Since the user or the like can easily wear the band 102 on the wrist or ankle, the exercise energy resulting from body motion can be detected. Therefore, when the user goes jogging as in Usage Example 1 illustrated in FIG. 70, or when the user participates in a live event and dances as in Usage Example 2 illustrated in FIG. 71, the exercise energy resulting from body motion can be acquired easily and accurately.

As illustrated in FIG. 72, these bands 102 can connect to the user's own terminal 14A, for example wirelessly. Therefore, the sensor signal from the sensor unit 100C of the band 102 can be transmitted to the terminal 14A side wirelessly.

In this way, the combination of the communication device 100 and the server for content delivery 18 returns the user's own activity to the user and can be put to use in activities to promote the user's own health.

### [Example 7]

Next, Example 7 of a content delivery system and method of delivering content according to one of the disclosed embodiments is described with reference to the drawings. Structural elements that overlap with the structure of the content delivery system and method of delivering content according to the above Embodiments and Examples are labeled with the same reference signs, and a description thereof is omitted.

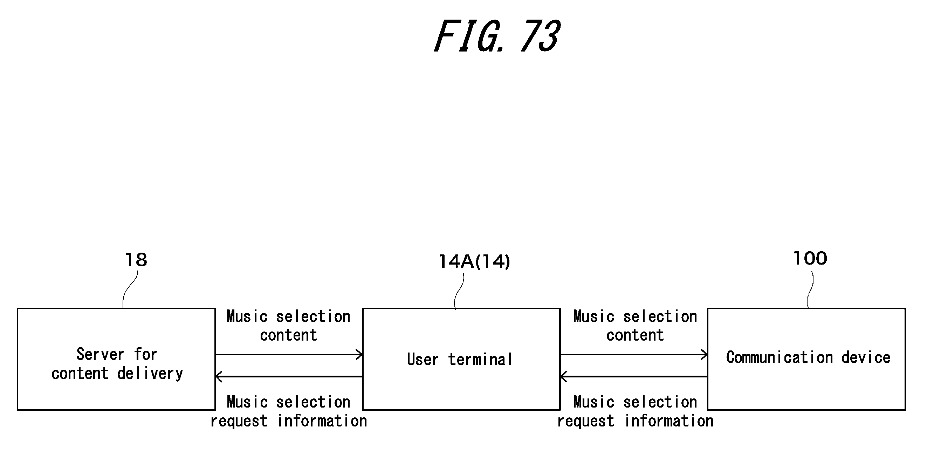

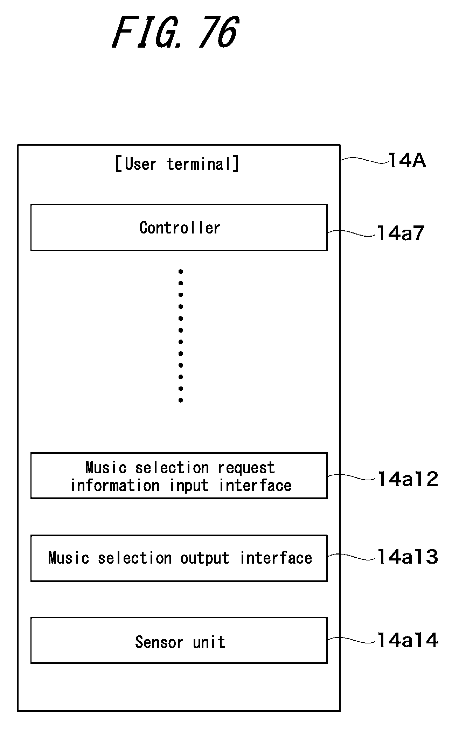

As illustrated in FIG. 73, Example 7 adopts a structure in which the server for content delivery 18 can be connected for example wirelessly to the user terminal 14A or the artist terminal 14B. The user terminal 14A or the artist terminal 14B for example includes a music selection request information input interface 14a12 (see FIG. 76), converts the music selection request information that is input by the music selection request information input interface 14a12 into a predetermined signal, and transmits the result to the server for content delivery 18, for example wirelessly. The server for content delivery 18 selects a predetermined piece of music based on the music selection request information and transmits the piece of music to the user terminal 14A or the artist terminal 14B as music selection content information. The piece of music is then output from the user terminal 14A or the artist terminal 14B, and the user or the artist can listen to the piece of music. In this way, the users or artists can discover a piece of music they had not heard before, and the piece of music's artist can be publicized. As a result, a contribution can be made to developing both the artist and the music industry.

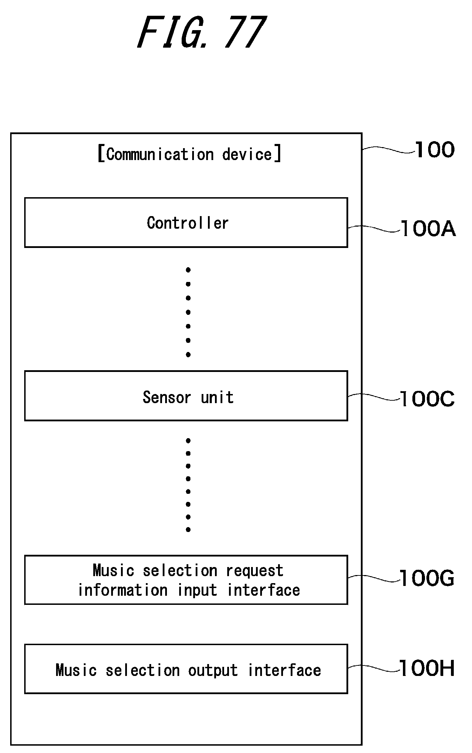

Here, instead of the terminals 14A and 14B, or along with the terminals 14A and 14B, the communication device 100 may be used. The communication device 100 for example includes a music selection request information input interface 100G (see FIG. 77), converts the music selection request information that is input by the music selection request information input interface 100G into a predetermined signal, and transmits the result to the server for content delivery 18 wirelessly. The transmission path of the signal at this time may traverse the terminal 14A or 14B.

In Example 7, for example the user wears the communication device 100 or the terminal 14A, a piece of music the user desires or the best piece of music for the user's physical condition or the like is selected, and the piece of music is delivered as music selection content information. In Example 7, even if the user does not know the name of the piece of music, the best piece of music for the user is proposed based on input of the characteristics/type or the like of the piece of music that the user desires. Furthermore, Example 7 proposes the best piece of music for the user's physical condition. In this way, not only is the best piece of music for the user's mental condition or physical condition proposed, but also the user is provided with the opportunity to hear music by artists with whom the user is unfamiliar and music that the user has not heard before, thereby stimulating the music industry.

While the following illustrates and describes an example of the user terminal 14A as a terminal, a similar structure may be adopted for the artist terminal 14B as well.

### (Structure of Server for Content Delivery)

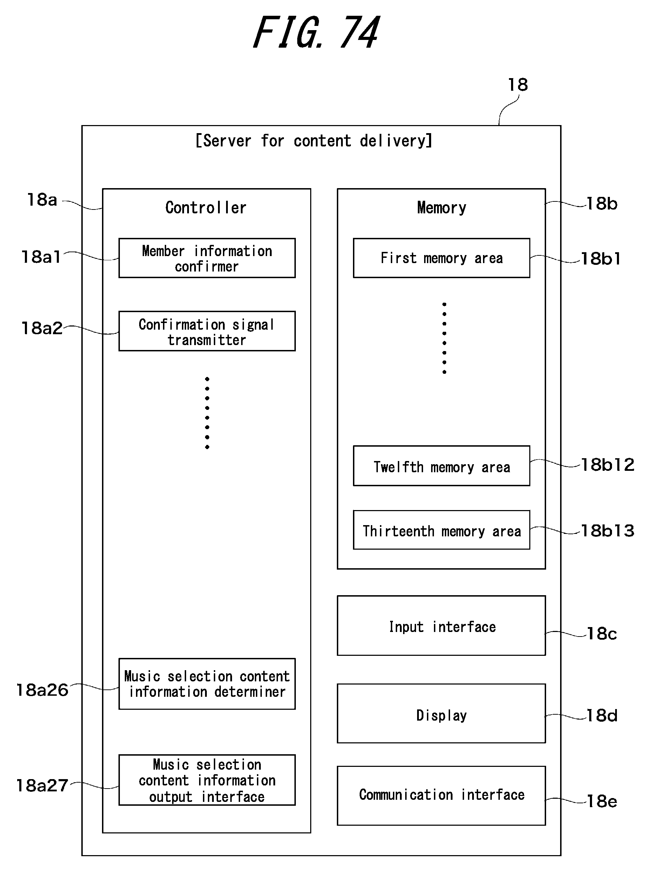

As illustrated in FIG. 74, a controller 18 of the server for content delivery 18 for example includes a music selection content information determiner 18a26 and a music selection content information output interface 18a27.

For example based on the music selection request information transmitted from the terminal 14A or the communication device 100, the music selection content information determiner 18a26 generates music selection content information containing one or a combination of a plurality of best pieces of music for the user. At this time, combinations of music selection request information and pieces of music are, for example, stored in a twelfth memory area 18b12 of the memory 18b as a music selection content determination table. The music selection content information determiner 18a26 generates music selection content information based on the music selection content determination table.

Specifically, for example the user or the like transmits the music selection request information by inputting the name of a desired piece of music, characteristics of a piece of music, or the like. At this time, information related to the name of the piece of music or to the characteristics/type or the like of the piece of music is included in the music selection request information.

Here, the characteristics/type of piece of music for example include all information related to music, including whether the piece of music is cheerful or sad, the piece of music's tempo, beat, and rhythm, whether the piece of music is popular music, a performance, a ballad, classical music, instrumental, or a cappella, and so forth.

Furthermore, information designating elements of music may be included in the music selection request information. Elements of sound include rhythm, melody, harmony, meter, tempo, tonality, dynamics, articulation, phrase, bassline, and the like.

Rhythm is motion having periods that are continuously marked by constant intervals along the flow of time. Regularly combining the pulse, dividing into bars, and controlling changes to stretch out or shorten the temporal flow allows regularities, irregular movements, and free movements to be created. Rhythm is found in all aspects of people's life phenomena and activities, starting with vital phenomena of the body, such as pulse, breathing, and exercise, and also in the rhythm of work, rhythms of life, and divisions of time and time periods such as days, weeks, months, and years. As a result of abnormalities in mental and physical functions, such biological rhythms are disrupted. A loss of rhythm also disrupts the balance of mental and physical functions. Rhythm thus affects everything from people's basic functions to their daily lives.

Melody, which originates in nonverbal audio communication, refers to a musically coherent series of sounds (normally single tones) that include pitch changes. As seen in ethnic music, folk ballads, and folk songs, melody reflects the sense of sound of an ethnic group or time period and represents messages and emotions such as climate and culture, personal feelings and thoughts, and the like. Such messages greatly affect people's emotions. Changes in sound motion and changes in sound height within a melody can be divided into upward and downward "directions", conjunct or disjunct "motion", and "sustainment" of temporal progress such as repetition of the same sound or suspension. A downward melody boosts the function of the parasympathetic nerve, relieves stress with the most psychologically and physiologically natural melody for humans, and provides comfort. An upward melody boosts the function of the sympathetic nerve and awakens people, making them active. As for temporal changes, short time intervals increase stress and emphasize sustention and continuity, whereas long time intervals become familiar and monotonous.

Harmony refers to the progress and combination of chords. Sounds that are considered pleasant differ by time period and by region. A continuous flow of simple, clear consonance is natural and non-provocative, providing a sense of security and relief, whereas dissonance provokes mild tension and makes the listener seek an escape to stable consonance. Music that appropriately includes dissonance within consonance has the effect of restoring a person's mental and emotional balance.

Meter is a cyclic pattern of strong and weak beats, related to rhythm. Meter is used to control bodily motion. Light duple time, as in a march, elicits rhythmical, lighthearted movement, whereas a 6/8 time measure elicits continuous movement such as rotation. Triple time creates a timing appropriate for repeating "move and rest" in synchronization with breathing. The energy for tapping the beat provides a sense of the body's weight and a sense of emotional stability downwards from above, towards the lower back and stomach, and also provides a sense of expansion upwards from below and a sense of outward dispersion. In life, clapping one's hands is a bodily movement that expresses feelings such as deep emotion, reception, consent, or a pledge.

Tempo refers to the length of a beat, i.e. to the speed of the pulse, and greatly affects the image of a piece of music. Tempo controls emotional states and the speed of physical activity such as playing music and breathing while singing. Furthermore, tempo varies by activity, feeling, and age, with adaptive standards existing for each.

Tonality refers to a sound system having a central sound, with a musical scale being centered on that sound (referential tone). As narrowly defined, tonality includes major and minor keys. Music in a major key is generally happy and active, whereas music in a minor key sounds lonely and sad. When improvising, a major key and a minor key may be mixed, and atonal music can also be created. Transitioning from one key to another allows various effects, such as providing accompaniment over the vocal range, performing over an appropriate sound range for releasing stress, and performing with a sound range and rhythm that are relaxing. Transitioning to another key during a piece of music also makes it possible to seek a proper degree of stress and to change the listener's mood.

Dynamics are represented as weak, strong, strengthening, weakening, or the like by adding expression to music through the relative strength of sound. A strong, energetic, and uplifting feeling or a soft, gentle and calm feeling may be expressed. Changes in body movement may be provoked by controlling the extent of change in the strength of sound, such as slight, gentle changes or sudden, drastic changes.

Articulation adds movement to melody by cutting off or joining sounds, so as to play two sounds separately or join them together smoothly, and allows a variety of feelings to be expressed, such alternating between heavy sounds and light, weak sounds that carry well.

A phrase refers to a natural division in a musical passage or flow, like punctuation within a text. Phrases are often divided into four measures or two measures, sometimes eight measures. The length of the phrase is also affected by the tempo and creates a leisurely feeling or an energetic impression. A deep intake of breath between phrases expresses affection, abundance, sadness, or prayer.

The movement of sound (bassline) also affects emotions and movement.

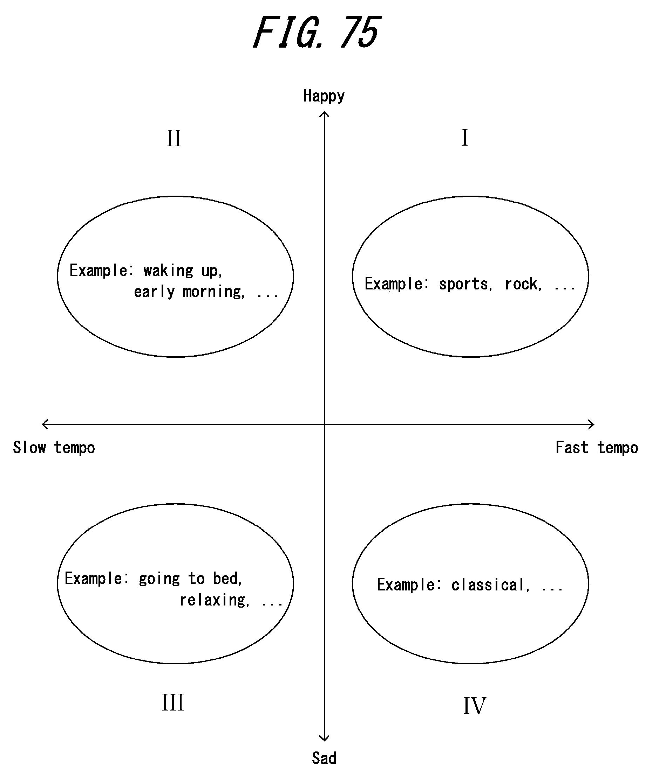

For example, as illustrated in FIG. 75, based on coordinate axes in which the vertical axis represents the mood of a piece of music, and the horizontal axis represents the speed of the tempo, the best music for playing sports or rock music is selected in the first quadrant, the best music for waking up is selected in the second quadrant, the best music for going to bed or when relaxing is selected in the third quadrant, and classical music or the like is selected in the fourth quadrant. Users can individually input information related to the vertical axis and the horizontal axis from the terminal 14A or the like, and a piece of music corresponding to the result of input is selected by the music selection content information determiner 18a26. In this case, music selection information that is divided up by the quadrants in FIG. 75 is stored in the twelfth memory area 18b12 of the memory 18b illustrated in FIG. 74.

The user or the like may, for example, input the information related to these music selection requests from the terminal 14A or the communication device 100. The input may be in the form of character input, selection using touchscreen buttons, or voice input from the user.

The terminal 14A or communication device 100 may include a sensor unit 100C that can detect the physical condition of the user or the like, and a piece of music may be selected by the music selection content information determiner 18a26 based on a sensor signal detected by the sensor unit 100C. In this way, since the current physical condition of the user or the like is output as a sensor signal, the best piece of music matching the physical condition of the user or the like can be selected. As the sensor unit 100C, for example the sensor unit 100C illustrated in FIG. 67 may be used.

The music selection content information determiner 18a26 determines a variety of pieces of music automatically depending on factors such as the circumstances at the time of information input by the user. Furthermore, video, an image, or the like may be selected in addition to a piece of music or instead of a piece of music.

The music selection content information output interface 18a27 outputs music selection content information that includes one or a plurality of pieces of music determined by the music selection content information determiner 18a26 to the terminal 14A or the communication device 100.

The music selection content information determiner 18a26 and the music selection content information output interface 18a27 may be disposed on the terminal 14A side and/or on the communication device 100 side.

As illustrated in FIG. 74, the memory 18b of the server for content delivery 18 includes the twelfth memory area 18b12 and a thirteenth memory area 18b13.

The music selection content determination table prescribing the correspondence relationship between the music selection request information from the user or the like and pieces of music is stored in the twelfth memory area 18b12. In other words, data related to the best pieces of music for input information from the user is stored in the twelfth memory area 18b12. For example, the correspondence relationship between elements of music input by the user or the like and a plurality of pieces of music is prescribed in advance. The correspondence relationship between a plurality of pieces of music and a sensor signal, from a sensor unit 14a14 of the terminal 14A or the sensor unit 100C of the communication device 100, that indicates the physical condition of the user or the like is prescribed. By using this music selection content determination table, the music selection content information determiner 18a26 can easily determine the piece of music that should be selected for the input information from the user or the like.

A music selection / advertisement content determination table indicating the correspondence relationship between the input information from the user or the like, advertisements, and pieces of music is stored in the thirteenth memory area 18b13. The music selection content determination table is stored in the twelfth memory area 18b12, and the music selection / advertisement content determination table is a table that adds advertisement details to the music selection content determination table.

For example, users include paying members, non-paying members, and the like. When a user who is a paying member transmits music selection request information, the music selection content determination table stored in the twelfth memory area 18b12 is used. When a user who is a non-paying member transmits music selection request information, the music selection / advertisement content determination table stored in the thirteenth memory area 18b13 is used. In this way, music selection content with no advertisements can be transmitted to paying members, whereas music selection content that includes advertisements can be transmitted to non-paying members. As a result, a predetermined advertising fee can be collected from an advertiser whose advertisement is inserted into the music selection content, and a portion or all of the advertising fee can be returned to the non-paying members or to artists. This can provide an innovative business model to stimulate the music industry further.

The music selection / advertisement content determination table prescribes the order of one or a plurality of pieces of music and advertisements. For example, a variety of physical conditions of the user can be detected by the sensor unit 14a14 of the terminal 14A or the sensor unit 100C of the communication device 100, and these results of detection can be transmitted to the server for content delivery 18 as a sensor signal.

For example, in order to increase the pace while the user is running, the user requests a piece of music for increasing the pace over the current pace in the information that the user inputs, and the music selection content information determiner 18a26 selects one or a plurality of pieces of music. At this time, the music selection content information determiner 18a26 may generate music selection content information based on the sensor signal from a heart rate sensor or a pulse rate sensor in the sensor unit 14a14 of the terminal 14A or the sensor unit 100C of the communication device 100.

When the user is running, a position information sensor in the sensor unit 14a14 of the terminal 14A or the sensor unit 100C of the communication device 100 may acquire the position that the user has currently passed, and the music selection content information determiner 18a26 may include, in the music selection content information, advertisement information that advertises a company or a store close to the position information.

### (Structure of Terminal)

As illustrated in FIG. 76, the user terminal 14A for example includes the music selection request information input interface 14a12, a music selection output interface 14a13, and the sensor unit 14a13.

The music selection request information input interface 14a12 issues a request to the server for content delivery 18 to deliver the piece of music that the user or the like desires or the best piece of music for the physical condition of the user or the like. In the music selection request information input interface 14a12, the user or the like can input predetermined character information or the like or can provide input by selecting a predetermined icon in a touchscreen format.

In the input information, the music selection request information input interface 14a12 includes a sensor signal corresponding to the result of detection by the sensor unit 14a14. In this way, information related to the current physical condition of the user or the like as detected by the sensor unit 14a14 can be provided to the server for content delivery 18.

The music selection output interface 14a13 outputs the music selection determined by the music selection content information determiner 18a26 of the server for content delivery 18. The music selection output interface 14a13 functions as a speaker.

The sensor unit 14a14 for example has a similar structure to that of the sensor unit 100C illustrated in FIG. 67 and includes an acceleration sensor, temperature sensor, humidity sensor, body temperature sensor, heart rate sensor, speech recognition sensor, illumination sensor, position information sensor, and the like. A description of each sensor is omitted.

### (Structure of Communication Device)

As illustrated in FIG. 77, the communication device 100 is formed in a shape that can be worn on a part of the body of a person such as the user, for example on the wrist, ankle, forehead/head, or the like.

The communication device 100 for example includes the music selection request information input interface 100G, a music selection output interface 100H, and the sensor unit 100C.

The music selection request information input interface 100G has a structure similar to that of the music selection request information input interface 14a12 of the terminal 14A. The music selection output interface 100H has a structure similar to that of the music selection output interface 14a13 of the terminal 14A. The sensor unit 100C has a structure similar to that of the sensor unit 100C illustrated in FIG. 66. A detailed description of the constituent elements of the sensor unit 100C is omitted.

A structure may be adopted in which the music selection request information input interface 100G, music selection output interface 100H, and sensor unit 100C of the communication device 100 are disposed on the terminal 14A side or are disposed on both the terminal side and the communication device side.

At least a portion of the constituent elements of the terminal 14A or the constituent elements of the server for content delivery 18 may be disposed in the communication device 100 of Example 7. In this way, among the constituent elements of the terminal 14A or the constituent elements of the server for content delivery 18, constituent elements that overlap with the constituent elements of the communication device 100 may be omitted as appropriate.

### (Processing to Determine Music Selection Content Information)

Next, processing to determine the music selection content information in Example 7 is described. The following is only an example of processing to determine the music selection content information, and processing is not limited to this example.

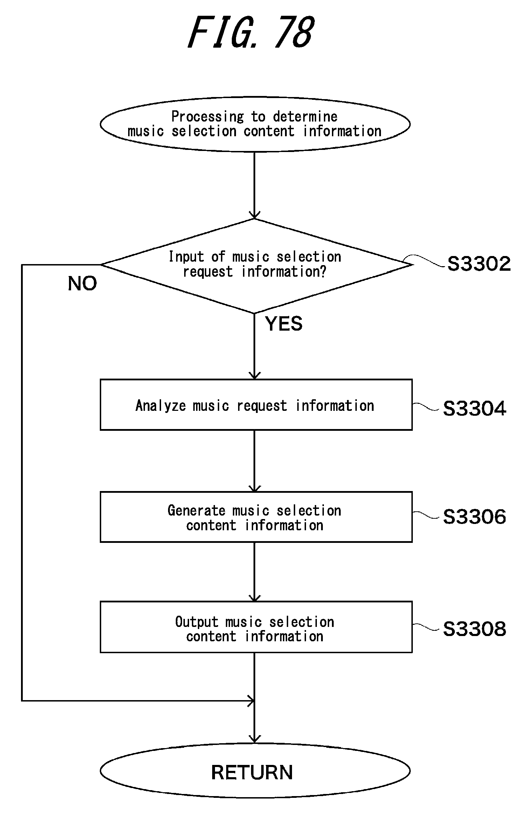

As illustrated in FIG. 78, the controller 18a of the server for content delivery 18 judges whether music selection request information has been input (S3302). The music selection request information for example is information input from the music selection request information input interface 100G of the communication device 100 or the music selection request information input interface 14a12 of the terminal 14A and requests music selection.

Here, the form of input for the music selection request information may, for example, be to input the name of a piece of music or the type, characteristics, and so forth of music that the user or the like desires as predetermined character information or by selecting a selection button in a touchscreen format. The user may also input the name of a piece of music or the type, characteristics, and so forth of music that the user or the like desires by voice.

The sensor unit 100C provided in the communication device 100 and/or the sensor unit 14a14 provided in the terminal 14A may detect the physical condition of the user or the like, generate a sensor signal that indicates the physical condition, and transmit the sensor signal to the server for content delivery 18. In this form, the sensor signal of the sensor unit 100C or the sensor unit 14a14 functions as the music selection request information.

Next, when it is judged that the music selection request information has been input (S3302: YES), the music selection content information determiner 18a26 analyzes the music selection request information (S3304). Here, as the music selection request information, information input from the communication device 100 and/or the terminal 14A or the sensor signal transmitted from the sensor unit 100C and/or the sensor unit 14a14 is analyzed, and information on the piece of music to be selected is extracted.

Next, the music selection content information determiner 18a26 identifies one or a plurality of pieces of music to be selected based on the results of analysis of the music selection request information and generates music selection content information that combines the pieces of music as appropriate (S3306).

The music selection content information is generated based on the tables stored in the twelfth memory area 18b12 or the thirteenth memory area 18b13 of the memory 18b. For example, when the music selection request information is input from a paying member, music selection content not including an advertisement (content containing only pieces of music) is generated. At this time, the music selection content determination table stored in the twelfth memory area 18b12 is used.

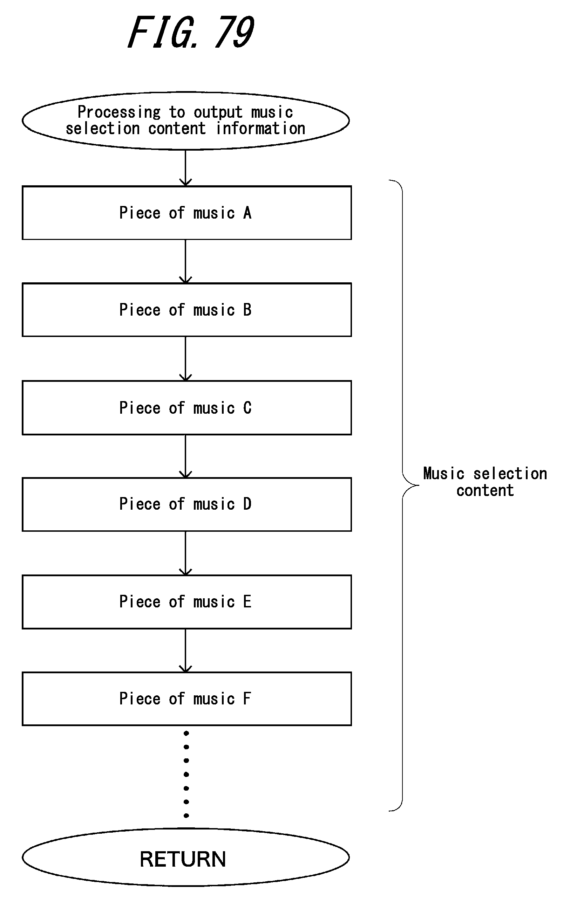

FIG. 79 illustrates an example of music selection content information using the music selection content determination table. FIG. 79 illustrates a sequence of music selection content information containing a combination of only a plurality of pieces of music.

On the other hand, for example when music selection request information is input from a non-paying member, music selection content including an advertisement (content combining advertisements and pieces of music) is generated. At this time, the advertisement / music selection content determination table stored in the thirteenth memory area 18b13 is used.

Here, the music selection content that includes advertisements and pieces of music is not limited to a structure that includes an advertisement between two pieces of music and may also include the case of synthetic content in which predetermined advertisement information interrupts a piece of music.

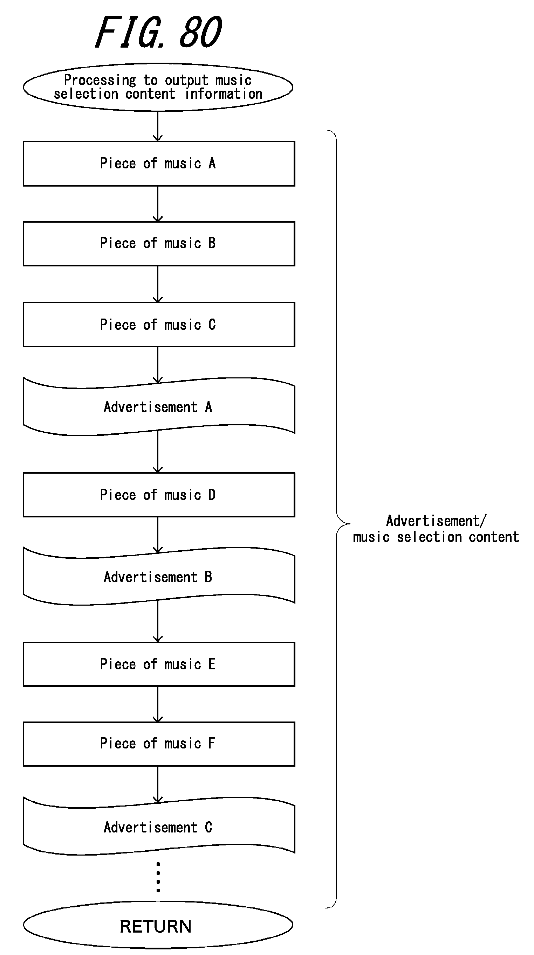

FIG. 80 illustrates an example of music selection content information using the advertisement / music selection content determination table. FIG. 80 illustrates a sequence of music selection content information containing a combination of a plurality of pieces of music and advertisements.

Here, paying members and non-paying members may be distinguished for example by providing the terminal 14A and/or the communication device 100 with identifying information for distinguishing paying members from non-paying members and including the identifying information in the input information transmitted from the terminal 14A and/or the communication device 100.

Next, the music selection content information output interface 18a27 outputs the music selection content information determined by the music selection content information determiner 18a26 to the terminal 14A and/or the communication device 100 (S3308). In this way, the selected piece of music is output by the music selection output interface 14a13 of the terminal 14A or the music selection output interface 100H of the communication device 100. As a result, a variety of pieces of music can be proposed to the user or the like.

According to Example 7, by inputting information on the name of a piece of music or the type, characteristics, and so forth of music that the user or the like desires with the terminal 14A and/or the communication device 100, the music selection content information determiner 18a26 of the server for content delivery 18 selects the best piece of music based on the input information. By transmitting pieces of music to the terminal 14A or the communication device 100 of the user or the like, the user or the like can be informed of pieces of music. This superb business model can contribute to stimulating and developing the music industry while offering strong support for artists.

In particular, not only the input information from the user or the like, but also the result of detection by the sensor unit 14a14 provided in the terminal 14A and/or the sensor unit 100C provided in the communication device 100 is output to the server for content delivery 18 as a sensor signal, and the music selection content information determiner 18a26 selects the best piece of music based on the sensor signal. The best piece of music for the user's physical condition can thus be proposed to the user or the like, allowing improvement of the user's physical condition.

For example, music and advertisements are included in the music selection content for users who are non-paying members or the like. This approach allows advertising directed to the user. An advertising fee can be collected from the advertiser, and a portion or all of the advertising fee can be allocated to support activities for artists. This is also a groundbreaking business model.

To select an advertisement, for example the address where the user is currently located or nearby position information may be input from a sensor unit (a GPS sensor or the like), and an advertisement related to a store or company located near the position information may be preferentially transmitted. In this way, the user can listen to the advertisement and actually check the advertiser's company or store, which can increase profits for the advertiser's company or store.

### (Illustrative Case)

The following describes an illustrative case of Example 7.

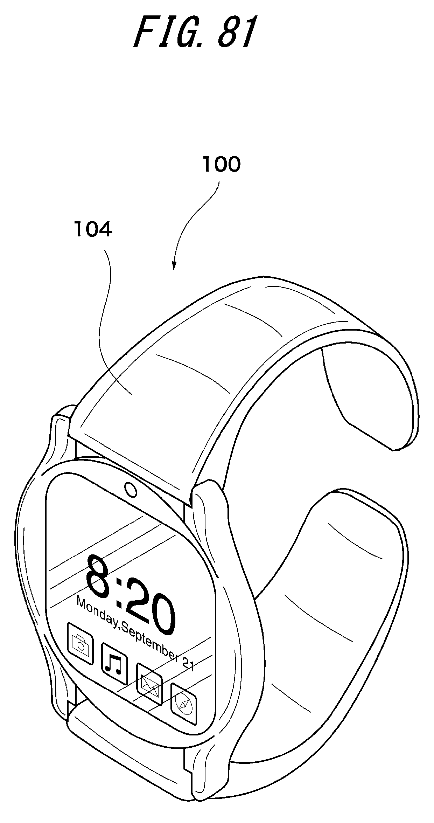

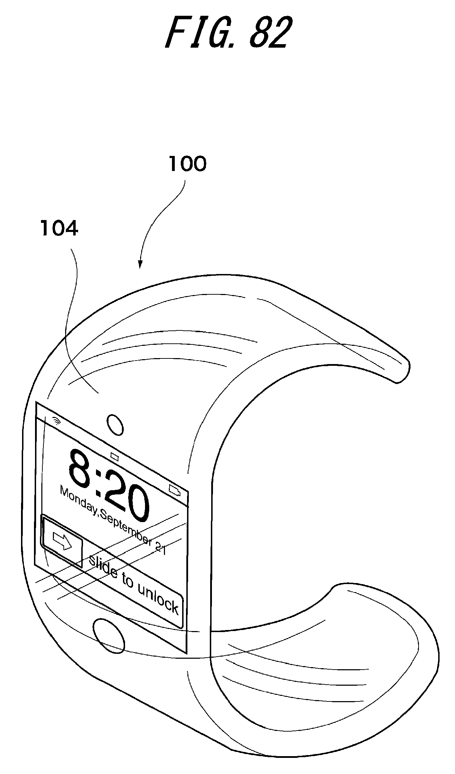

As illustrated in FIGS. 81 and 82, as the terminal 14A or the communication device 100, for example a device 104 that can be worn on the wrist or other body part of the user or the like is preferred. FIG. 81 illustrates a watch-type device as Illustrative Case 1. FIG. 82 illustrates a device in which a display is integrated into a band as Illustrative Case 2.

For example, the communication device 100 includes all or at least a portion of the constituent elements of the server for content delivery 18 or all or at least a portion of the constituent elements of the terminal 14A. The terminal 14A includes all or at least a portion of the constituent elements of the server for content delivery 18. In particular, by the communication device 100 or the terminal 14A including the controller 18a and the memory 18b of the server for content delivery 18, the server for content delivery 18 becomes unnecessary. In this structure, a dedicated communication device 100 or terminal 14A on which dedicated application software is installed may be sold, or dedicated application software may be downloaded from a cloud server or the like and installed on a commercially distributed communication device 100 or terminal 14A.

For example, by forming a small band-type device 104, the device 104 can easily be worn on the wrist or ankle of the user or the like. The user or the like can input the input information with the device 104, or the device 104 can easily detect the physical condition of the user or the like.

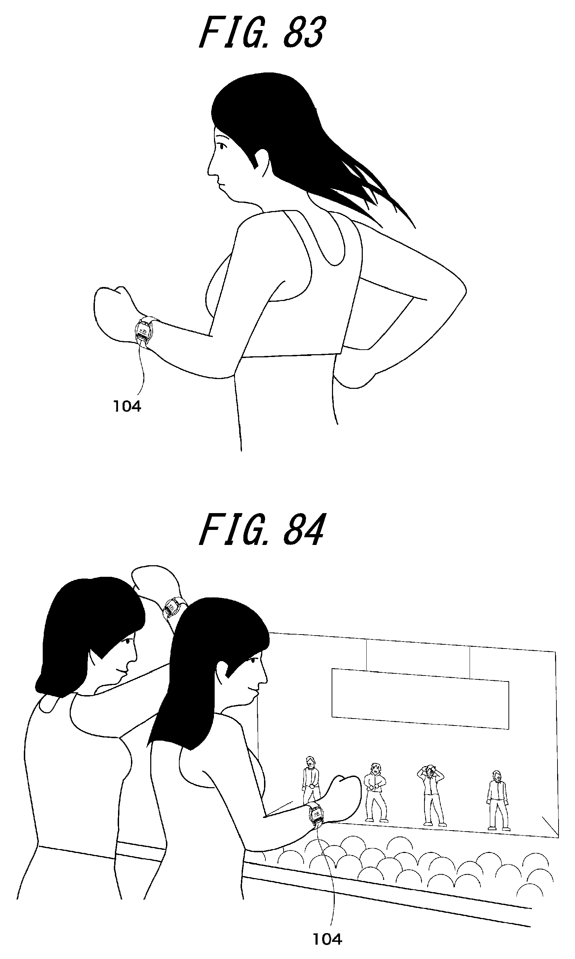

As a usage example in which the user or the like wears the device 104 on the wrist or other body part, when the user goes jogging as in Usage Example 1 illustrated in FIG. 83, or when the user participates in a live event and dances as in Usage Example 2 illustrated in FIG. 84, information related to the physical condition of the user or the like can be acquired easily and accurately.

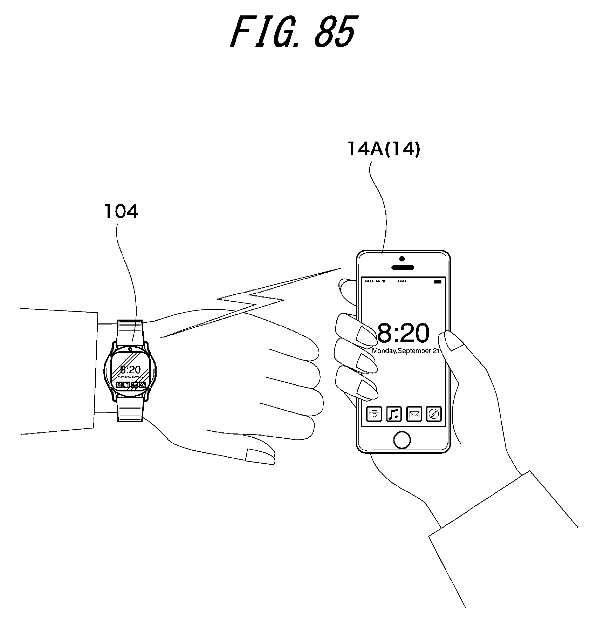

As illustrated in FIG. 85, in an exemplary configuration in which the device 104 and the terminal 14A are used in combination, the device 104 can be connected to the user's own terminal 14A for example wirelessly. In this way, the device 104 and the terminal 14A can be used to complement each other.

### [Example 8]

Next, Example 8 of a content delivery system and method of delivering content according to one of the disclosed embodiments is described with reference to the drawings. Structural elements that overlap with the structure of the content delivery system and method of delivering content according to the above Embodiments and Examples are labeled with the same reference signs, and a description thereof is omitted.

Example 8 is based on Example 4. An acceleration sensor or vibration sensor mounted in the user terminal 14A or the artist terminal 14B is used, and an advertising space is provided as a type of reward that is granted for the degree of excitement and degree of support at an artist's live event. Explanation that overlaps with Example 4 is omitted as appropriate.

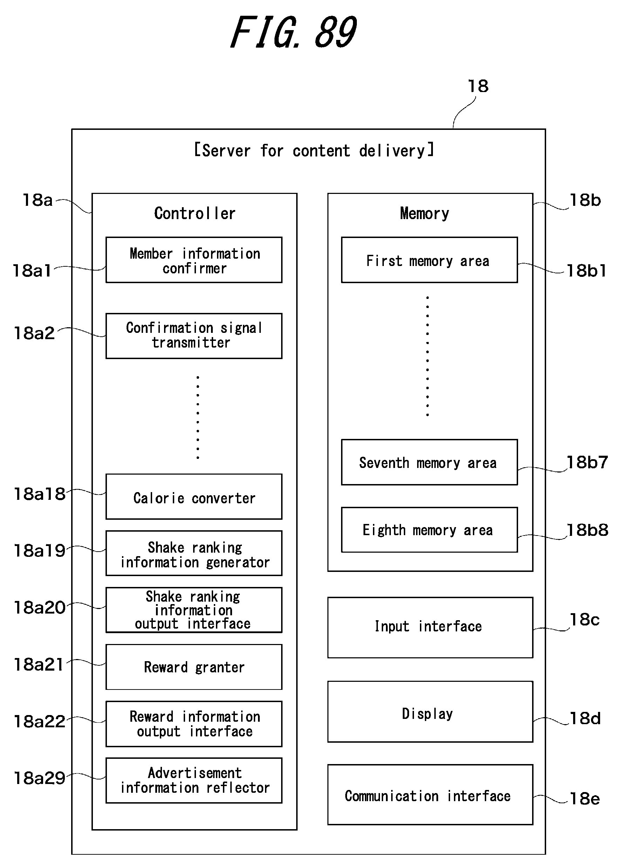

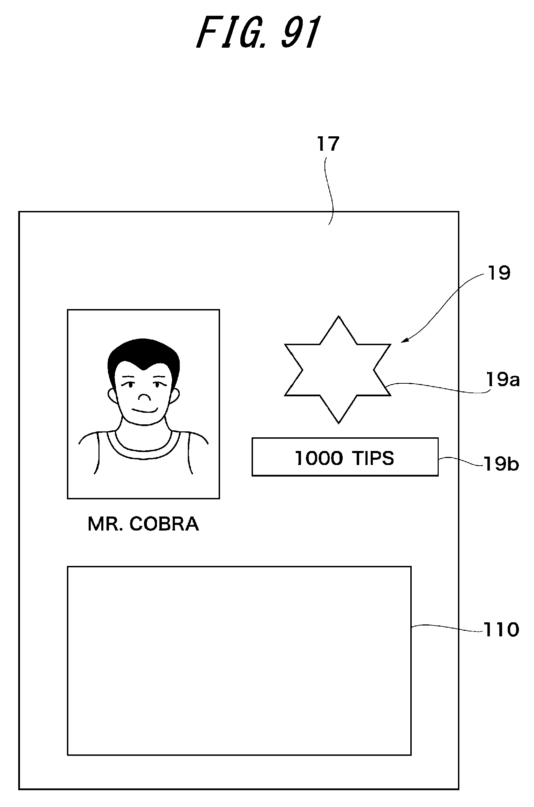

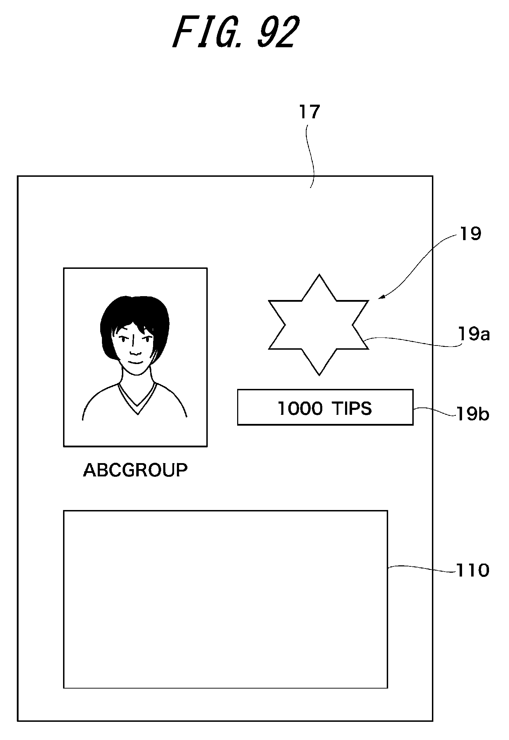

FIG. 89 illustrates the structure of the server for content delivery 18 in Example 8. The controller 18a of the server for content delivery 18 for example uses the reward granter 18a21 to provide a predetermined advertising space 110 on a predetermined screen (see FIGS. 91 and 92) to the top-ranked person(s) in the shake ranking or to related parties.

FIG. 91 illustrates one type of advertising space 110 provided on the management screen 17 of a certain user. As one example, FIG. 91 illustrates the advertising space 110 being displayed on the management screen 17 of FIG. 86.

FIG. 92 illustrates one type of advertising space 110 provided on the management screen 17 of a certain artist. As one example, FIG. 92 illustrates the advertising space 110 being displayed on the management screen 17 of FIG. 86.

Based on the shake ranking information generated by the shake ranking information generator 18a19, the reward granter 18a21 decides on the reward details, such as whether to provide the advertising space 110, the time length of provision, and the extent of the area of the advertising space.

The reward details for example include information related to the rewarded person, details on the advertising space, and the like. In this Example as well, the reward details are for example specified based on the reward detail determination program PR4 illustrated in FIG. 44.

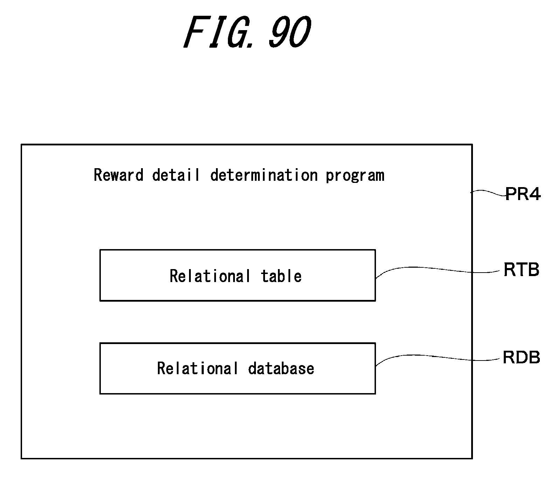

The rewarded person, who is part of the reward details, is for example the top-ranked person(s) in the shake ranking or artist(s) supported by the top-ranked person(s) in the shake ranking. As illustrated in FIG. 90, the artist(s) supported by the top-ranked person(s) in the shake ranking may be identified for example by creating a relational table RTB, in the reward detail determination program PR4, into which information related to the artists that the users support is input, and identifying the artist(s) using the relational table RTB. Alternatively, information related to the artist(s) that are associated through the user's activity within the application (such as purchasing and selling merchandise) may be created as a relational database RDB in the reward detail determination program PR4, and the artist(s) may be identified using the relational database RDB.

As the reward details, for example preparations are made to provide the area for the advertising space 110 in a predetermined screen. The extent of the area and the time length of provision of the advertising space 110 are determined by the reward granter 18a21. For example, the relationship between the top-ranked person(s) in the shake ranking and the extent of the area or the time length of provision of the advertising space 110 is determined in advance.

Specifically, an advertising space 110 with a big size (large area) may be provided to the user ranked first in the shake ranking or to the artist supported by that user, an advertising space 110 with a middle size (medium area) may be provided to the user ranked second in the shake ranking or to the artist supported by that user, and an advertising space 110 with a small size (small area) may be provided to the user ranked third in the shake ranking or to the artist supported by that user.

Alternatively, an advertising space 110 that can be displayed for a long length of time may be provided to the user ranked first in the shake ranking or to the artist supported by that user, an advertising space 110 that can be displayed for a medium length of time may be provided to the user ranked second in the shake ranking or to the artist supported by that user, and an advertising space 110 that can be displayed for a short length of time may be provided to the user ranked third in the shake ranking or to the artist supported by that user.

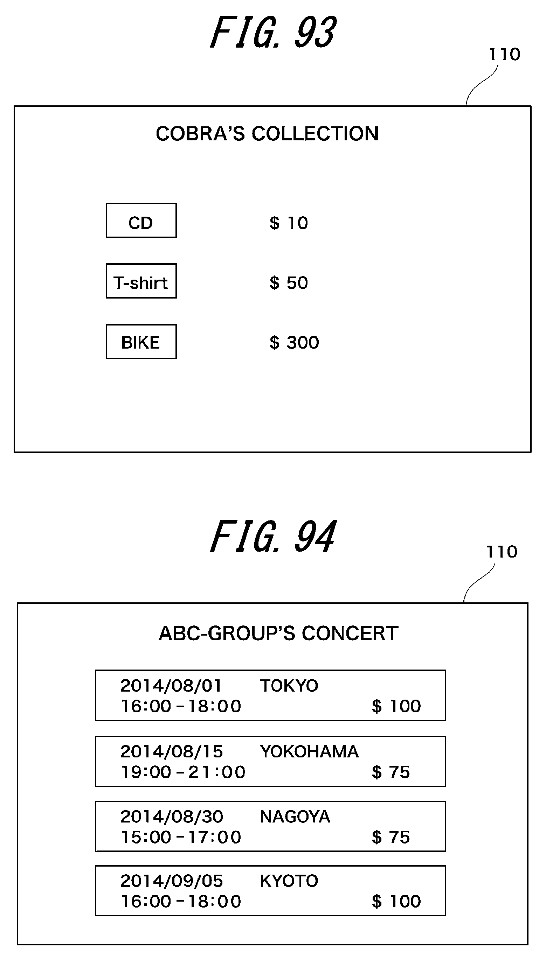

Self-promotional information, text data, photographic data, image data, or the like may be input or inserted into the advertising space 110. As one example, FIG. 93 illustrates the case of the advertising space 110 being used to advertise merchandise or the like that the user wishes to sell.

Alternatively, information, text data, photographic data, image data, or the like for advertising a particular company (for example, a supporting company) or association, a supported artist, or the like may be input or inserted into the advertising space 110. As one example, FIG. 94 illustrates the case of the advertising space 110 being used to advertise live events and the like of a particular artist.

Here, the information may be input to the advertising space 110 for example by providing an advertisement information reflector 18a29 in the controller 18a, as illustrated in FIG. 89, and inputting or inserting the advertisement information into the advertising space 110 with the advertisement information reflector 18a29. In greater detail, the user or artist inputs predetermined information to the terminal 14A or 14B with input means such as a touchscreen, input keys, or the like, and the input information is reflected in the advertising space 110 by the advertisement information reflector 18a29.

For example it may be possible to use the management screen 17 of the user or artist as the screen that can be displayed by the advertising space 110. Alternatively, at least a portion of a public space or an area or screen for displaying news and topical information provided to be displayable within the application may be used.

With Example 8, a predetermined advertising space 110 in a predetermined screen is provided to the top-ranked person(s) in the shake ranking or to related parties. Advertising information can be input into the advertising space 110. For example, self-promotional information may be input, or information advertising a supported artist may be input. The advertising space 110 is displayed on a screen visually confirmable by all of the users and artists using the applications 20A and 20B. As a result, the effect of advertising oneself or a particular artist is increased, allowing strong support for business transactions and artistic activity.

In particular, as a reward for the physical energy consumed for example by shaking the terminal 14A or 14B at a live event, an advertising space 110 that has an advertising effect is provided. Therefore, live events become more and more active, and artists can be provided with strong support.

Here, advertisement information for a particular supporting company may be input and displayed in the advertising space 110. In this case, a predetermined advertising fee can be collected from the supporting company, thus establishing a business model.

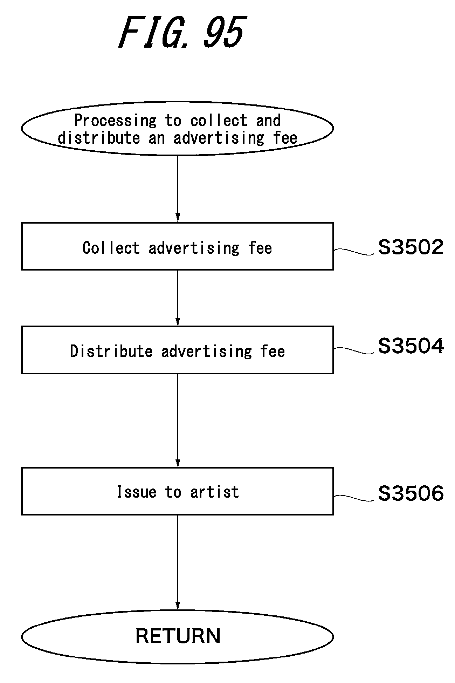

FIG. 95 is a flowchart illustrating an example of processing to collect and distribute an advertising fee in Example 8. As illustrated in FIG. 95, a predetermined advertising fee is collected from a supporting company (S3502). The advertising fee is determined in advance based on factors such as the extent of the area of the advertising space 110 and the time length of provision of the advertising space 110. The advertising fee collected from the supporting company or the like is distributed according to a predetermined agreement, mathematical formula, or the like (S3504). At least a portion of the advertising fee is issued to the artists supported by the top-ranked person(s) in the shake ranking (S3506).

According to this business model, at least a portion of the advertising fee can be issued to artists as a reward, thereby providing strong fiscal support for musical activities by artists. Hence, artists can dedicate themselves to musical activities. A contribution can thus be made to further developing the music industry and the entertainment industry.

### [Example 9]

Next, Example 9 of a content delivery system and method of delivering content according to one of the disclosed embodiments is described with reference to the drawings. Structural elements that overlap with the structure of the content delivery system and method of delivering content according to the above Embodiments and Examples are labeled with the same reference signs, and a description thereof is omitted.

Users have more opportunity to listen to music while exercising, and in such circumstances, Example 9 responds to the need to increase exercise efficiency by matching the tempo and/or pitch of a piece of music to the user's current exercise intensity. The tempo and/or pitch of a piece of music is also controlled for attainment of the user's ideal exercise intensity.

Example 9 has the function of matching the tempo and/or pitch of music output from the terminal to the user's current exercise intensity. This function for example is added on as a function of an application and may be downloaded from the server for content delivery 18 onto the terminals 14A and 14B as the application 20A.

The tempo of music refers to the length of a beat, i.e. to the speed of the pulse.

While the following describes an example of controlling the tempo of music, both the tempo and the pitch of music or the pitch alone may be controlled similarly.

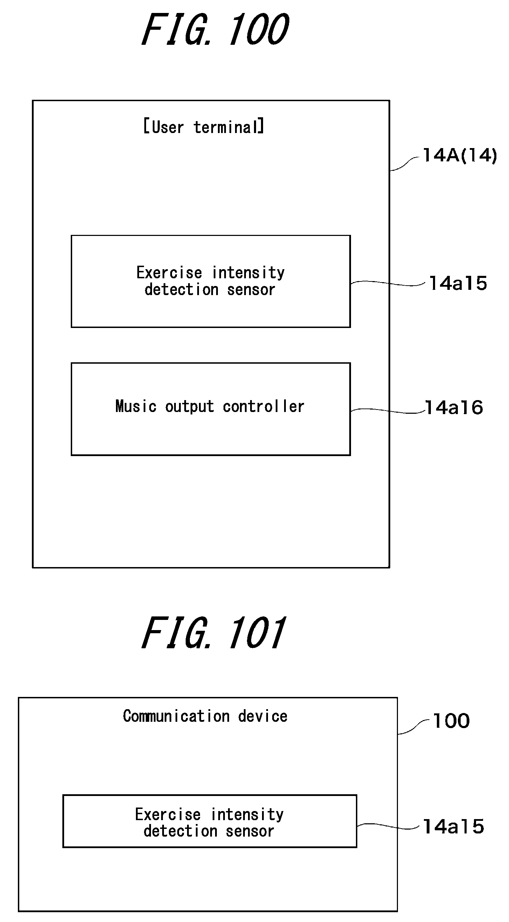

As illustrated in FIG. 100, for example using an exercise intensity detection sensor 14a15 mounted in the user terminal 14A or the artist terminal 14B, the current exercise intensity of the user or the artist is estimated, and the tempo and/or pitch of music output from the terminals 14A and 14B is controlled so as to correspond to the exercise intensity. While the following displays an example of adjusting the tempo of music in the user terminal 14A, both the tempo and the pitch of music or the pitch alone may be controlled.

As illustrated in FIG. 101, the exercise intensity detection sensor 14a15 may be housed inside the communication device 100, which can communicate wirelessly with the terminal 14A. The communication device 100 is as described in Example 6. For example, the band 102 described in Illustrative Case 1 of Example 6 may be used. In a structure in which the exercise intensity detection sensor 14a15 is housed inside the communication device 100, an exercise intensity detection signal generated by the exercise intensity detection sensor 14a15 is output from the communication device 100 to the terminal 14A.

The "current exercise intensity of the user or the artist" refers to the intensity of the load on the user or artist's body due to present action. For example, this refers to the running or jogging speed, the walking speed, or the like.

### (Structure of Terminal)

As illustrated in FIG. 100, the user terminal 14A for example includes the exercise intensity detection sensor 14a15 and a music output controller 14a16.

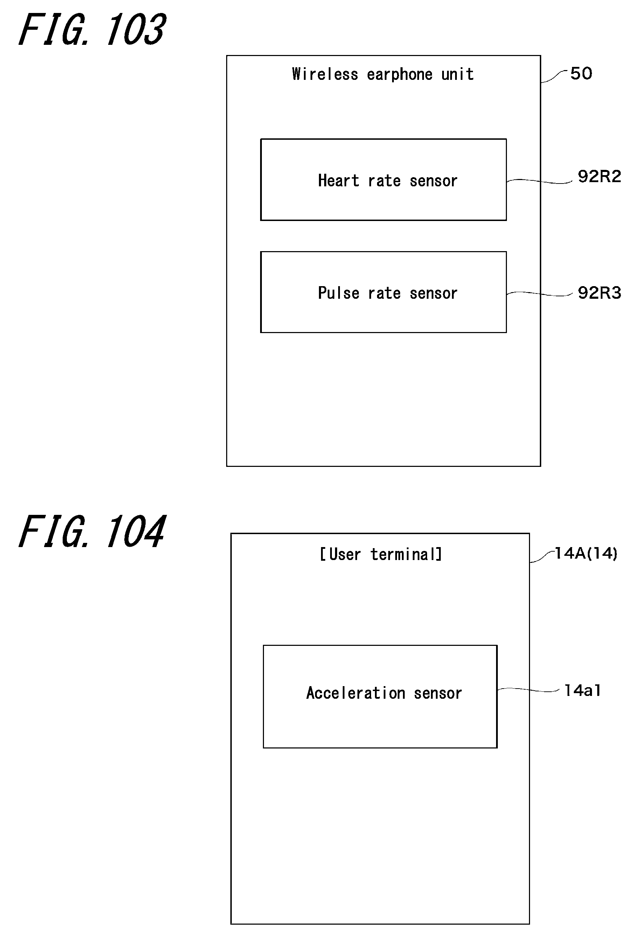

The exercise intensity detection sensor 14a15 may be able to use a sensor housed in the terminal 14A in advance. As illustrated in FIG. 104, for example an acceleration sensor 14a1 is housed in the terminal 14A, and the acceleration sensor 14a1 may be used as the exercise intensity detection sensor 14a15. In this way, during the user's many opportunities to carry the terminal 14A and exercise, the user's current exercise intensity can be detected easily.

For example when the user holds and shakes the user terminal 14A or wears the user terminal 14A and exercises, the acceleration sensor 14a1 detects vibration based on factors such as a change in acceleration occurring in the terminal 14A. The principle of detection by the acceleration sensor 14a1 is based on a known principle, and therefore a description thereof is omitted. Instead of the acceleration sensor 14a1, a vibration sensor (not illustrated) may be provided. The vibration sensor detects vibration occurring in the terminal 14A.

The acceleration sensor 14a1 generates an acceleration detection signal as the exercise intensity detection signal. The acceleration detection signal is a signal indicating the magnitude of acceleration or the change per unit time in acceleration. The vibration sensor generates a vibration detection signal as the exercise intensity detection signal. The vibration detection signal is a signal indicating the number of vibrations or the change per unit time. These exercise intensity detection signals are used to control the tempo of music in the music output controller 14a16.

Furthermore, a structure may be adopted in which the exercise intensity detection sensor 14a15 is provided in the communication device 100 instead of the terminal 14A. The structure of the communication device 100 is as described above. Besides the acceleration sensor 14a1, a heart rate sensor 92R2 or a pulse rate sensor 92R3 may be provided in the communication device 100 as the exercise intensity detection sensor 14a15.

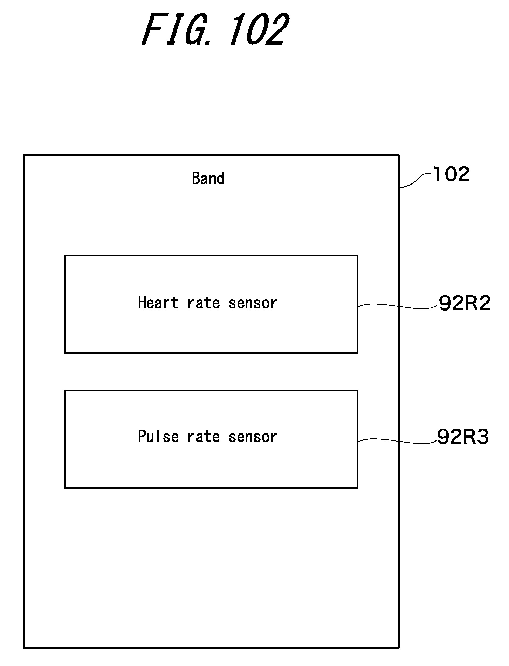

As the communication device 100, the band 102 illustrated in FIG. 69 and FIG. 102 may be used, or the wireless earphone unit 50 illustrated in FIG. 47 and FIG. 103 may be used.

The heart rate sensor 92R2 is a sensor for measuring the user's heart rate by contacting the skin or the like when inserted in the user's ear hole. The user's heart rate and changes thereto can be detected. The heart rate sensor 92R2 generates a heart rate detection signal as the exercise intensity detection signal. The heart rate detection signal is a signal indicating the heart rate or the change per unit time in the heart rate.

The pulse rate sensor 92R3 is a sensor for measuring the user's pulse rate by contacting the skin or the like when inserted in the user's ear hole. The user's pulse rate and changes thereto can be detected. The pulse rate sensor 92R3 generates a pulse rate detection signal as the pulse rate detection signal. The pulse rate detection signal is a signal indicating the pulse rate or the change per unit time in the pulse rate.

In this structure, the heart rate detection signal detected by the heart rate sensor 92R2 or the pulse rate detection signal detected by the pulse rate sensor 92R3 may be used as the exercise intensity detection signal. By outputting these exercise intensity detection signals to the terminal 14A, the terminal 14A estimates the user's exercise intensity.

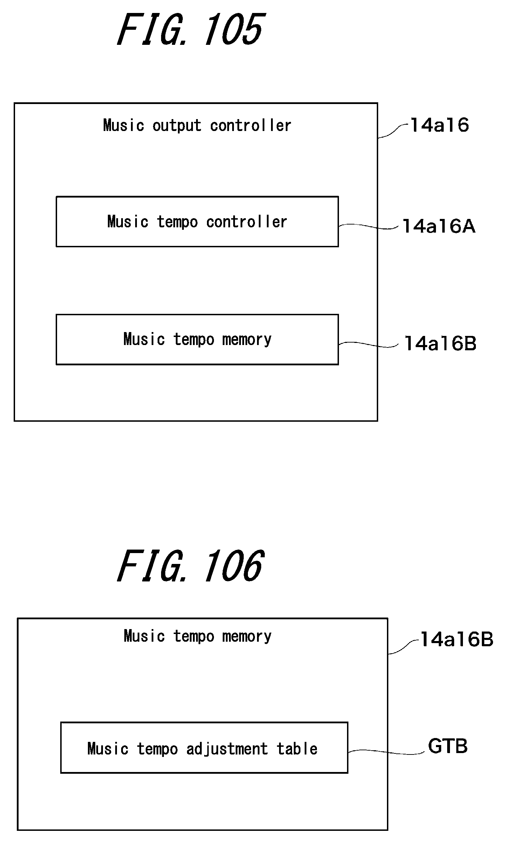

As illustrated in FIG. 2, the functions of the music output controller 14a16 are incorporated into a program as one of the functions of the application 20A downloaded from the server for content delivery 18 to the terminal 14A. As illustrated in FIG. 105, the music output controller 14a16 for example includes a music tempo controller 14a16A and a music tempo memory 14a16B.

As illustrated in FIG. 106, a music tempo adjustment table GTB indicating the correspondence relationship between the exercise intensity detection signal detected by the exercise intensity detection sensor 14a15, the intensity of exercise, and the tempo of music is stored in the music tempo memory 14a16B. The music tempo adjustment table GTB serves as the basis for determining the tempo of music in correspondence with the user's physical exercise intensity.

As an example of the correspondence relationship between the exercise intensity detection signal and the intensity of exercise as prescribed by the music tempo adjustment table GTB, for example a high exercise intensity is associated with a large acceleration or with a high heart rate or pulse rate, whereas a low exercise intensity is associated with a small acceleration or with a low heart rate or pulse rate.

As an example of the correspondence relationship between the intensity of exercise and the tempo of music as prescribed by the music tempo adjustment table GTB, for example when the exercise intensity is estimated to be high, a fast tempo in which each beat is short may be associated, whereas when the exercise intensity is estimated to be low, a slow tempo in which each beat is long may be associated.

The music tempo controller 14a16A controls output of music by causing the tempo of music, which is content, to correspond to the user's exercise intensity. Specifically, the music tempo controller 14a16A outputs music at a tempo corresponding to the user's current exercise intensity.

The music tempo controller 14a16A for example may use a program or software for changing the tempo of music. Such a program or software is included in the program or software of the application 20A downloaded onto the terminal. The function of an effects unit or effects pedal may also be used as the music tempo controller 14a16A.

In this way, the tempo of music delivered from the server for content delivery 18 is controlled by the music tempo controller 14a16A, and music with a tempo corresponding to the user's exercise intensity is output from the terminal 14A. As a result, the user can listen to music with a tempo corresponding to the current exercise intensity, and the brain's wavelength resulting from music appreciation can be matched to the current exercise intensity or physical condition, increasing exercise efficiency.

Next, processing for music output control to control the tempo of music is described.

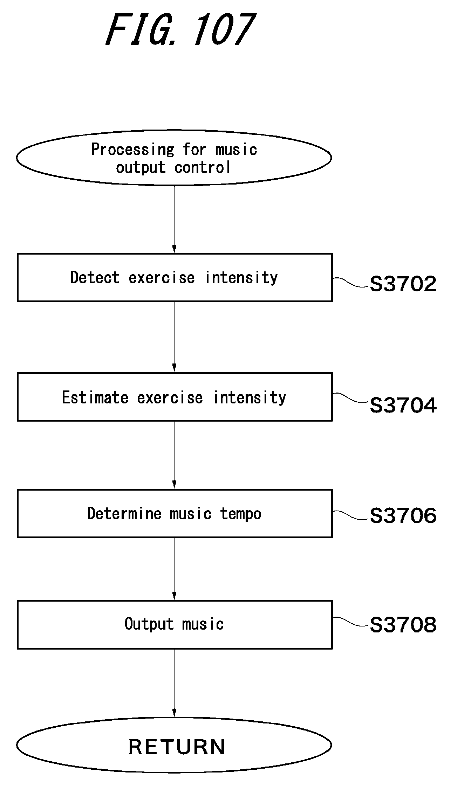

As illustrated in FIG. 107, the user's current exercise intensity is detected by the exercise intensity detection sensor 14a15 (S3702). Specifically, in S3702, when the user is running or jogging while carrying the terminal 14A, the acceleration sensor 14a1 housed in the terminal 14A detects the change in acceleration. Alternatively, the heart rate sensor 92R2 or pulse rate sensor 92R3 housed in the band 102 or the wireless earphone unit 50 that the user is wearing detects the heart rate or pulse rate.

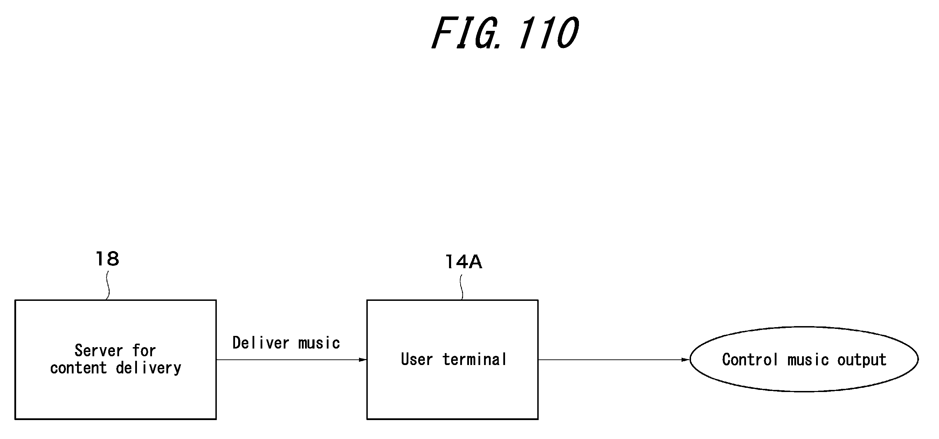

As illustrated in FIG. 110, in a structure in which the exercise intensity detection sensor 14a15 is housed in the terminal 14A, by the user carrying the terminal 14A and doing exercise, the exercise intensity is detected by the music output controller 14a16 based on the exercise intensity detection signal generated in the exercise intensity detection sensor 14a15.

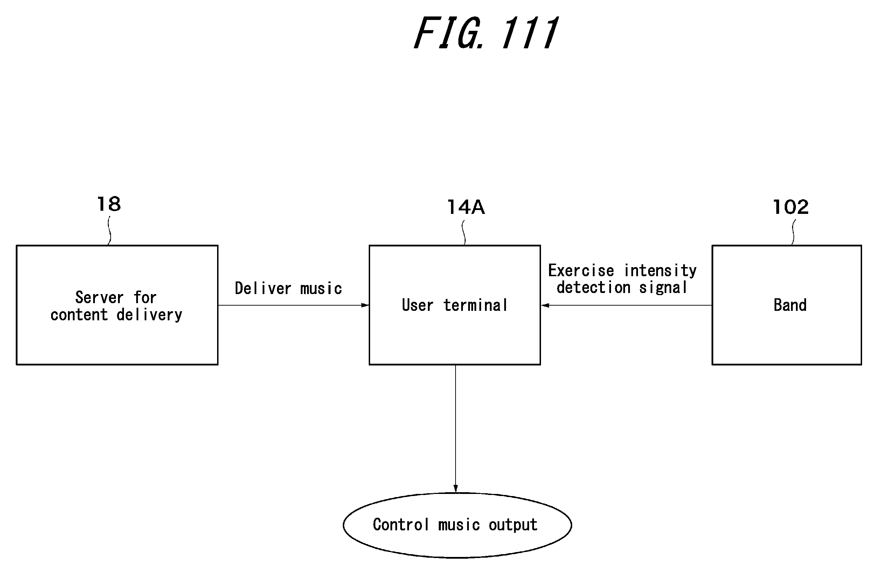

As illustrated in FIG. 111, in a structure in which the exercise intensity detection sensor 14a15 is housed in the band 102 or the wireless earphone unit 50, the exercise intensity detection signal generated in the exercise intensity detection sensor 14a15 is output for example wirelessly to the terminal 14A from the band 102 or the wireless earphone unit 50, and the exercise intensity is detected by the music output controller 14a16 based on the exercise intensity detection signal.

Next, the result of detection of the exercise intensity by the exercise intensity detection sensor 14a15 is output to the music output controller 14a16 in the terminal 14A as the exercise intensity detection signal, and based on the exercise intensity detection signal, the user's current exercise intensity is estimated by the music output controller 14a16 (S3704). Specifically, the user's current exercise intensity is estimated by the music output controller 14a16 inserting the value of the exercise intensity detection signal into the music tempo adjustment table GTB stored in the music tempo memory 14a16B.

Next, the music output controller 14a16 determines the tempo of music corresponding to the exercise intensity (S3706). Specifically, the tempo of music is determined by inserting the value of the exercise intensity into the music tempo adjustment table GTB stored in the music tempo memory 14a16B.

Next, the music output controller 14a16 outputs music at the tempo corresponding to the user's current exercise intensity (S3708). Music that has a positive effect on the user's brain during exercise can thus be provided, further improving exercise efficiency.

The following describes a usage example for Example 9.

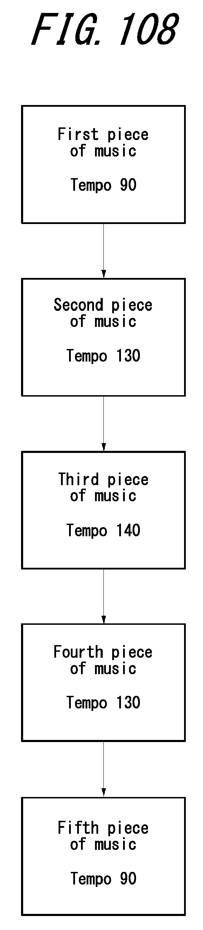

As illustrated in FIG. 108, using an example in which five pieces of music are output consecutively, the first output piece of music is controlled to be at tempo 90, the second output piece of music is controlled to be at tempo 130, the third output piece of music is controlled to be at tempo 140, the fourth output piece of music is controlled to be at tempo 130, and the fifth output piece of music is controlled to be at tempo 90. The tempo of these pieces of music corresponds to the user's exercise intensity. By storing the tempo of these pieces of music in a non-illustrated memory of the terminal 14A or in the memory 18b of the server for content delivery 18 (see FIG. 4), music at the same tempo can be output during the next exercise session as well. As a result, music at a tempo matching the target exercise intensity can always be output.

By thus storing the order of pieces of music and the tempo of the pieces of music in advance, the user's exercise pace can be saved, and music at a tempo based on a certain exercise pace can always be output. Also, by storing the order of pieces of music and the tempo of the pieces of music on the server for content delivery 18 side, music can be replayed at the previous tempo after the next streaming. By storing the order of pieces of music and the tempo of the pieces of music on the terminal 14A side, the music delivered from the server for content delivery 18 to the terminal 14A can be replayed at a speed matching the user's own exercise pace.

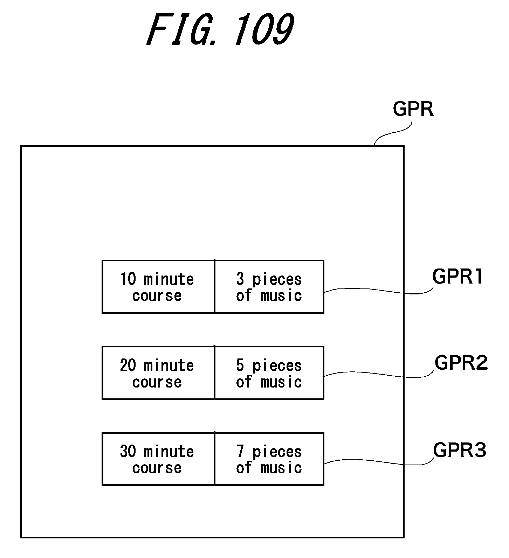

As illustrated in FIG. 109, a music program GPR of music for which the tempo is determined in advance can be selected in correspondence with the user's exercise intensity. For example, as music programs GPR, a program GPR1 that is a 10 minute course combining three pieces of music at the best tempo for the user, a program GPR2 that is a 20 minute course combining five pieces of music at the best tempo for the user, and a program GPR3 that is a 30 minute course combining seven pieces of music at the best tempo for the user are displayed on a liquid crystal display or the like of the terminal 14A, and a predetermined program may be selected. As a result, the tempo of music is determined based on the music program selected by the user, and music at that tempo is output from the terminal 14A.

Here, a structure may be adopted so that the tempo of music is not only matched to the user's current exercise intensity, but also so that the music output controller 14a16 automatically changes the tempo of music to achieve a more ideal exercise intensity. Alternatively, a structure may be adopted for the music output controller 14a16 to change the tempo of music upon receiving a request from the user.

The music output controller 14a16 may control output of music so that for each output piece of music, the tempo is raised above the user's exercise intensity or the tempo is lowered below the user's exercise intensity. The music output controller 14a16 may also control output of music so that during output of one piece of music, the tempo is raised above the user's exercise intensity or the tempo is lowered below the user's exercise intensity.

The music output controller 14a16 can also change the tempo of music upon receiving an instruction related to music tempo from the user. For example, when the user selects a top athlete course from the terminal 14A, the music output controller 14a16 receives the course selection signal and controls output of music to achieve a faster tempo than the user's regular exercise intensity. At this time, in a structure in which a plurality of pieces of music are output continuously, the tempo is changed between each piece of music or partway through one piece of music.

For example, when the user selects a health promotion course from the terminal 14A, the music output controller 14a16 receives the course selection signal and controls output of music to achieve a slower tempo than the user's regular exercise intensity. At this time, in a structure in which a plurality of pieces of music are output continuously, the tempo is changed between each piece of music or partway through one piece of music.

Furthermore, for example the value of the exercise intensity detection signal detected by the exercise intensity detection sensor 14a15 housed in the terminal 14A may be added to the count of the shake counter 14a2 in the terminal 14A adopted in Example 4. For example, a count based on the exercise intensity detection signal of the exercise intensity detection sensor 14a15 is added to the count of the shake counter 14a2. In this way, the amount of energy based on the exercise intensity detection signal of the exercise intensity detection sensor 14a15 in the terminal 14A can be added, allowing fans to compete over the total calorie amount covering all support activities.

For example, the value of the exercise intensity detection signal detected by the exercise intensity detection sensor 14a15 housed in the communication device 100 may be converted to points as an amount of energy. In this case, a point table prescribing the relationship between the amount of energy and the number of points may be stored on the terminal side or the server for content delivery side, and the number of points may be determined based on this point table.

Furthermore, for example the points resulting from conversion based on the amount of energy may be converted into a monetary amount. In this case, a monetary amount table prescribing the relationship between the number of points and the monetary amount may be stored on the terminal side or the server for content delivery side, and the monetary amount may be determined based on this monetary amount table. The monetary amount converted from the number of points may be used as a discount when purchasing merchandise or the like with the terminal 14A via the server for content delivery 18. This monetary amount may also be used as a discount coupon when purchasing merchandise or the like in a store, such as a convenience store or department store.

### REFERENCE SIGNS LIST

- 10: Content delivery system
- 12: Communication line
- 14A: User terminal (terminal)
- 14B: Artist terminal (terminal)
- 16: Server for charge management (charge manager)
- 18: Server for content delivery
- 20A: Application
- 20B: Application
- 22: Cache

## Claims

1. A content delivery system for delivering predetermined content from a content delivery environment to a terminal, wherein
the content delivery environment comprises a memory storing predetermined content and a controller controlling the content delivery environment;
the memory comprises
a first memory area storing member information for which charge processing is complete;
a second memory area storing the content; and
a third memory area storing an application allowing playback of the content on the terminal; and
the controller comprises
an identicalness determiner configured to determine, when predetermined information is input from the terminal, whether the information is identical to the member information;
a content deliverer configured to receive a request via the application of the terminal and deliver the content to the terminal when the identicalness determiner determines the information to be identical;
an elapsed time determiner configured to determine elapsed time of the content stored in the second memory area;
a time information provider configured to provide the content with predetermined information suggesting a time in a case that the elapsed time determiner determines that the content was stored in the second memory area within a predetermined time; and
a time information eraser configured to erase the predetermined information when the elapsed time determiner determines that a predetermined time has elapsed since the content to which the predetermined information was provided was stored in the second memory area.

2. The content delivery system of claim 1, wherein the controller further comprises
a content evaluator configured to receive a request via the application of the terminal and evaluate the content; and
an evaluation information provider configured to provide predetermined information suggesting an evaluation that reflects a result of evaluation by the content evaluator.

3. The content delivery system of claim 2, wherein
the memory further comprises a fourth memory area storing information related to merchandise or service for sale;
the controller further comprises a merchandise and other information output interface configured to output information related to the merchandise or service to the terminal; and
the merchandise and other information output interface outputs the information related to the merchandise or service to the terminal upon receiving, via the application of the terminal, an instruction to output the information related to the merchandise or service.

4. The content delivery system of claim 3, wherein
the controller further comprises a price calculation output interface configured to calculate price information related to the merchandise or service; and
upon receiving, via the application of the terminal, a purchase instruction for a certain merchandise or service that is to be purchased from among the merchandise or service, the price calculation output interface calculates price information related to the merchandise or service for which the purchase instruction was received and outputs a result of calculation to the terminal.
